# EUROPEAN PATENT SPECIFICATION

(11) **EP 3 666 853 B1**
(45) Date of publication and mention of the grant of the patent: **16.06.2021**
(21) Application number: 19214025.9
(22) Date of filing: 06.12.2019
(51) Int. Cl.: C09K 19/34, C09K 19/30, C09K 19/06, C09K 19/12, C09K 19/04

(54) **LIQUID-CRYSTAL MEDIUM**
FLÜSSIGKRISTALLMEDIUM
SUPPORT À CRISTAUX LIQUIDES

(30) Priority: 10.12.2018 EP 18211358
(43) Date of publication of application: 17.06.2020
(73) Proprietor: Merck Patent GmbH, 64293 Darmstadt (DE)
(72) Inventor: Laut, Sven Christian, 64331 WEITERSTADT (DE); Windhorst, Martina, 64839 MUENSTER (DE); Maag, Sabrina, 64319 PFUNGSTADT (DE)

(56) References cited:
- EP-A1- 2 937 342
- EP-A1- 3 228 681
- WO-A1-2018/091489

## Description

The present invention relates to liquid-crystalline (LC) media having positive dielectric anisotropy and to liquid-crystal displays (LCDs) containing these media, especially to displays addressed by an active matrix and in particular to LC displays of the TN, PS-TN, STN, TN-TFT, OCB, IPS, PS-IPS, FFS, HB-FFS PS-HB-FFS, SA-HB-FFS, polymer stabilised SA-HB-FFS, positive VA or positive PS-VA type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is generated substantially perpendicular to the substrates and the liquid-crystal layer.

Besides these modes, there are also electro-optical modes that utilise an electric field which is substantially parallel to the substrates or the liquid-crystal layer. For example, WO 91/10936 discloses a liquid-crystal display in which the electric signals are generated in such a way that the electric fields have a significant component parallel to the liquid-crystal layer, and which has since then become known as in-plane switching IPS) display. The principles of operating such a display are descried, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the so-called HB-FFS mode. One of the unique features of the HB-FFS mode in contrast to the traditional FFS technology is that it enables higher transmittance which allows operation of the panel with less energy consumption.

Liquid-crystal compositions which are suitable for LCDs and especially for FFS and IPS displays are known in prior art, for example, from EP 3 228 681, WO 2018/091489, JP 07-181 439 (A), EP 0 667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times.

The invention has the object of providing liquid-crystalline media, in particular for FFS and IPS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness.

This was achieved by providing liquid-crystalline media as described and claimed hereinafter.

It was observed that a high brightness in displays like those of the HB-FFS mode can be achieved by using liquid-crystalline media having positive dielectric anisotropy and also having an increased dielectric constant ε_{⊥} perpendicular to the longitudinal axes of the liquid-crystalline molecules. This can be achieved by adding a limited amount of liquid-crystalline compounds with negative dielectric anisotropy, which have high ε_{⊥} properties, to the liquid-crystalline medium whilst maintaining a positive dielectric anisotropy of the entire medium. However, the addition of compounds with high ε_{⊥} have some drawbacks. For example this can lead to higher values of the rotational viscosity γ₁, and consequently to higher values of the ratio γ₁ /K₂₂ of the rotational viscosity γ₁ and the elastic constant K₂₂ for twist deformation, which leads to higher response times. Since K₂₂ is approximately proportional to the elastic constant K₁₁ for splay deformation (the value of K₂₂ is typically about half the value of K₁₁), this can easily be determined by measuring γ₁ and K₁₁.

Another disadvantage is that the reliability (VHR) of HB-FFS mixtures can be worse compared to conventional FFS mixtures.

It is an object of the present invention to provide improved liquid-crystal media suitable for the use in HB-FFS displays that do not show the disadvantages described above and which in particular have improved reliability while keeping high transmittance compared to media from the prior art.

To solve the problem, the present invention provides a liquid-crystalline medium according to claim 1.

Advantageous embodiments of the invention are subject of the dependent claims and can be taken from the description.

The invention relates to an LC medium comprising one or more compounds of formula I 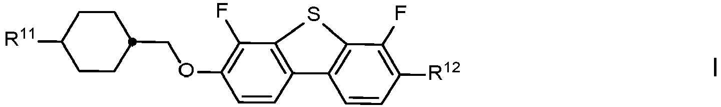 in which
- R¹¹ and R¹²: identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, 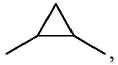 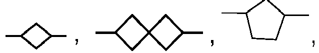 -O-, -CO-O- or -O-CO- in such a way that O atoms are not linked directly to one another, and in which one or more H atoms may be replaced by halogen,
and
one or more compounds selected from the group of compounds of formulae II and III 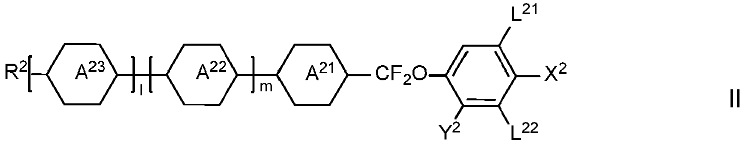 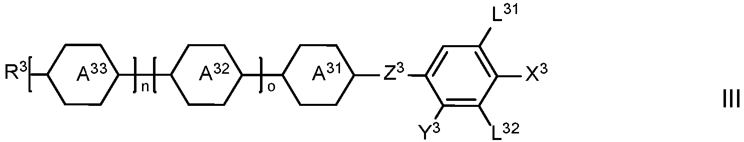 in which
- R² and R³: independently of one another, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, preferably alkyl or alkenyl, 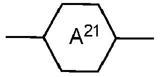 to 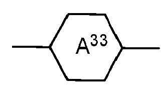 identically or differently, denote 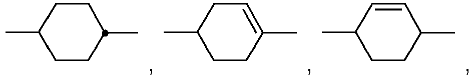 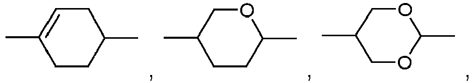 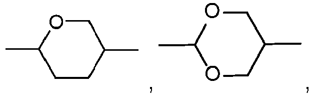 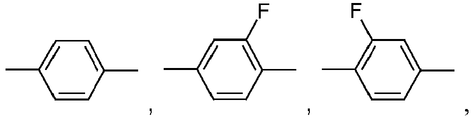 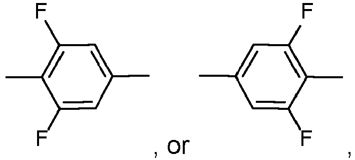 preferably 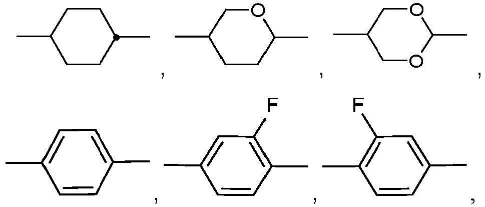 or 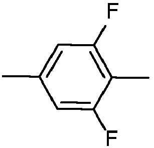
- L²¹, L²², L³¹ and L³²: independently of each other, denote H or F, preferably F,
- Y², Y³: identically or differently, denote H or CH₃,
- X² and X³: independently of each other, denote halogen, halogenated alkyl or alkoxy with 1 to 3 C-atoms or halogenated alkenyl or alkenyloxy with 2 or 3 C-atoms, preferably F, CI, OCF₃ or CF₃, most preferably F, CF₃. or OCF₃,
- Z³: denotes -CH₂CH₂-, -CF₂CF₂-, -COO-, *trans-* -CH=CH-, trans-CF=CF-, -CH₂O- or a single bond, preferably -CH₂CH₂-, -COO-, *trans-* -CH=CH- or a single bond and most preferably -COO-, *trans-* -CH=CH- or a single bond, and
- I, m, n and o: are, independently of each other, 0 or 1, preferably I + m is 2.

Surprisingly, the media according to the invention show an increased value of ε_{⊥} and at the same time enable a decrease of the rotational viscosity and the ratios of γ₁ /K₂₂ and γ₁ /K₁₁, and enable fast response times in displays using liquid-crystalline media as described and claimed herein. Displays that make use of the media according to the invention are further distinguished by a particularly high contrast and very high reliability.

In particular, the combination of compounds of formula I with compounds of formula II and/or III, and additionally with compounds selected from formulae B and/or Y or their subformulae shown below, leads to liquid-crystalline media which show a moderately positive dielectric anisotropy and at the same time an increased dielectric constant ε_{⊥} perpendicular to the longitudinal axes of the liquid-crystalline molecules, while maintaining a low rotational viscosity and a low value of the ratio γ₁ /K₁₁. This enables liquid-crystalline displays, especially of the HB-FFS, FFS and IPS mode, with high brightness and transmission and low response times.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS and IPS displays based on dielectrically positive liquid crystals.

The liquid-crystal media according to the present invention are especially suitable for use in liquid-crystal displays of the FFS, HB-FFS and IPS mode, based on dielectrically positive liquid crystals, and polymer stabilised variants thereof, in particular for large size TV applications.

The invention further relates to the use of a liquid-crystalline medium as described above and below for electro-optical purposes, in particular for the use in liquid-crystal displays, shutter glasses, LC windows, 3D applications, preferably in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays, very preferably in FFS, HB-FFS, IPS, PS-HB-FFS and PS-IPS displays.

The invention further relates to an electro-optical liquid-crystal display containing a liquid-crystalline medium as described above and below, in particular a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display, preferably a FFS, HB-FFS, IPS, PS-HB-FFS or PS-IPS display.

In the present application, all atoms also include their isotopes. In particular, one or more hydrogen atoms (H) may be replaced by deuterium (D), which is particularly preferred in some embodiments; a high degree of deuteration enables or simplifies analytical determination of compounds, in particular in the case of low concentrations.

Herein, an alkyl radical and/or an alkoxy radical is taken to mean straight-chain or branched alkyl. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

Herein, oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

Herein, alkenyl, i.e. an alkyl radical in which one CH₂ group has been replaced by -CH=CH-, may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

Herein, an alkyl or alkenyl radical which is at least monosubstituted by halogen, is preferably straight-chain, and halogen is preferably F or CI. In the case of polysubstitution, halogen is preferably F. The resultant radicals also include perfluorinated radicals. In the case of monosubstitution, the fluorine or chlorine substituent may be in any desired position, but is preferably in the ω-position.

Herein, a mono- or polyfluorinated alkyl or alkoxy radical having 1, 2 or 3 C atoms or a mono- or polyfluorinated alkenyl radical having 2 or 3 C atoms is particularly preferably F, CI, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃, OCH=CF₂ or CH=CF₂, very particularly preferably F or OCF₃, furthermore CF₃, OCF=CF₂, OCHF₂ or OCH=CF₂.

The compounds of the formula I are preferably synthesised as described in DE 102015004271 A1.

The compounds of formula I are preferably selected from the group of compounds of the formulae I-1 to I-10: 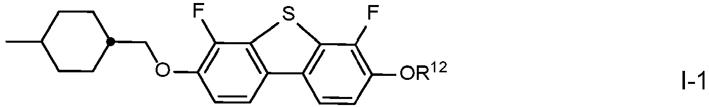 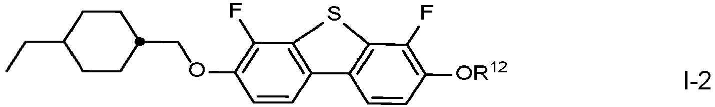 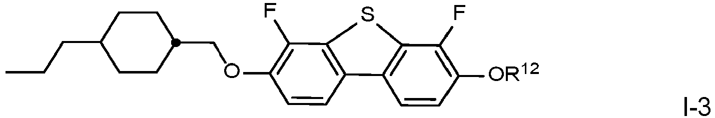 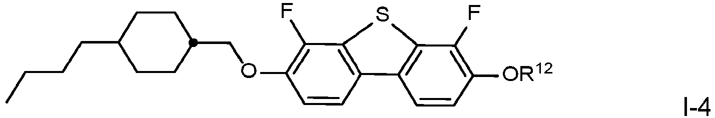 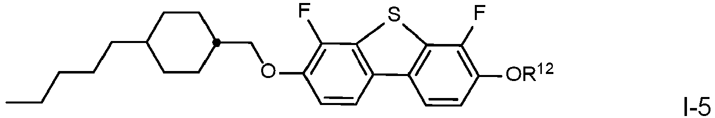 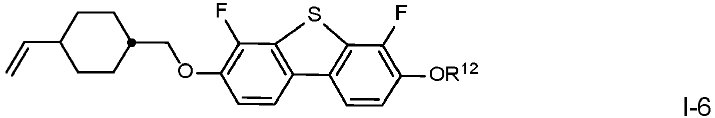 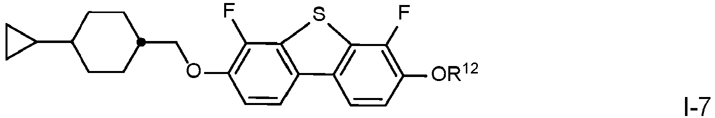 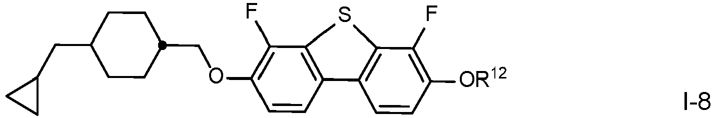 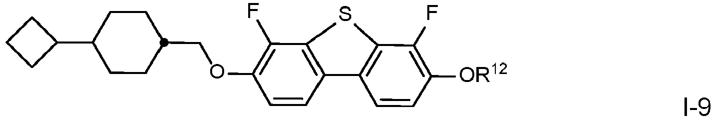 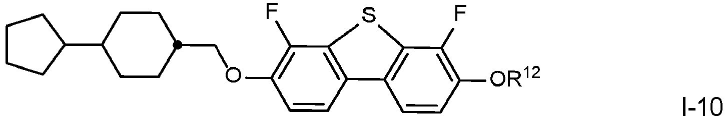 in which R¹² denotes alkyl having 1 to 7 C-atoms, preferably ethyl, n-propyl or n-butyl.

Preferably, the medium comprises one or more compounds of formula II, preferably selected from the group of compounds of formulae II-1 to II-3, very preferably from the group of compounds of formulae II-1 and II-2 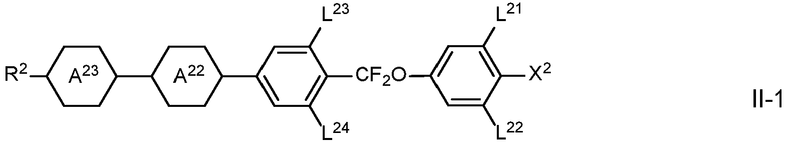 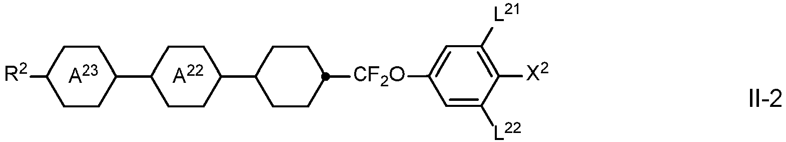 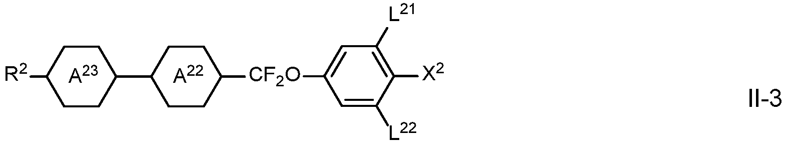 in which the occurring groups have the respective meanings given under formula II above and in formula II-1 the radicals L²³ and L²⁴ denote, independently of each other and of the other parameters, H or F and in formula II-2 preferably 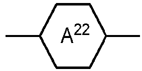 and 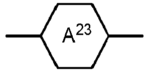 denote, independently of each other,

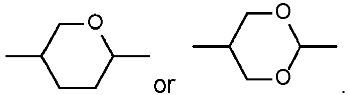

In formulae II-1 to II-3, L²¹ and L²² or L²³ and L²⁴ are preferably both F.

In another preferred embodiment in formulae II-1 and II-2, all of L²¹, L²², L²³ and L²⁴ denote F.

The compounds of formula II-1 are selected from the group of compounds of formulae II-1a to II-1h 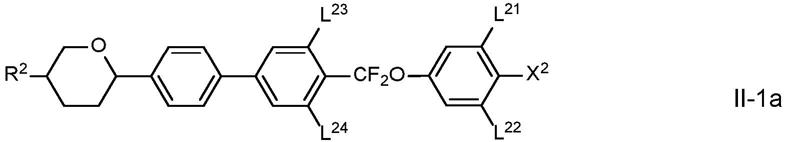 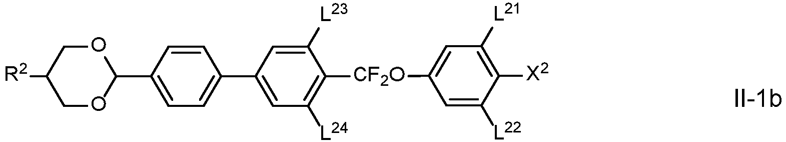 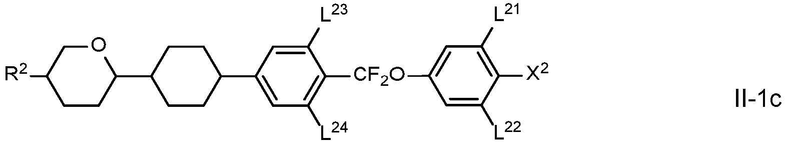 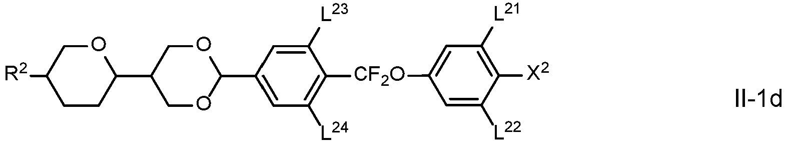 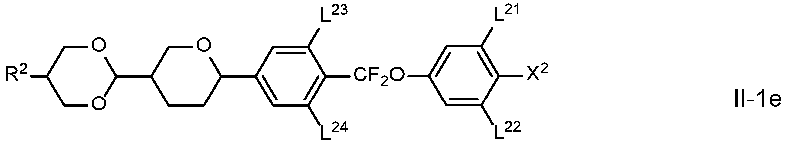 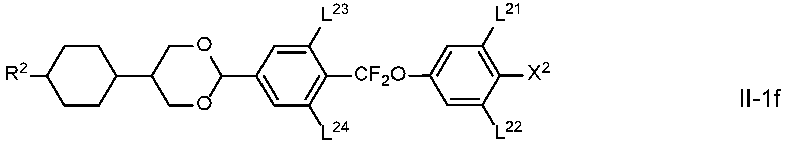 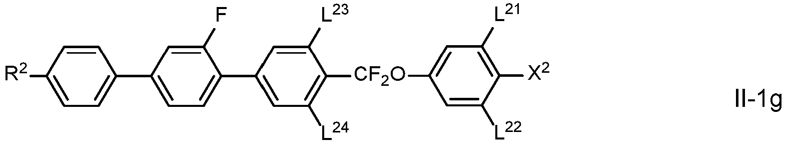 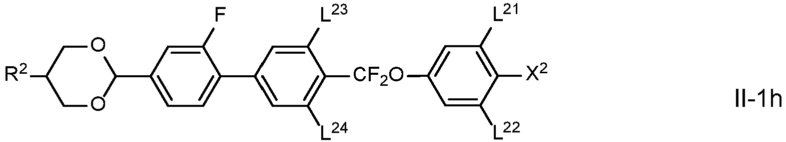 in which the occurring groups have the respective meanings given above.

In a preferred embodiment of the present invention the medium comprises one or more compounds selected from the group of compounds of the formulae II-1a to II-1h wherein L²¹ and L²², and/or L²³ and L²⁴ are both F, respectively.

In another preferred embodiment the medium comprises compounds selected from the group of compounds of formulae II-1a to II-1h, wherein L²¹, L²², L²³ and L²⁴ all are F.

Especially preferred compounds of formula II-1 are 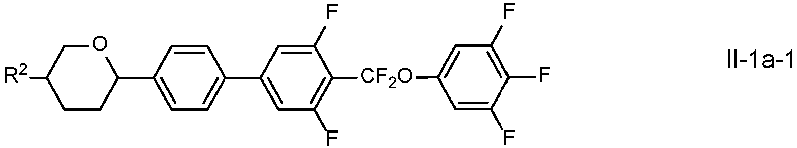 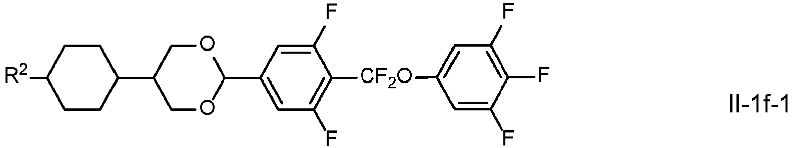 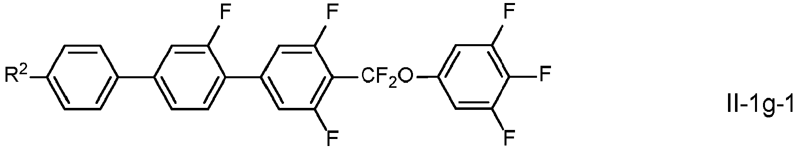 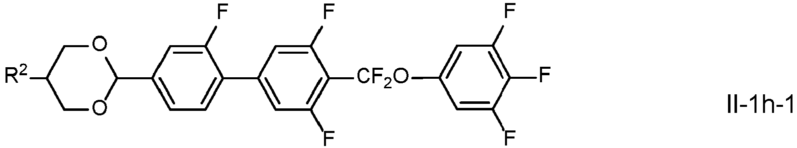 in which R² has the meaning given above.

Preferably the compounds of formula II-2 are selected from the group of compounds of formulae II-2a to II-2c 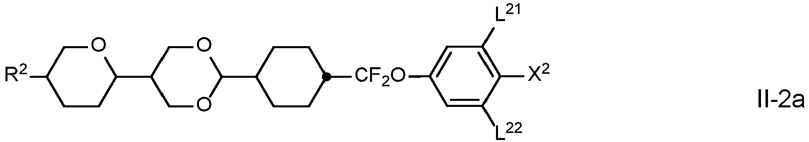 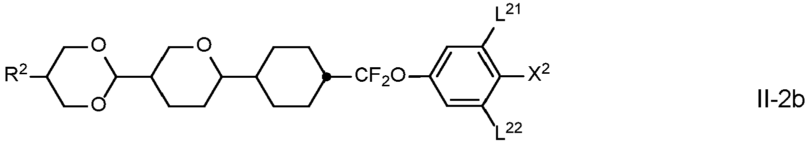 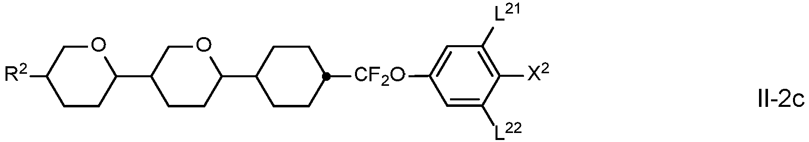 in which the occurring groups have the respective meanings given above and preferably L²¹ and L²² are both F.

Preferably the compounds of formula II-3 are selected from the group of compounds of formulae II-3a to II-3e 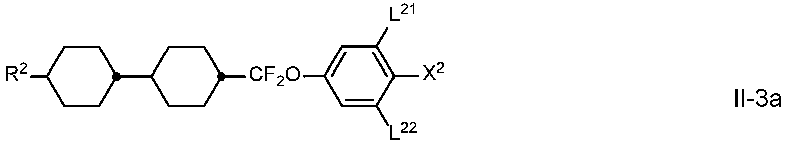 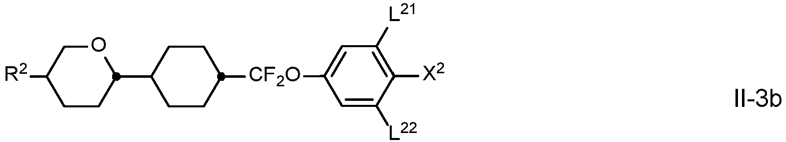 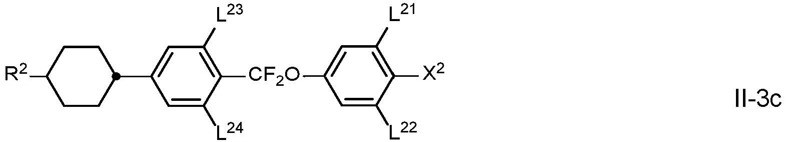 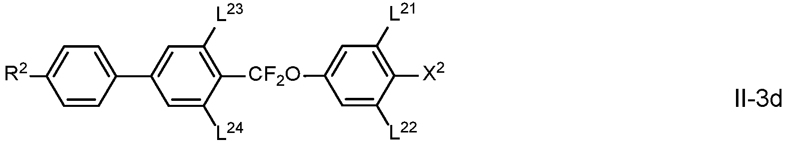 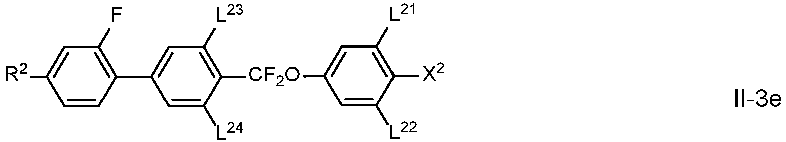 in which the occurring groups have the respective meanings given above and preferably
L²¹ and L²² are both F and L²³ and L²⁴ are both H or
L²¹, L²², L²³ and L²⁴ are all F.

Especially preferred compounds of formula II-3 are 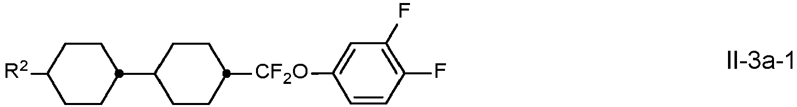 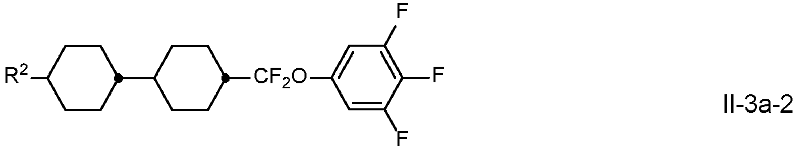 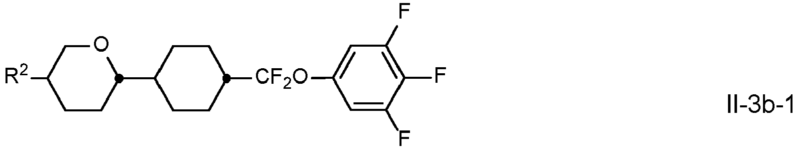 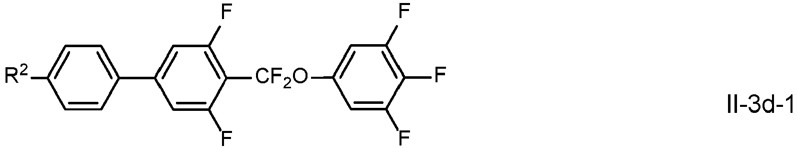 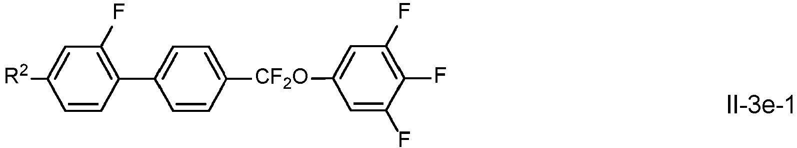 in which R² has the meaning given above.

In another preferred embodiment of the present invention compounds of formula III are selected from the group of formulae III-1 and III-2 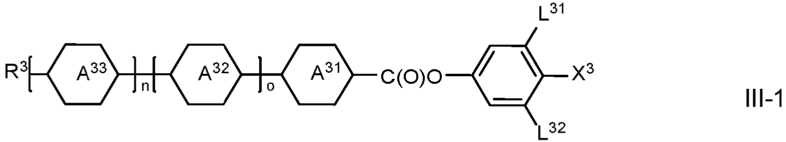 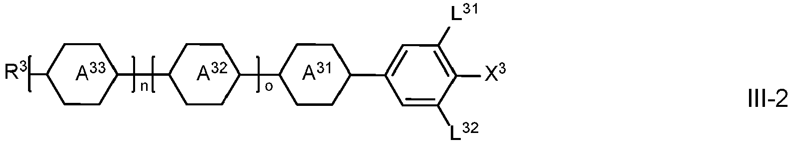 wherein the occurring groups and parameters have the respective meanings given under formula III above.

Preferably the compounds of formula III-1 are selected from the group of compounds of formulae III-1 a and III-1 b 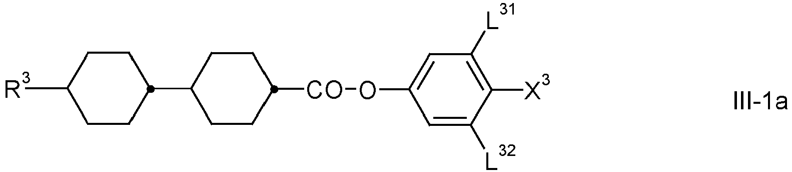 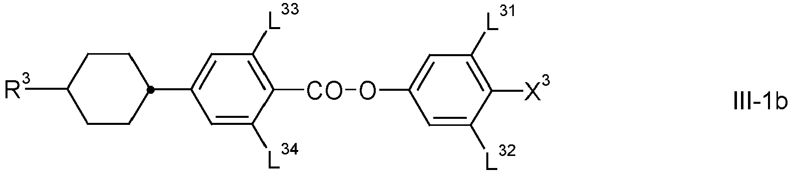 wherein the parameters have the respective meanings given above and the parameters L³³ and L³⁴, independently of each other and of the other parameters, denote H or F.

Preferably the compounds of formula III-2 are selected from the group of compounds of formulae III-2a to III-2l 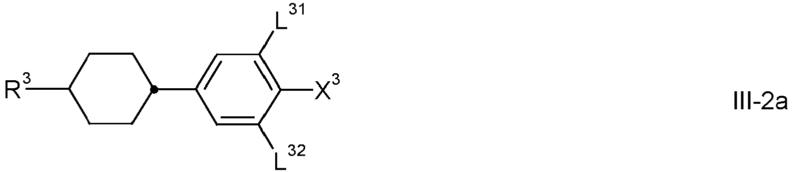 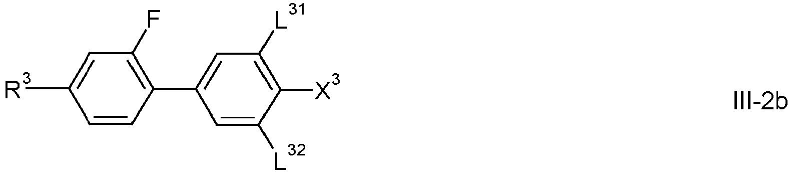 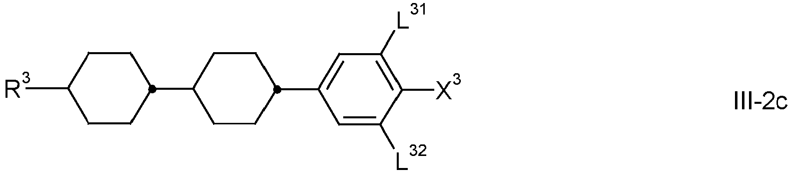 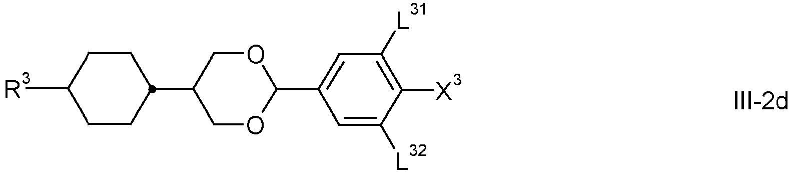 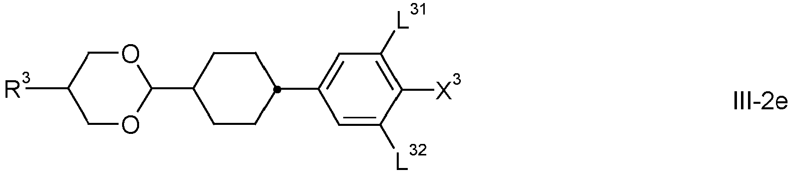 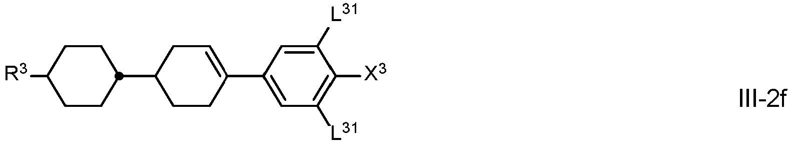 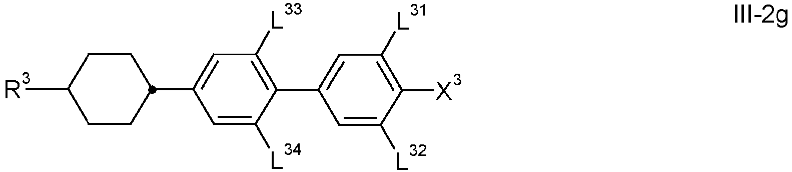 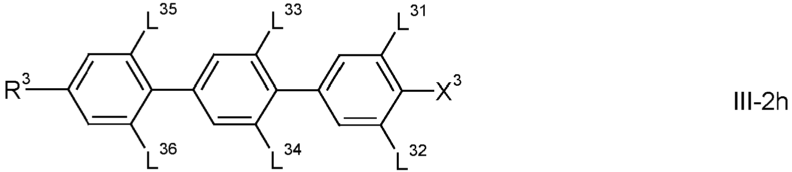 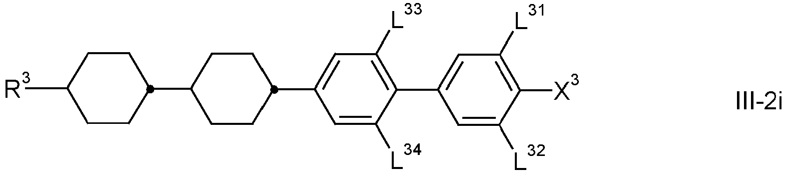 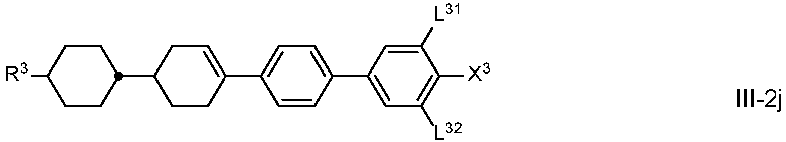 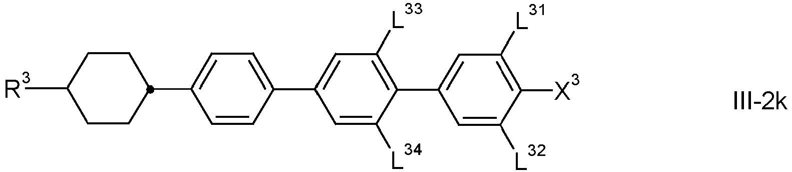 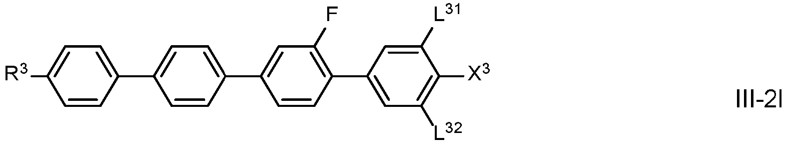 in which parameters have the respective meanings given above and L³⁵ and L³⁶, independently of one another, denote H or F.

### The compounds of formula

III-1a, are preferably selected from the group of compounds of formulae III-1a-1 to III-1 a-6 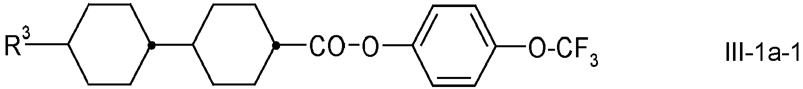 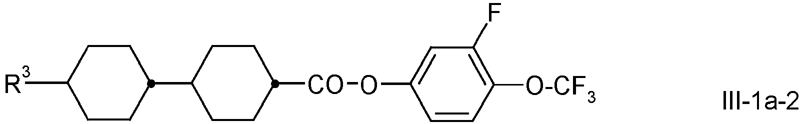 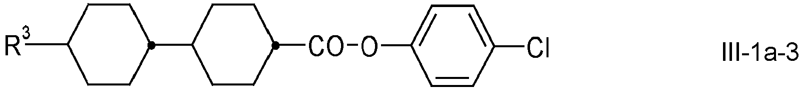 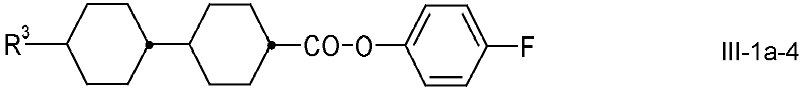 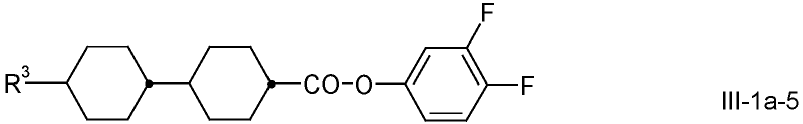 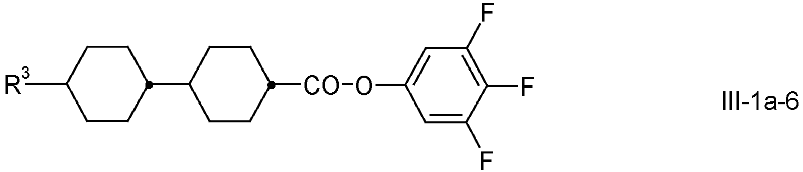 in which R³ has the meaning given above.

In another preferred embodiment the compounds of formula II-2a are selected from the group of compounds of formulae III-2a-1 to III-2a-4 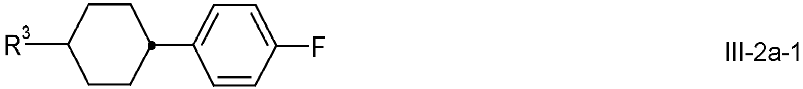 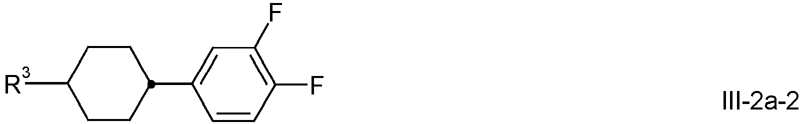 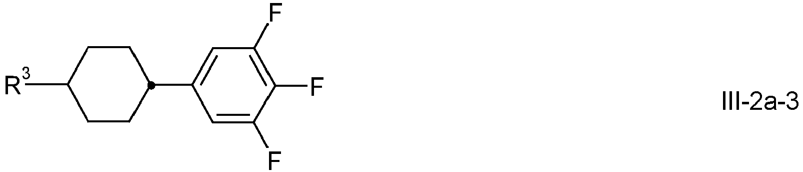 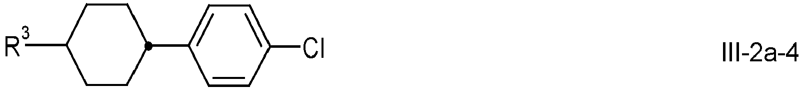 in which R³ has the meaning given above.

The compounds of formula III-2b are preferably selected from the group of compounds of formulae III-2b-1 and III-2b-2, preferably III-2b-2 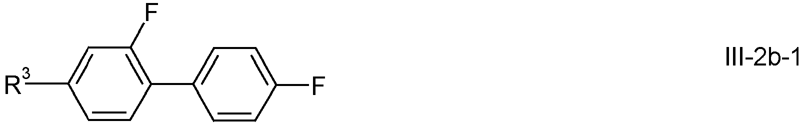 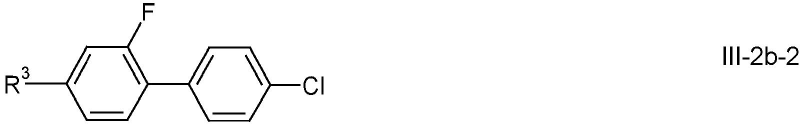 in which R³ has the meaning given above.

The compounds of formula II-2c, are preferably selected from the group of compounds of formulae III-2c-1 to III-2c-5 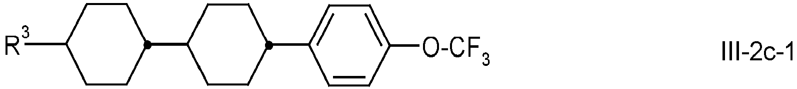 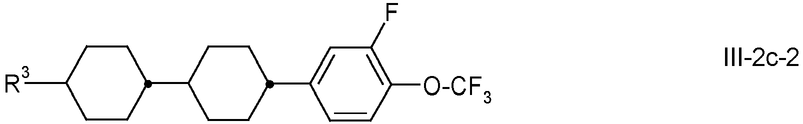 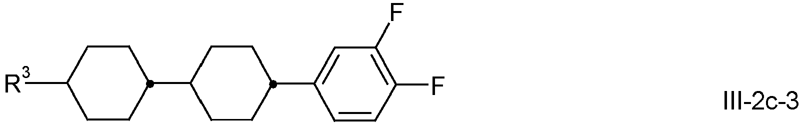 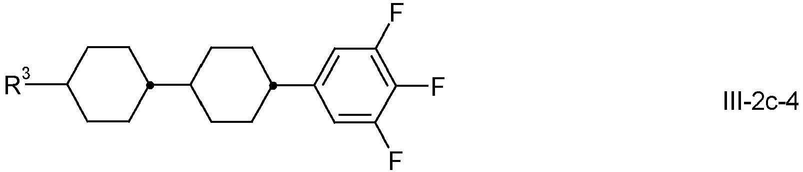 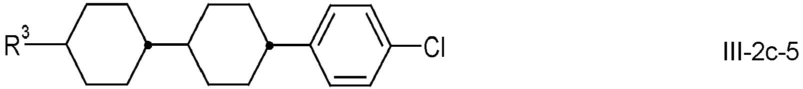 in which R³ has the meaning given above.

The compounds of formulae III-2d and III-2e are preferably selected from the group of compounds of formulae III-2d-1 and III-2e-1 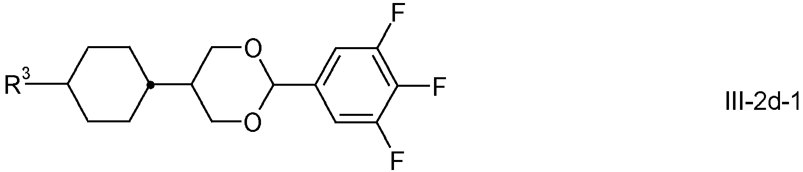 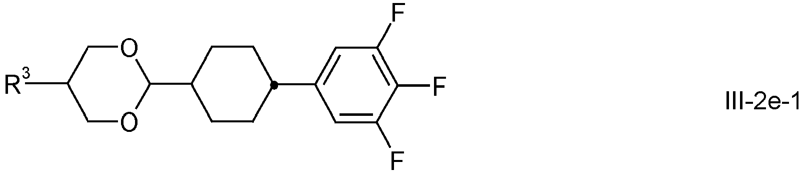 in which R³ has the meaning given above.

The compounds of formula III-2f are preferably selected from the group of compounds of formulae III-2f-1 to III-2f-7

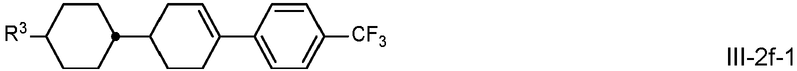

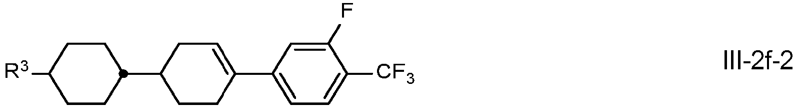

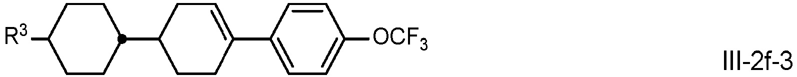

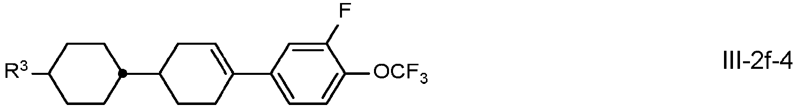

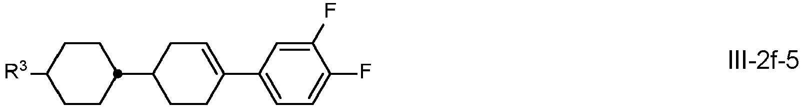

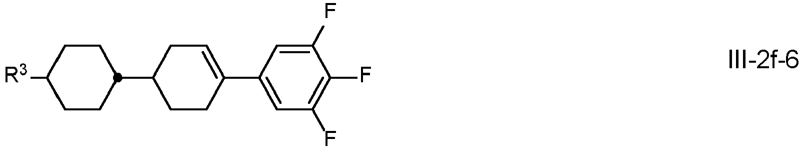

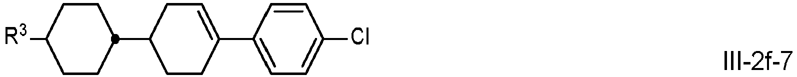

The compounds of formula III-2g are preferably selected from the group of compounds of formulae III-2g-1 to III-2g-7 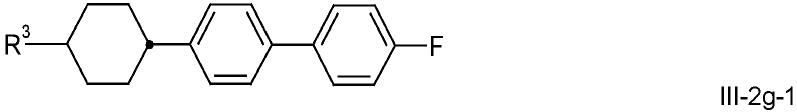 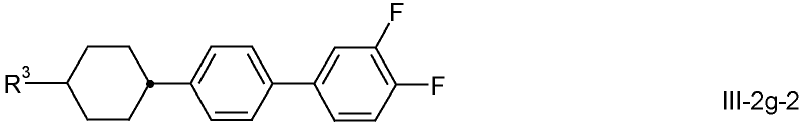 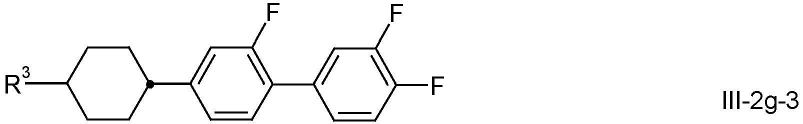 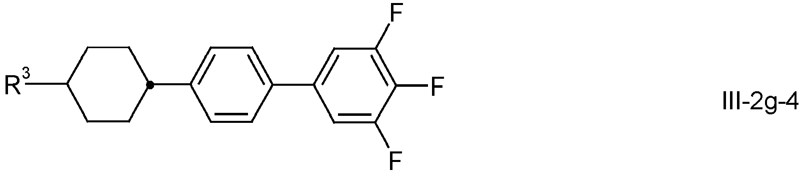 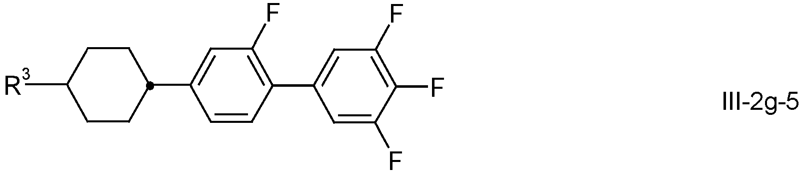 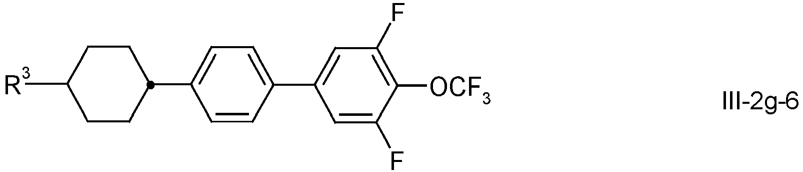 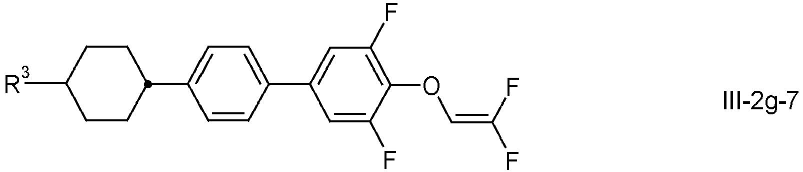 in which R³ has the meaning given above.

The compounds of formula III-2h are preferably selected from the group of compounds of formulae III-2h-1 to III-2h-5 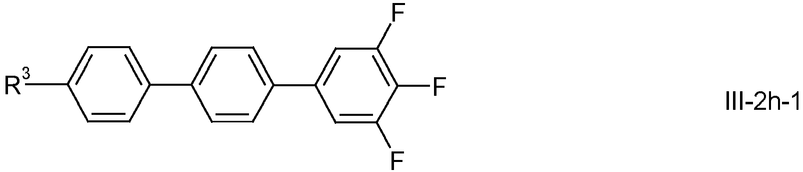 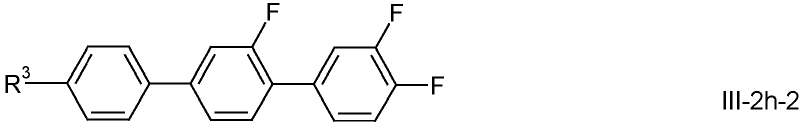 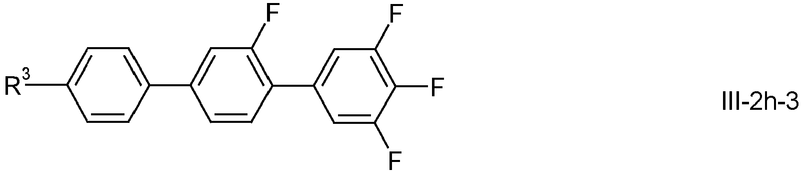 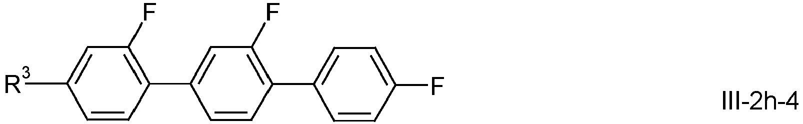 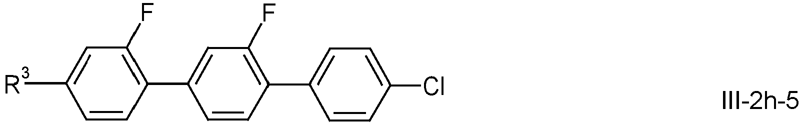 in which R³ has the meaning given above.

The compounds of formula III-2i are preferably selected from the group of compounds of formulae III-2i-1 to III-2i-3 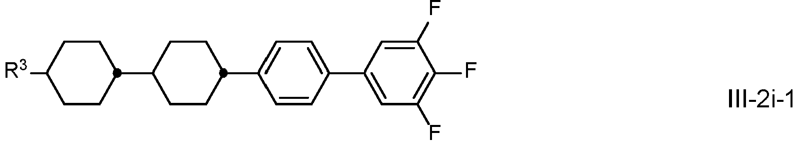 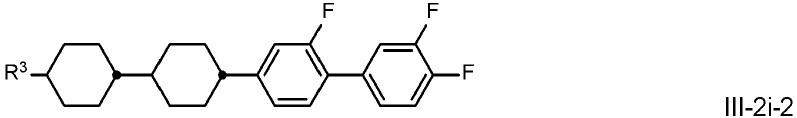 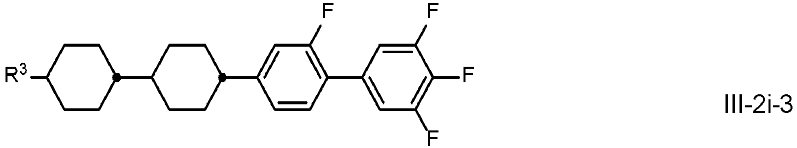 in which R³ has the meaning given above.

The compounds of formula III-2j are preferably selected from the group of compounds of formulae III-2j-1 to III-2j-3 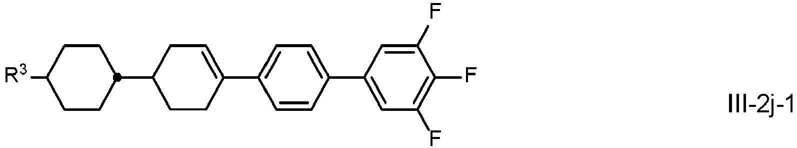 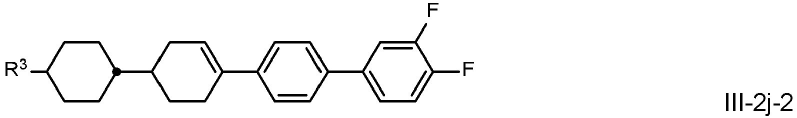 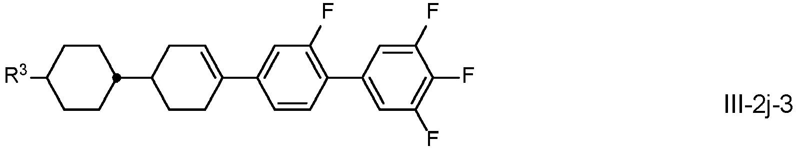 in which R³ has the meaning given above.

The compounds of formula III-2k are preferably selected from the group of compounds of formulae III-2k-1 to III-2k-6 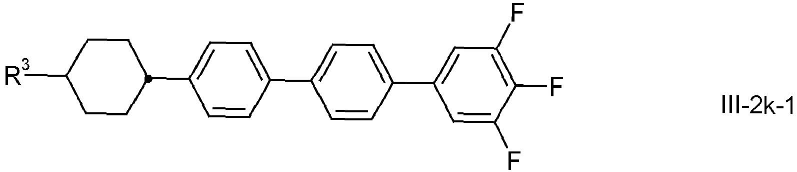 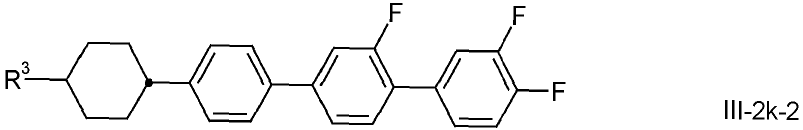 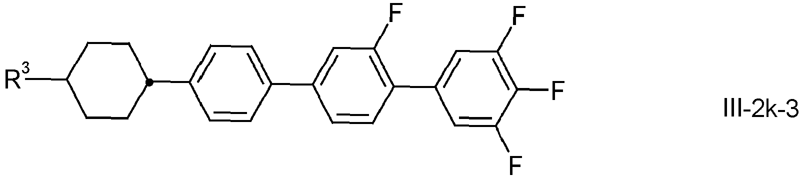 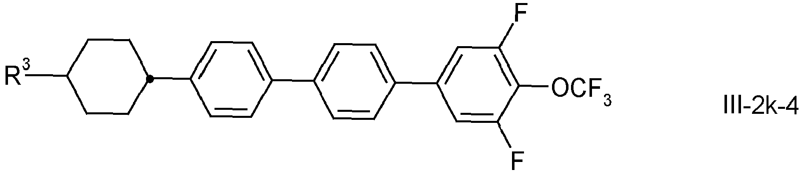 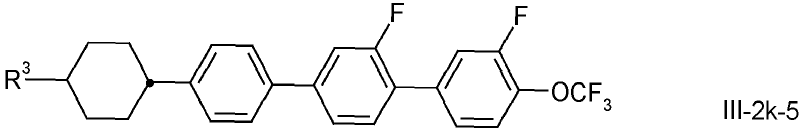 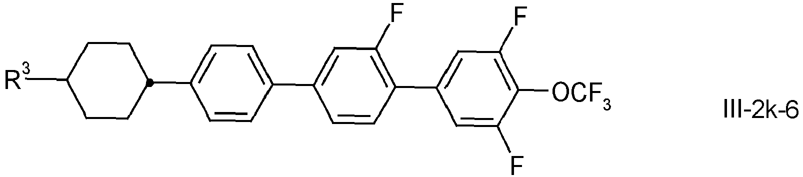 in which R³ has the meaning given above.

The compounds of formula III-2l are preferably selected from the compounds of formula III-2l-1

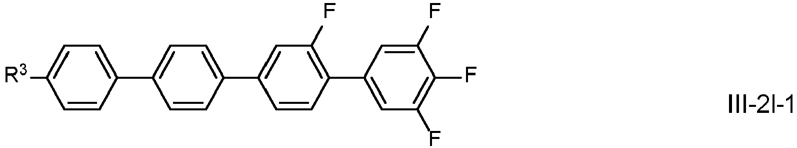

Alternatively or additionally to compounds of formulae III-1 and/or III-2 the media according to the present invention may comprise one or more compounds of formula III-3, 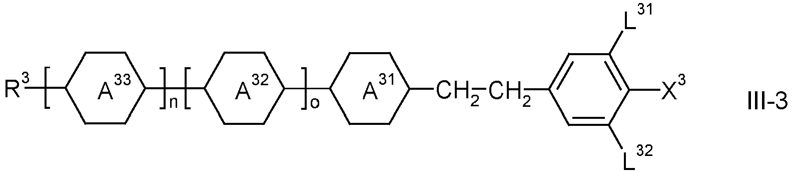 in which the parameters have the respective meanings given under formula III above,
and preferably of formula III-3a 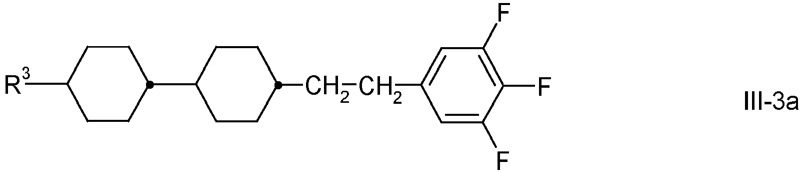 in which the R³ has the meaning given above.

Preferably, the medium according to the invention comprises one or more compounds of formula IV 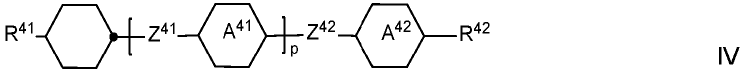 in which
- R⁴¹ and R⁴²: independently of each other have the meaning given for R² under formula II above, preferably R⁴¹ is alkyl and R⁴² is alkyl or alkoxy or R⁴¹ is alkenyl and R⁴² is alkyl, 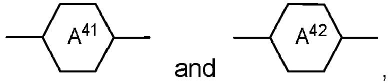 on each occurrence, identically or differently, denote 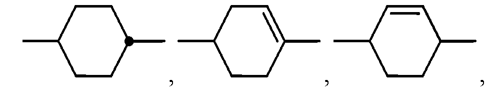 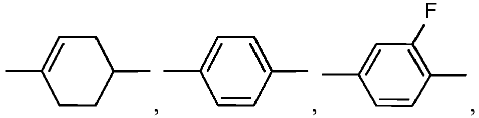 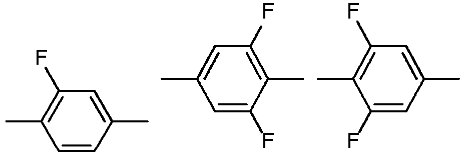 or 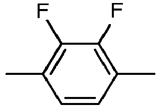 preferably at least one of 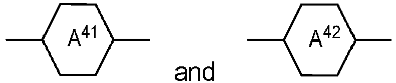 is 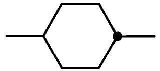
- Z⁴¹, Z⁴²: independently of each other, and in case Z⁴¹ is present twice, also these independently of each other, denote -CH₂CH₂-, -COO-, *trans-* -CH=CH-, *trans-* -CF=CF-, -CH₂O-, -CF₂O-, -C=C- or a single bond, preferably at least one of them is a single bond, and
- p: is 0, 1 or 2, preferably 0 or 1.

Preferably the liquid crystalline media according to the present invention comprise one or more compounds of formula IV preferably selected from the group of compounds of formulae IV-1 to IV-5 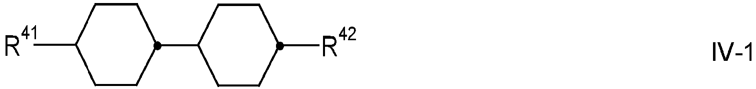 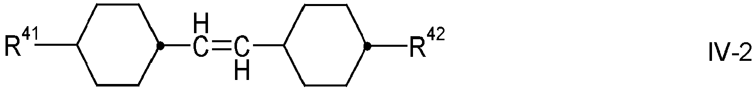 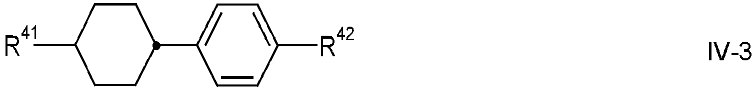 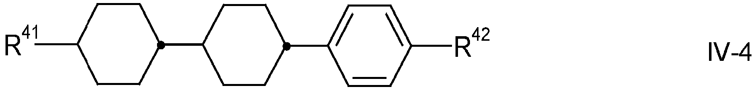 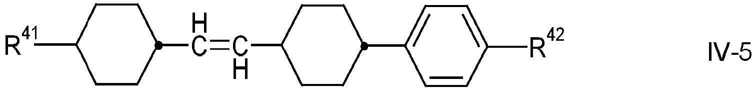 in which R⁴¹ and R⁴² have the respective meanings given under formula IV above and in formulae IV-1, IV-4 and IV-5 R⁴¹ preferably is alkyl or alkenyl, preferably alkenyl and R⁴² preferably is alkyl or alkenyl, preferably alkyl; in formula IV-2 R⁴¹ and R⁴² preferably are alkyl and in formula IV-3 R⁴¹ preferably is alkyl or alkenyl, preferably alkyl and R⁴² preferably is alkyl or alkoxy, preferably alkoxy.

Particularly preferably, the medium according to the invention comprises one or more compounds of formula IV-1 and one or more compounds of formula IV-4.

In a preferred embodiment the medium further comprises one or more compounds of formula IV selected from the group of compounds of formulae IV-6 to IV-13 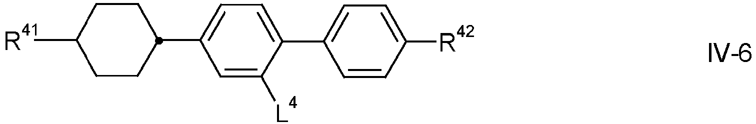 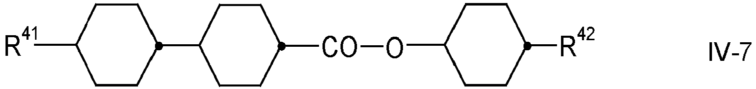 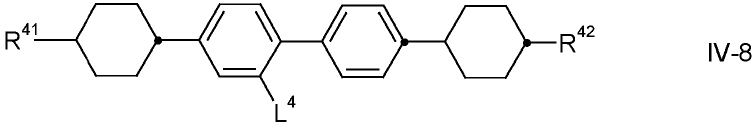 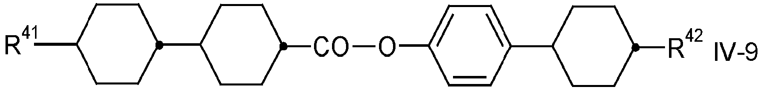 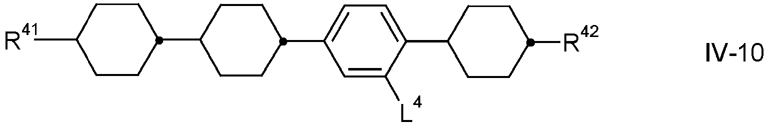 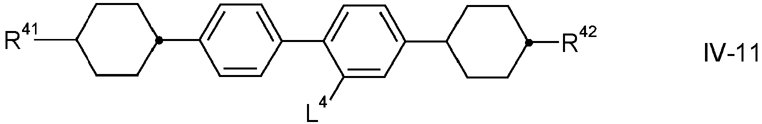 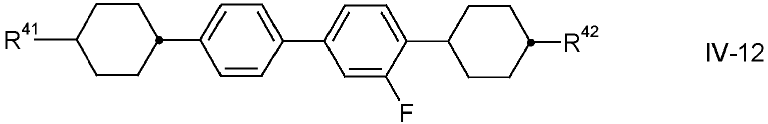 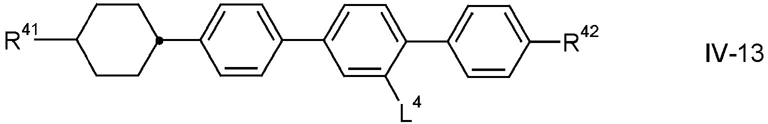 in which
- R⁴¹ and R⁴²: independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms and
- L⁴: denotes H or F.

Alternatively or additionally to compounds of formulae II and/or III the media according to the present invention may comprise one or more compounds of formula V 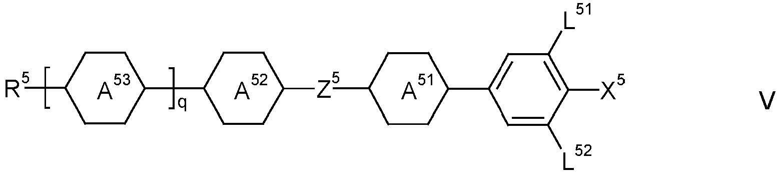 in which
- R⁵: is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, and preferably is alkyl or alkenyl, 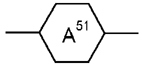 to 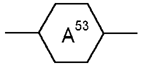 are, independently of each other, 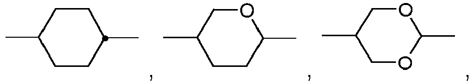 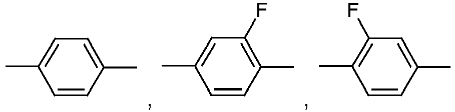 or 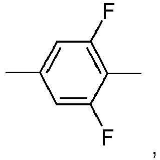
- L⁵¹ and L⁵²,: independently of each other, denote H or F, preferably L⁵¹ denotes F and
- X⁵: denotes halogen, halogenated alkyl or alkoxy with 1 to 3 C-atoms or halogenated alkenyl or alkenyloxy with 2 or 3 C-atoms, preferably F, CI, -OCF₃ or -CF₃, most preferably F, Cl or -OCF₃,
- Z⁵: denotes -CH₂CH₂-, -CF₂CF₂-, -COO-, *trans-* -CH=CH-, *trans-* -CF=CF- or -CH₂O, preferably -CH₂CH₂-, -COO-or trans- -CH=CH- and most preferably -COO- or -CH₂CH₂-, and
- q: is 0 or 1.

Preferably the media according to the present invention comprises one or more compounds of formula V, preferably selected from the group of compounds of formulae V-1 and V-2 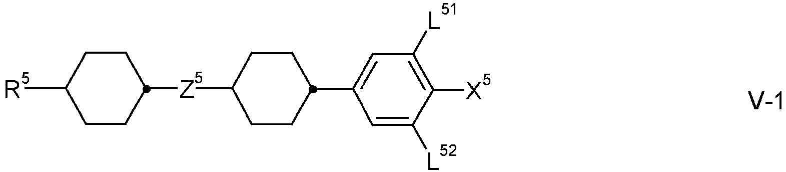 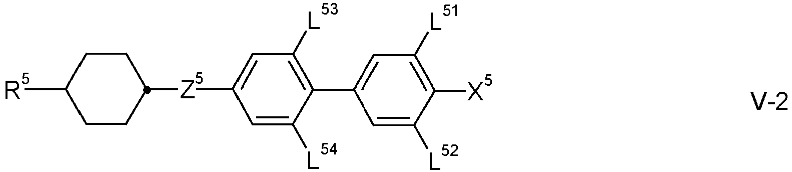 in which the parameters have the respective meanings given above and the parameters L⁵³ and L⁵⁴ are, independently of each other and of the other parameters, H or F and preferably Z⁵ is -CH₂-CH₂-.

Preferably the compounds of formula V-1 are selected from the group of compounds of formulae V-1 a and V-1 b 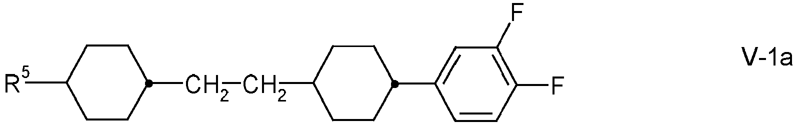 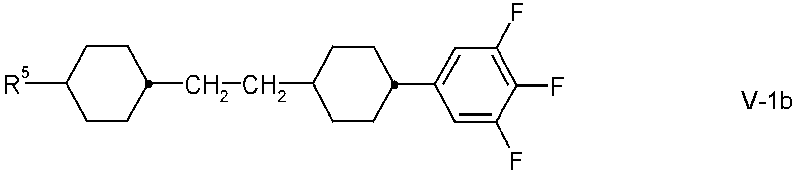 in which the R⁵ has the meaning given above.

Preferably the compounds of formula V-2 are selected from the group of compounds of formulae V-2a to V-2d 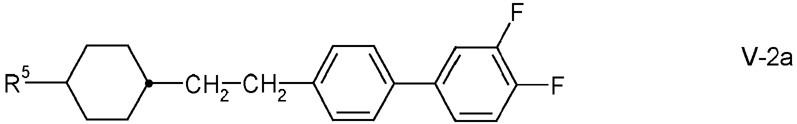 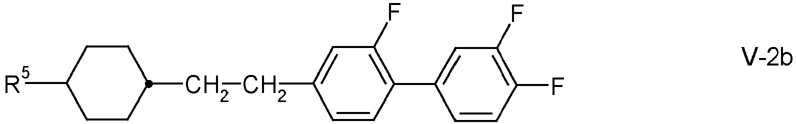 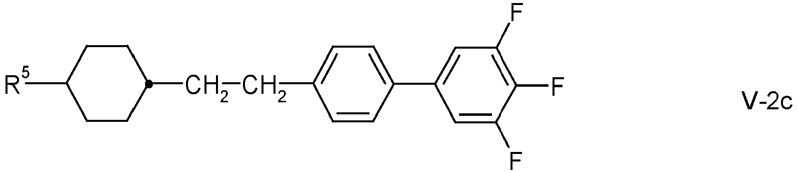 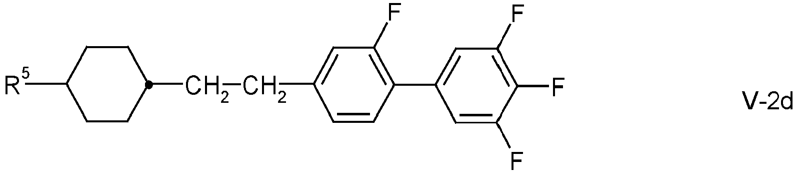 in which the R⁵ has the meaning given above.

Preferably the liquid crystalline media according to the present invention additionally comprise one or more compounds of formula VI 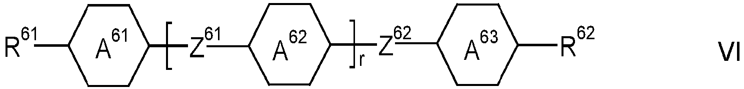 in which
- R⁶¹ and R⁶²: independently of each other have the meaning given for R² under formula II above, preferably R⁶¹ is alkyl and R⁶² is alkyl or alkenyl, each having up to 7 C atoms, 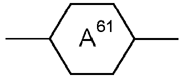 to 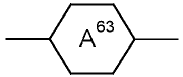 on each occurrence, identically or differently, denote 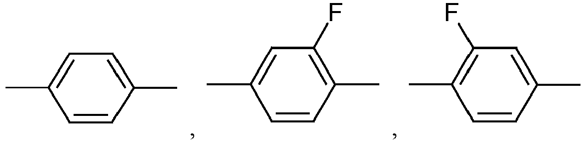 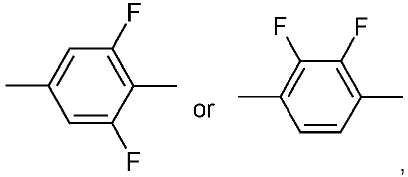
- Z⁶¹ and Z⁶²: on each occurrence, identically or differently, denote -CH₂CH₂-, -COO-, *trans-* -CH=CH-, *trans-* -CF=CF-, -CH₂O-, -CF₂O- or a single bond, preferably at least one of them is a single bond, and
- r: is 0, 1 or 2, preferably 0 or 1.

Preferably the compounds of formula VI are selected from the group of compounds of formulae VI-1 to VI-4 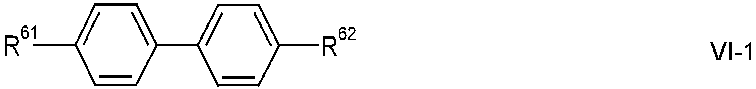 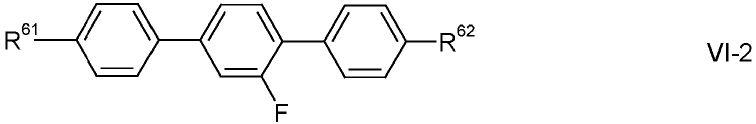 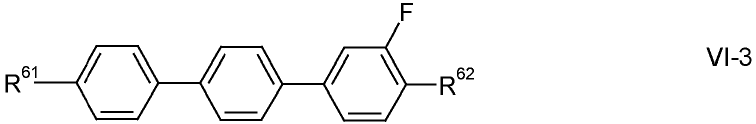 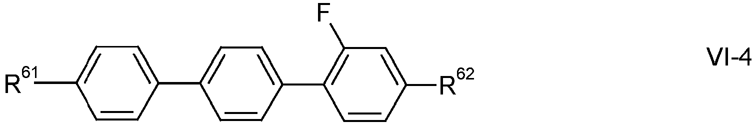
in which R⁶¹ and R⁶² have the respective meanings given under formula VI above and
R⁶¹ preferably is alkyl having 1 to 7 C atoms and
in formula VI-1 R⁶² preferably is alkenyl having up to 7 C atoms, preferably -(CH₂)₂-CH=CH-CH₃ and
in formula VI-2 R⁶² preferably is alkenyl having up to 7 C atoms, preferably -(CH₂)₂-CH=CH₂ and
in formulae VI-3 and VI-4 R⁶² preferably is alkyl having 1 to 7 C atoms.

In a preferred embodiment, the medium according to the invention comprises one or more compounds selected from the group of compounds of the formulae Y and B 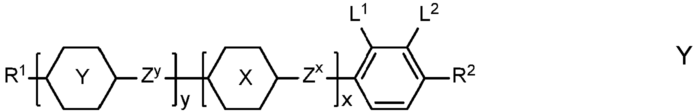 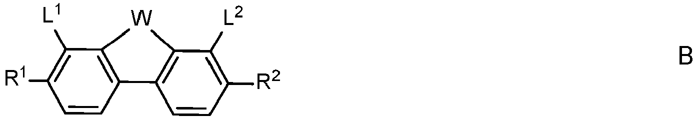 in which the individual radicals, on each occurrence identically or differently, have the following meaning: 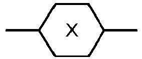 and 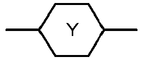 denote 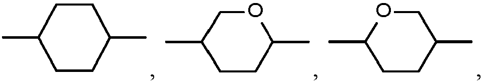 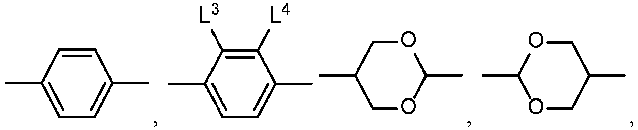 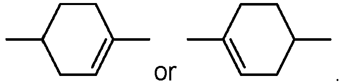
- R¹, R²: a straight-chain, branched or cyclic alkyl or alkoxy radical that is unsubstituted or halogenated and has 1 to 15 C atoms, where, in addition, one or more CH₂ groups in these radicals may each be replaced, independently of one another, by -C≡C-, -CF₂O-, -CH=CH-, 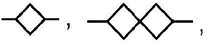 -O-, -CO-O- or -O-CO- in such a way that O atoms are not linked directly to one another,
- Z^{x}, Z^{y}: -CH₂CH₂-, -CH=CH-, -CF₂O-, -OCF2-, -CH₂O-, -OCH2-, -CO-O-, -O-CO-, -C₂F₄-, -CF=CF-, -CH=CH-CH₂O-, or a single bond, preferably a single bond,
- W: O or S,
- L⁰: H or F,
- L¹, L²: H, F or CI, preferably H or F, very preferably F,
- L³, L⁴: H, F or CI, preferably H or F,
- x, y: 0, 1 or 2, with x+y ≤ 3,
in which the compounds of formula Y contain at least one substituent L¹⁻⁴ that is F or CI, preferably F.

In the compounds of formula Y and its subformulae, R¹ and R² preferably denote straight-chain alkyl or alkoxy having 1 to 6 C atoms, furthermore alkenyl having 2 to 6 C atoms, in particular vinyl, 1E-propenyl, 1E-butenyl, 3-butenyl, 1E-pentenyl, 3E-pentenyl or 4-pentenyl.

In the compounds of formula Y and its subformulae, preferably both radicals L¹ and L² denote F. In another preferred embodiment of the present invention, in the compounds of formula Y and its subformulae one of the radicals L¹ and L² denotes F and the other denotes CI.

In a preferred embodiment of the present invention the medium contains one or more compounds of formula Y that are selected from the following subformulae 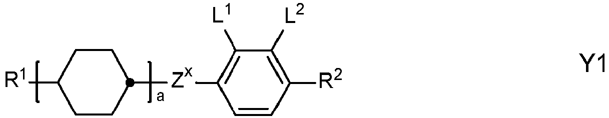 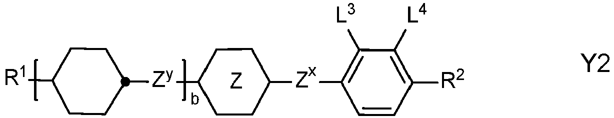 in which R¹, R², Z^{x}, Z^{y}, L¹ and L² have one of the meanings given in formula Y or one of the preferred meanings as given above and below,
- a: denotes 1 or 2,
- b: denotes 0 or 1, 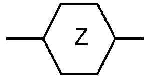 denotes 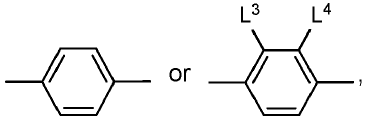
- L³, L⁴: denote F or CI, preferably F.

Preferably, in the compounds of formula Y1 and Y2 both L¹ and L² denote F or one of L¹ and L² denotes F and the other denotes Cl, or both L³ and L⁴ denote F or one of L³ and L⁴ denotes F and the other denotes CI.

Preferably the medium comprises one or more compounds of the formula Y1 selected from the group consisting of the following subformulae 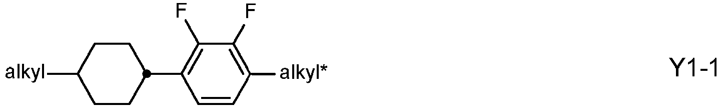 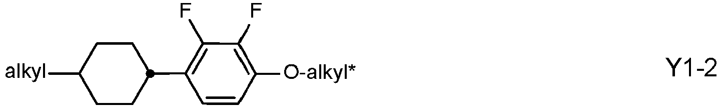 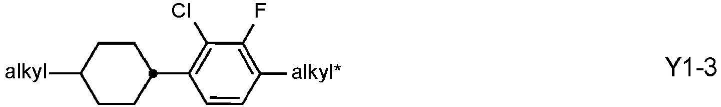 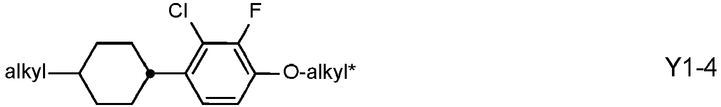 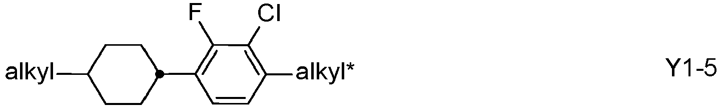 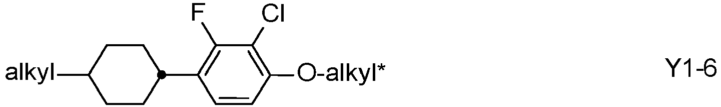 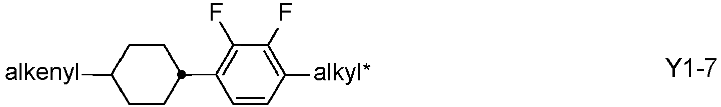 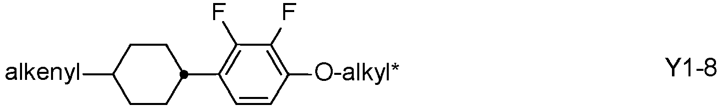 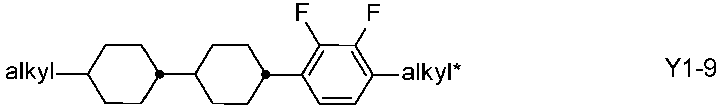 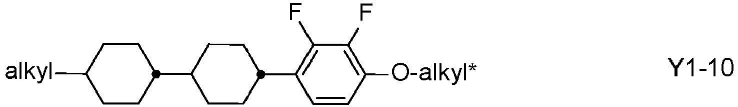 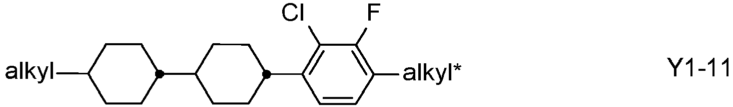 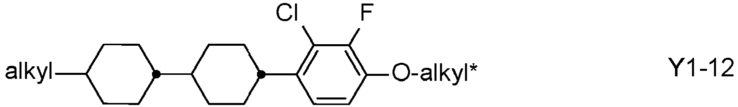 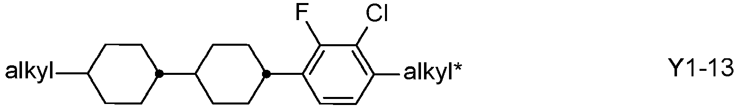 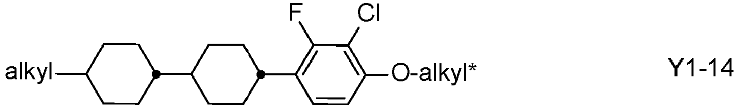 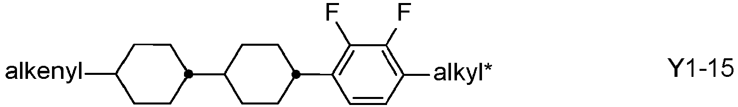 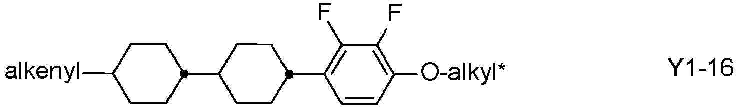 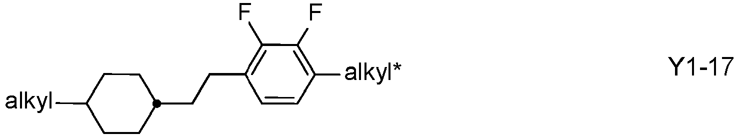 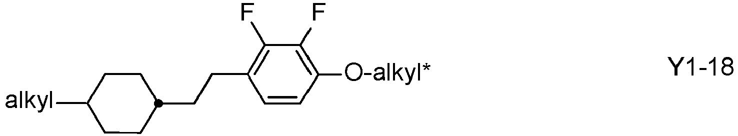 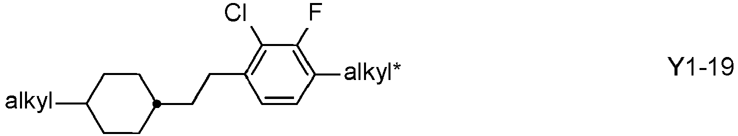 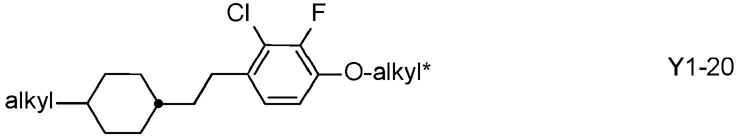 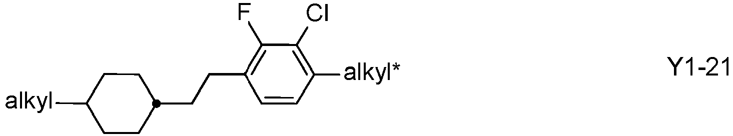 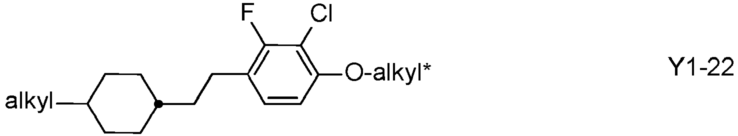 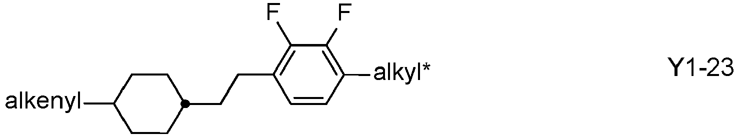 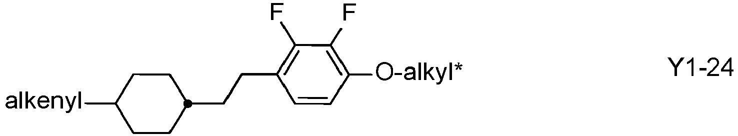 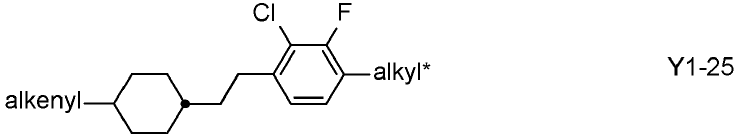 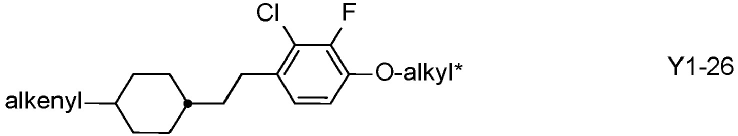 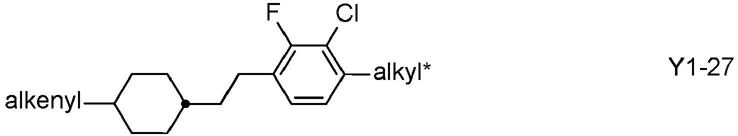 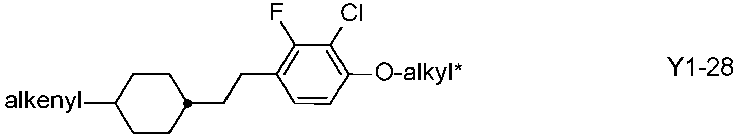 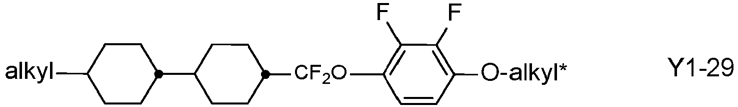 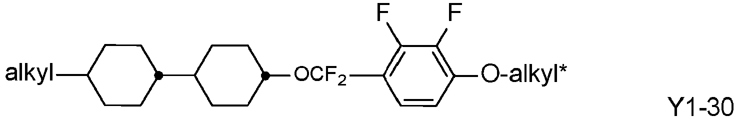 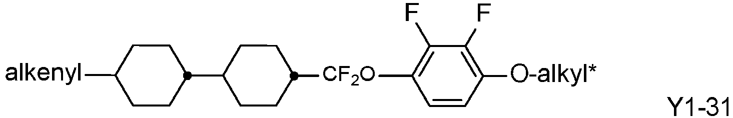 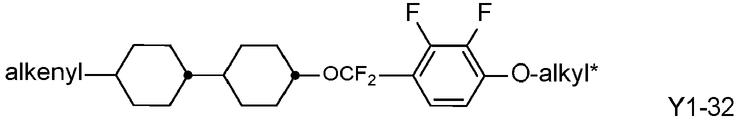 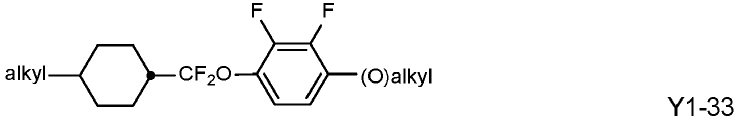 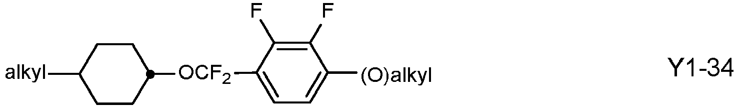 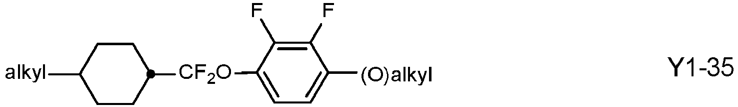 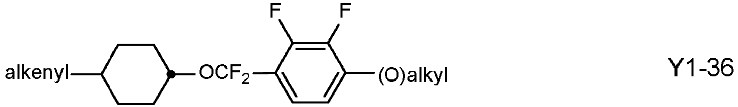 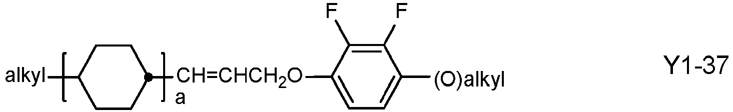 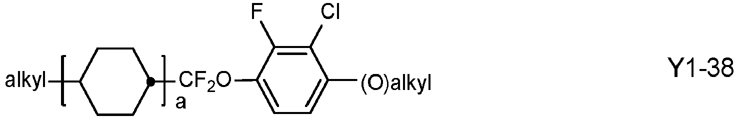 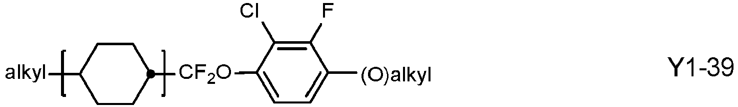 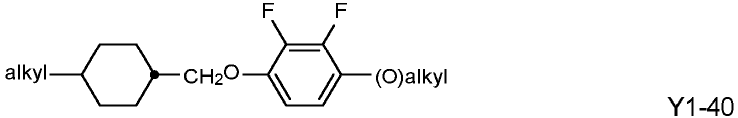 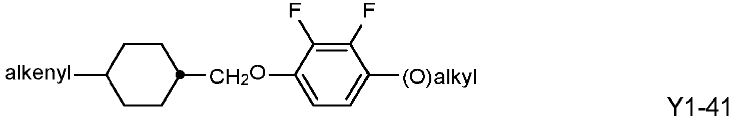 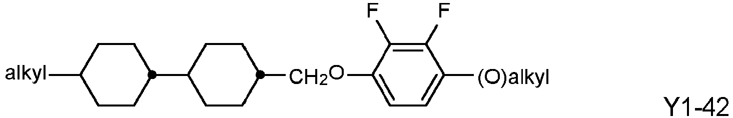 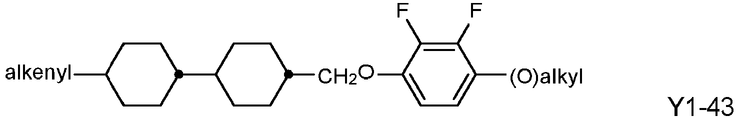 in which a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y1 selected from formulae Y1-2 and Y1-10.

Further preferably the medium comprises one or more compounds of the formula Y2 selected from the group consisting of the following subformulae: 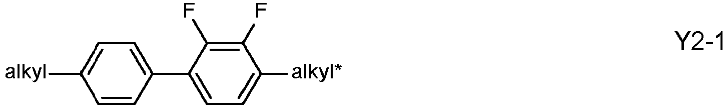 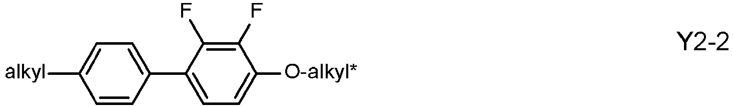 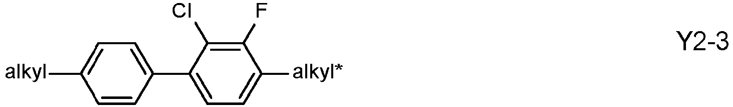 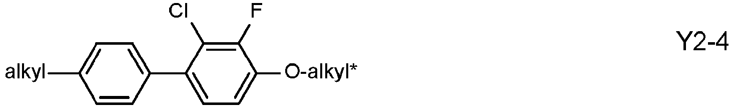 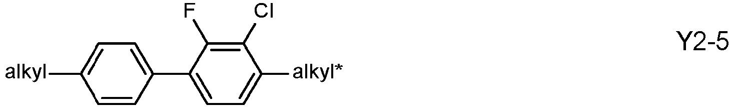 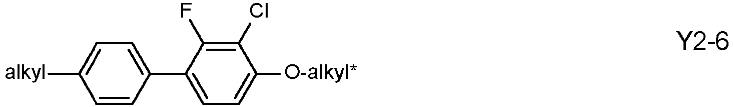 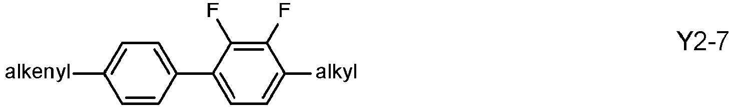 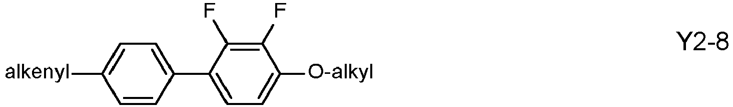 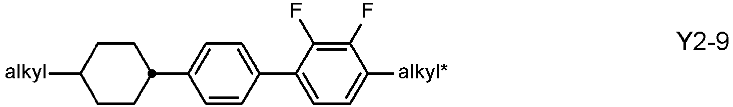 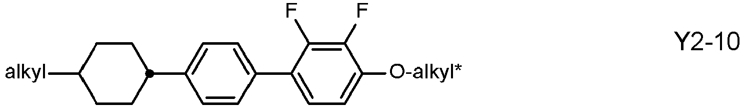 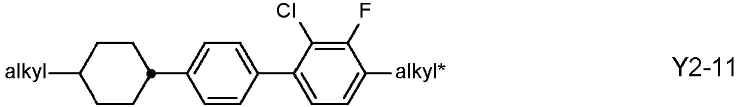 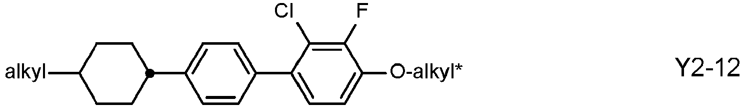 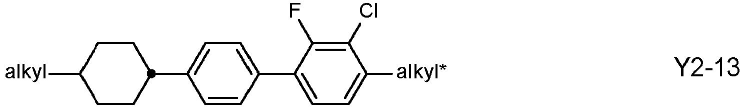 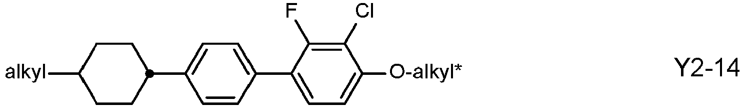 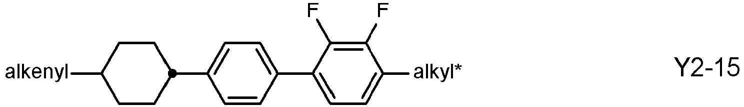 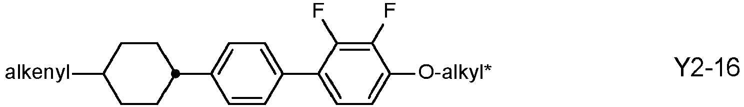 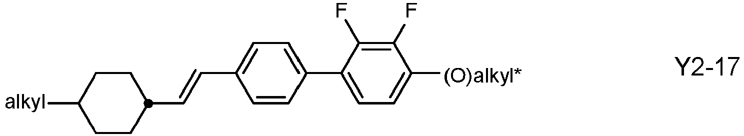 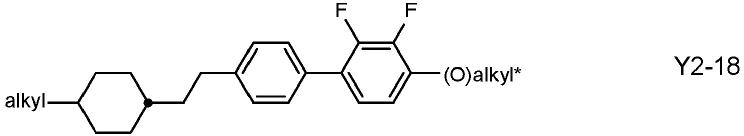 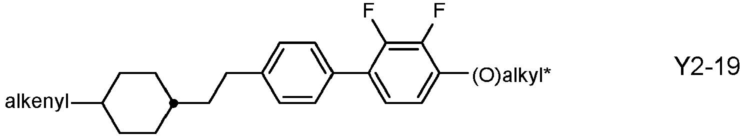 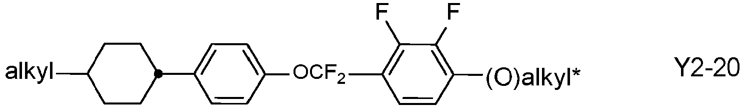 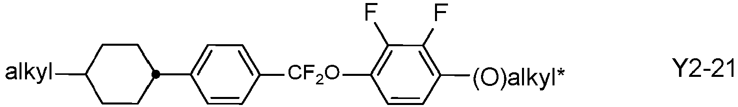 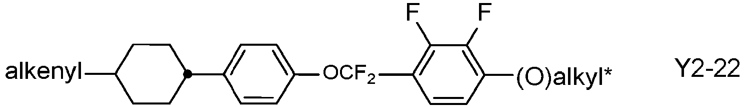 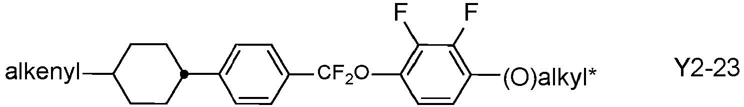 in which alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y2 selected from formulae Y2-2 and Y2-10.

The proportion of the compounds of formula Y1 or its subformulae in the medium is preferably from 1 to 10% by weight.

The proportion of the compounds of formula Y2 or its subformulae in the medium is preferably from 1 to 10% by weight.

The total proportion of the compounds of formula Y1 and Y2 or their subformulae in the medium is preferably from 1 to 20%, very preferably from 1 to 15%, most preferably from 1 to 10% by weight.

Preferably the medium contains 1, 2 or 3 compounds of formula Y1 and Y2 or their subformulae, very preferably selected from formulae Y1-2, Y1-10, Y2-2 and Y2-10.

Preferably, the medium comprises one or more compounds of formula Y selected from the following subformula 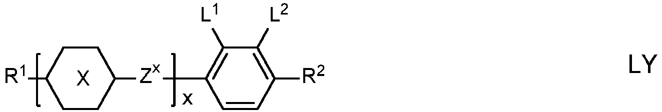 in which
R¹, R², L¹, L², X, x and Z^{x} have the meanings given in formula Y, in which at least one of the rings X is cyclohexenylene. If x is 2, preferably, one ring X is cyclohexylene-1,4-diyl and the other ring X is cyclohexylene-1,4-diyl or cyclohexane-1,4-diyl.

Preferably, both radicals L¹ and L² denote F. Further preferably one of the radicals L¹ and L² denotes F and the other denotes CI.

The compounds of the formula LY are preferably selected from the group consisting of the following sub-formulae: 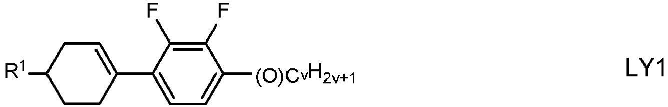 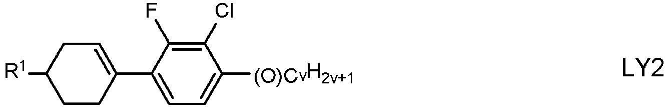 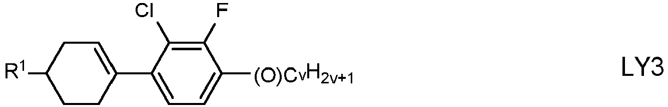 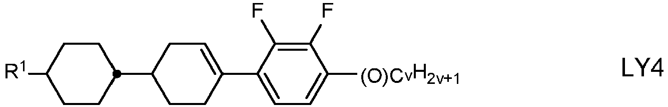 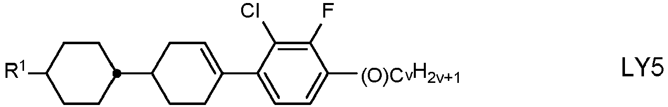 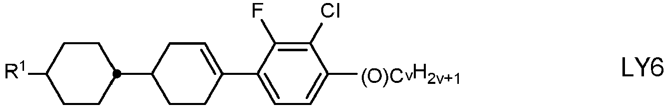 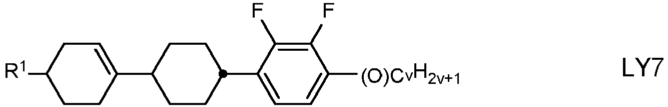 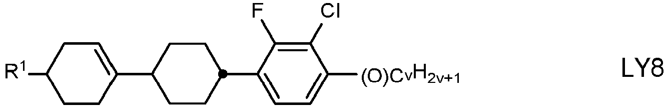 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred are compounds of formula LY4.

Preferably the medium contains 1, 2 or 3 compounds of formula LY, very preferably of formula LY4.

The proportion of the compounds of formula LY or its subformulae in the medium is preferably from 1 to 10% by weight.

In a preferred embodiment, the medium according to the invention comprises one or more compounds of formula Y selected from the following subformula 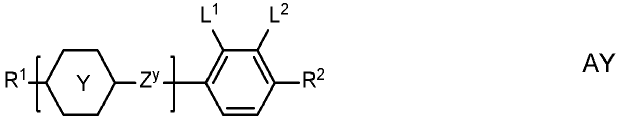 in which R¹, R², L¹, L², Y, y and Z^{y} have the meanings given in formula Y, in which at least one of the rings Y is tetrahydropyran.

The compounds of the formula AY are preferably selected from the group consisting of the following sub-formulae: 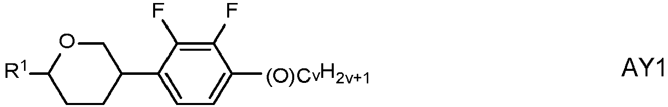 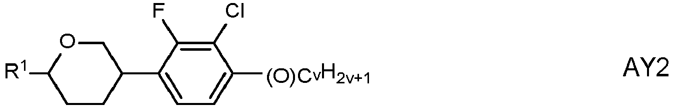 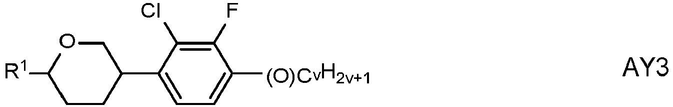 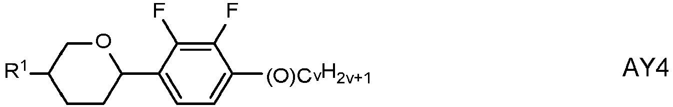 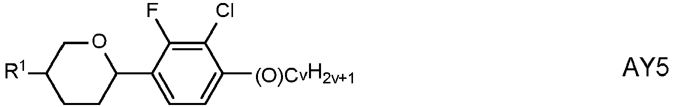 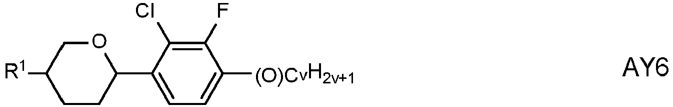 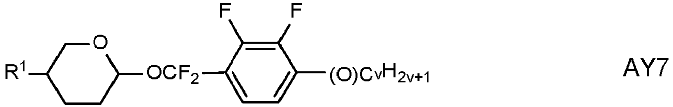 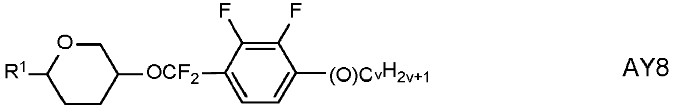 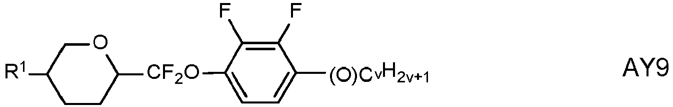 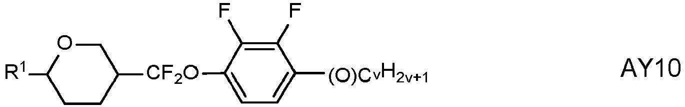 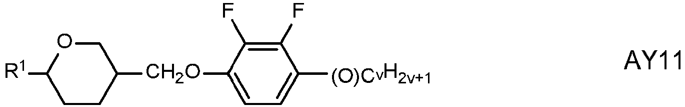 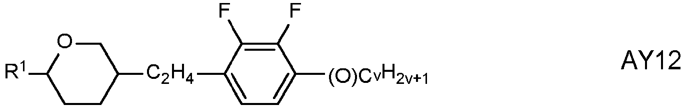 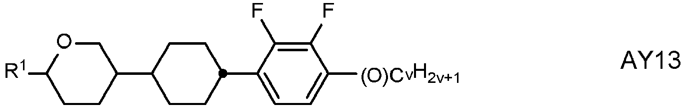 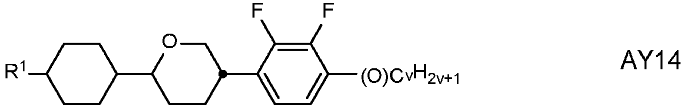 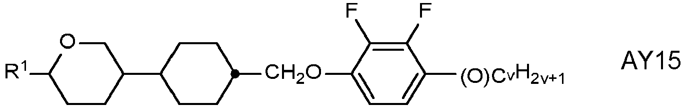 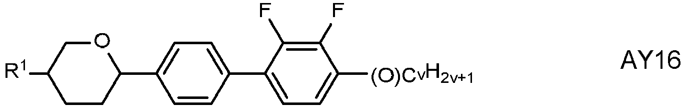 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

In another preferred embodiment of the present invention the medium contains one or more compounds of formula Y selected from the following subformula 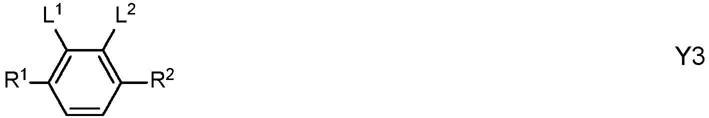 in which L¹, L², R¹ and R² have one of the meanings given in formula Y or one of the preferred meanings as given above and below.

Preferred compounds of the formula Y3 are selected from the group consisting of the following subformulae 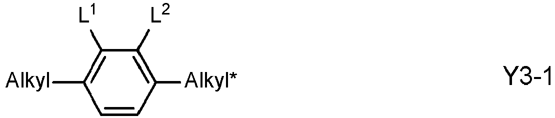 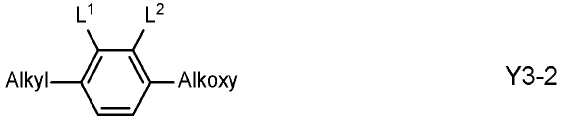 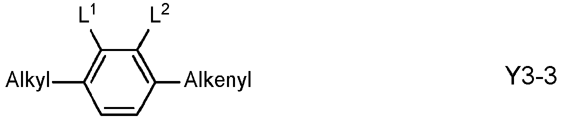 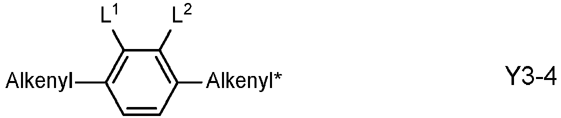 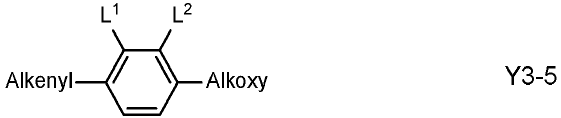 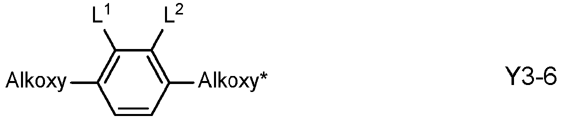 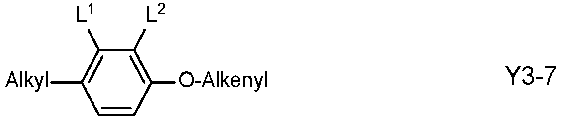 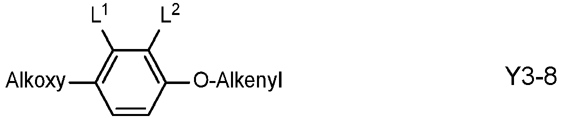 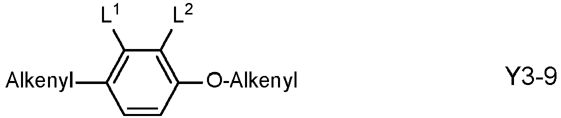 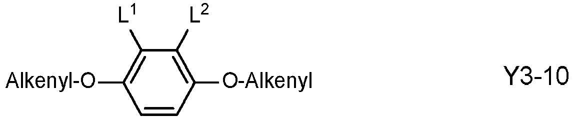 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula Y3 are selected from the group consisting of following subformulae: 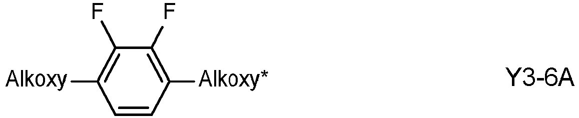 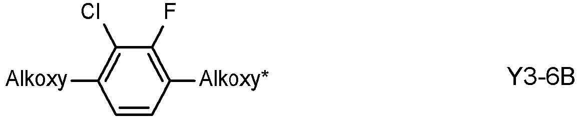 in which Alkoxy preferably denotes straight-chain alkoxy with 3, 4, or 5 C atoms.

Preferably in the compounds of formula Y3 and its subformulae both L¹ and L² denote F. Further preferably in the compounds of formula Y3 one of the radicals L¹ and L² denotes F and the other denotes CI.

The proportion of the compounds of formula Y3 or its subformulae in the medium is preferably from 1 to 10%, very preferably from 1 to 6% by weight.

Preferably the medium contains 1, 2 or 3 compounds of formula Y3 or its subformulae, preferably of formula Y3-6, very preferably of formula Y3-6A.

In another preferred embodiment the present invention the medium contains one or more compounds of formula Y selected from the subformula Y4 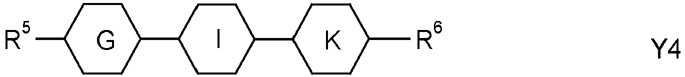 in which R⁵ and R⁶ each, independently of one another, have one of the meanings indicated above, and 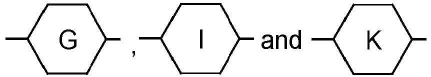 each, independently of one another, denote 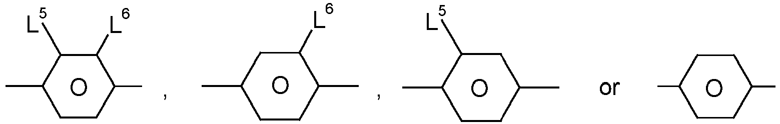 in which L⁵ denotes F or CI, preferably F, and L⁶ denotes F, CI, OCF₃, CF₃, CH₃, CH₂F or CHF₂, preferably F, and preferably at least one of the rings G, I and K is different from unsubstituted benzene.

Preferred compounds of the formula Y4 are selected from the group consisting of the following sub-formulae: 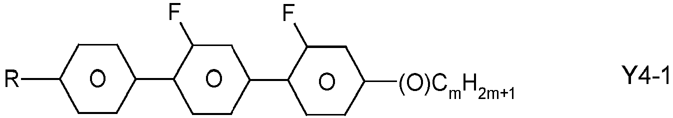 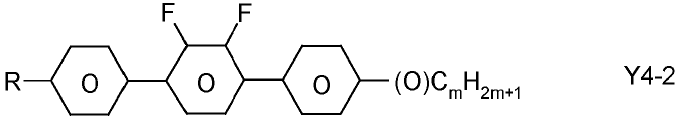 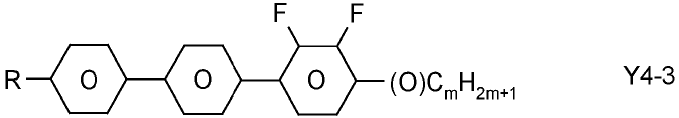 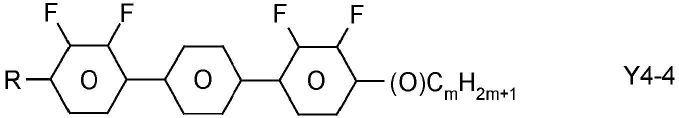 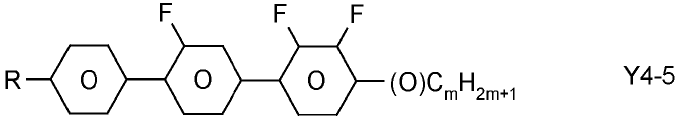 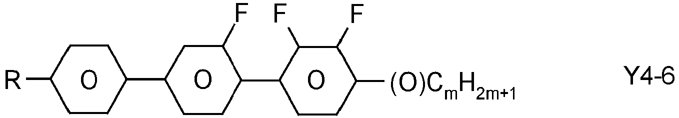 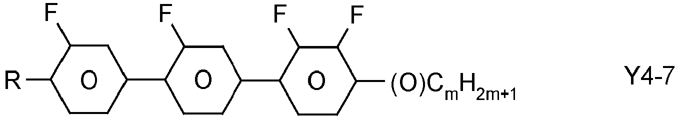 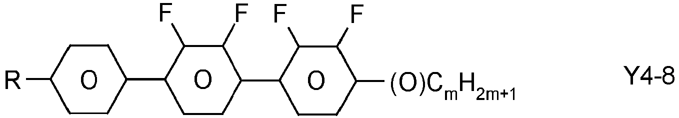 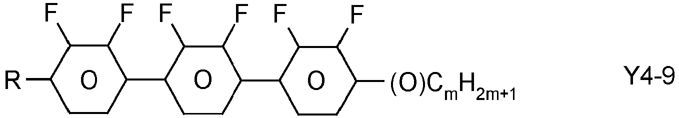 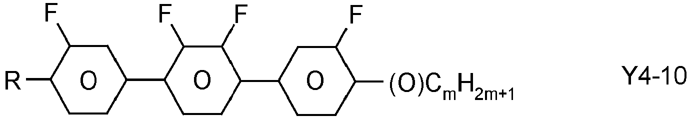 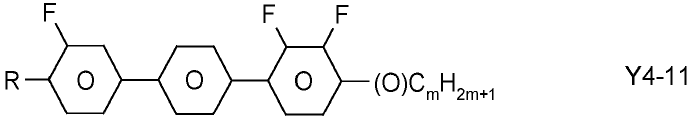 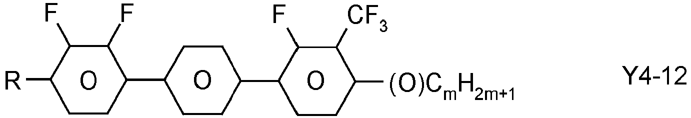 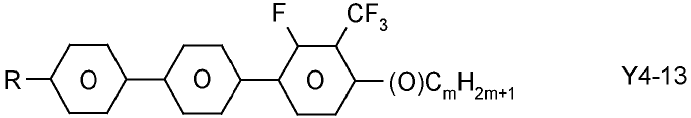 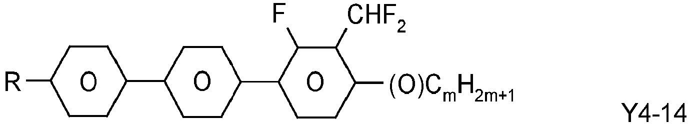 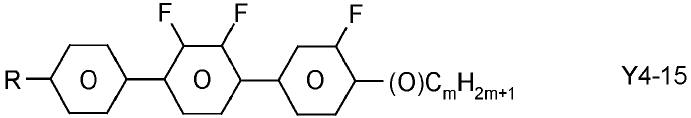 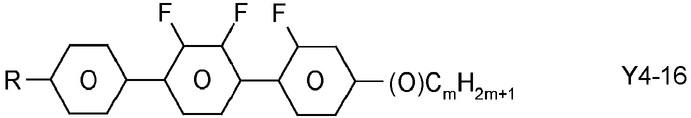 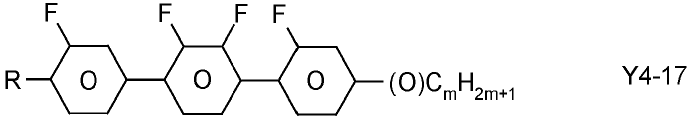 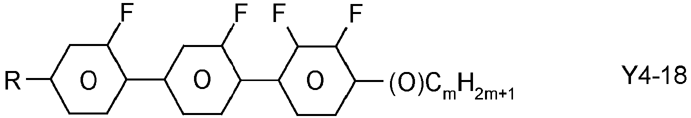 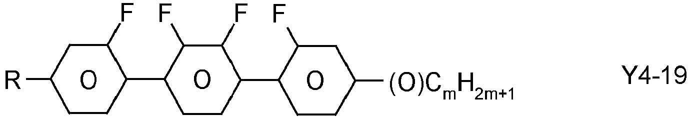 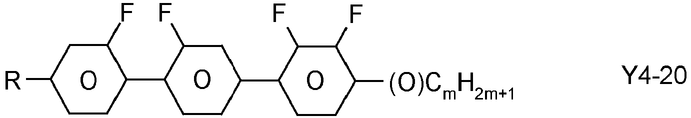 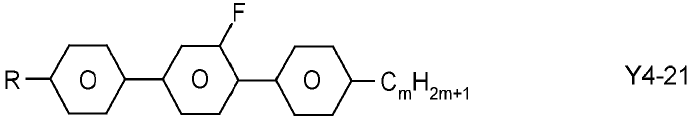 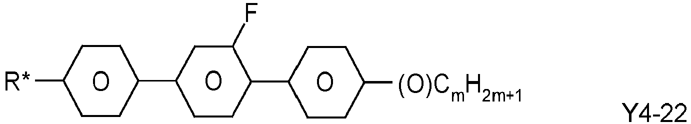 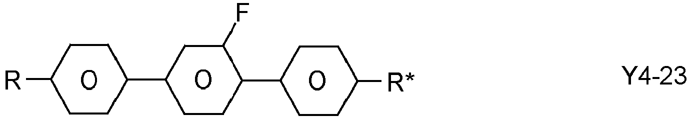 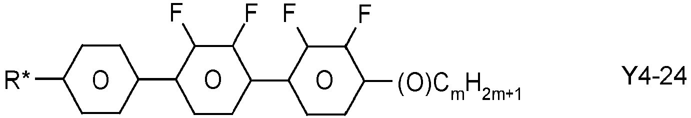 in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

R preferably denotes methyl, ethyl, propyl, butyl, pentyl, hexyl, methoxy, ethoxy, propoxy, butoxy or pentoxy.

The proportion of the compounds of formula Y4 or its subformulae in the medium is preferably from 1 to 10%, very preferably from 1 to 6% by weight.

Preferably the medium contains 1, 2 or 3 compounds of formula Y4 or its subformulae, preferably of formula Y4-1, Y4-2, Y4-3 or Y4-21, in which R preferably denotes alkyl, furthermore alkoxy, each having 1-5 C atoms.

In another preferred embodiment the present invention the medium contains one or more compounds of formula Y selected from the the group consisting of the following subformulae 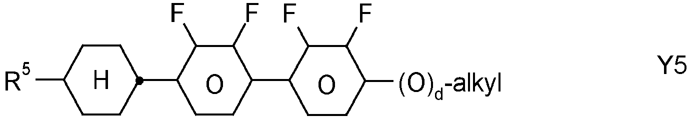 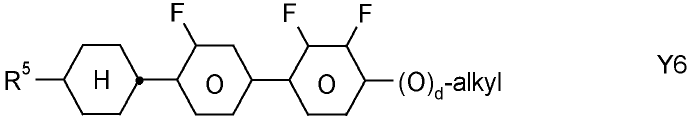 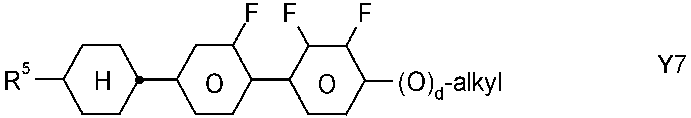 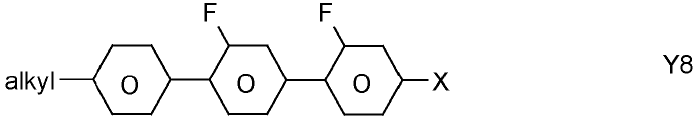 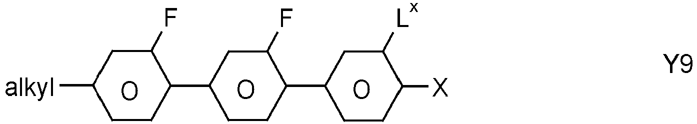 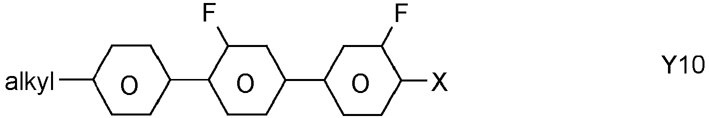 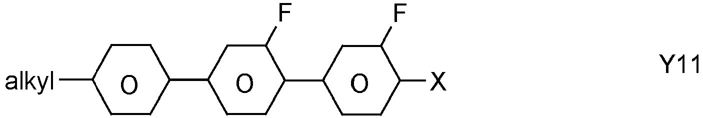 in which R⁵ has one of the meanings indicated above for R¹, alkyl denotes C₁₋₆-alkyl, L^{x} denotes H or F, X denotes F, Cl, OCF₃, OCHF₂ or OCH=CF₂, d denotes 0 or 1, and z and m each, independently of one another, denote an integer from 1 to 6.

R⁵ in these compounds is particularly preferably C₁₋₆-alkyl or -alkoxy or C₂₋₆-alkenyl, d is preferably 1. X in these compounds is particularly preferably F. The LC medium according to the invention preferably comprises one or more compounds of the above-mentioned formulae in amounts of ≥ 5% by weight.

In the compounds of formula B and its subformulae, R¹ and R² preferably denote straight-chain alkyl or alkoxy having 1 to 6 C atoms, in particular methoxy, ethoxy, propoxy or butoxy, furthermore alkenyl having 2 to 6 C atoms, in particular vinyl, 1E-propenyl, 1E-butenyl, 3-butenyl, 1E-pentenyl, 3E-pentenyl or 4-pentenyl.

The compounds of formula B are preferably selected of formula B1 and B2 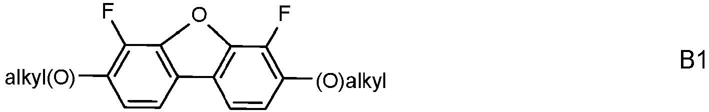 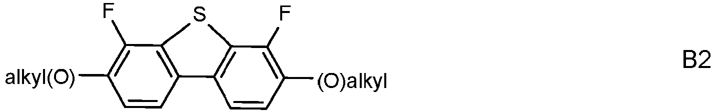 in which alkyl denotes a straight-chain alkyl radical having 1-6 C atoms, and (O) denotes an oxygen atom or a single bond. Very preferred are compounds of formula B1 and B2 in which both groups (O) denote an oxygen atom and alkyl is methyl, ethyl, propyl, butyl, pentyl or hexyl, which are preferably straight-chained. Very preferably one alkyl is ethyl and the other is n-pentyl.

Very preferred are compounds of formula B2.

The proportion of the compounds of formula B, B1 and B2 in the medium is preferably from 1 to 20%, very preferably from 1 to 15%, most preferably from 2 to 10% by weight.

Preferably the medium contains 1, 2 or 3 compounds of formula B, B1 or B2.

Preferably the total proportion of compounds of formula Y and B or their subformulae in the medium is from 2 to 25%, very preferably from 5 to 20%, most preferably from 8 to 20% by weight.

In a preferred embodiment of the present invention the medium comprises one or more compounds of formula IA 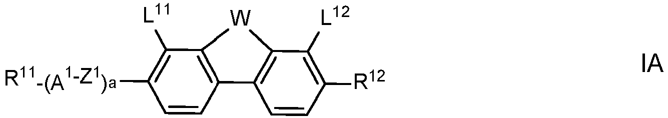 in which
- W: denotes O or S,
- R¹¹ and R¹²: each, independently of one another, denote H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, 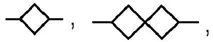 -O-, -CO-O- or -O-CO- in such a way that O atoms are not linked directly to one another, and in which, in addition, one or more H atoms may be replaced by halogen, R¹² alternatively denotes F, halogenated alkyl, halogenated alkenyl or halogenated alkoxy.
- A¹: on each occurrence independently of one another denotes
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]-octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
where the radicals a), b) and c) may be mono- or polysubstituted by halogen atoms,
- a: denotes 1 or 2, preferably 1,
- Z¹: in each occurrence independently of one another denotes -CO-O-, -O-CO-, -CF₂O-, -OCF₂-, -CH₂O-, -OCH₂-, -CH₂-, -CH₂CH₂-, -(CH₂)₄-, -CH=CH-CH₂O- -C₂F₄-, -CH₂CF₂-, -CF₂CH₂-, -CF=CF-, -CH=CF-, -CF=CH-, -CH=CH-, -C≡C- or a single bond,
- X¹: denotes S or O, and
- L¹¹ and L¹²: each, independently of one another, denote F, Cl, CF₃ or CHF₂, preferably H or F, most preferably F,
with the proviso that compounds of formula I are excluded.

In the compounds of the formula IA, R¹¹ and R¹² preferably each, independently of one another, denote straight-chain alkyl having 1 to 7 C atoms, in particular CH3, *n*-C₂H₅ , *n*-C₃H₇, *n*-C₄H₉, *n*-C₅H₁₁, *n*-C₆H₁₃- or *n*-C₇H₁₅, straight-chain alkoxy having 1 to 6 C atoms, in particular CH₃-O, *n*-C₂H₅-O , *n*-C₃H₇-O, *n*-C₄H₉-O, *n*-C₅H₁₁-O or *n*-C₆H₁₃-O, furthermore alkenyl, in particular CH₂=CH, CH₃CH=CH, CH₃CH=CHCH₂ or CH₃CH₂CH=CH, branched alkoxy, in particular (CH₃)₂CH(CH₂)₃O, and alkenyloxy, in particular CH₂=CHO, CH₂=CH₂CH₂O, CH₃CH=CHCH₂O or CH₃CH₂CH=CHCH₂O.

R¹² alternatively denotes in particular F, CF₃ or OCF₃.

L¹¹ and L¹² in formula IA preferably both denote F.

The parameter "a" in formula IA preferably denotes 1.

Preferred compounds of the formula IA present in the media are the compounds of the formulae IA-1 to IA-3, preferably of formula IA-2, 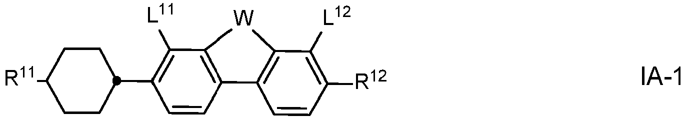 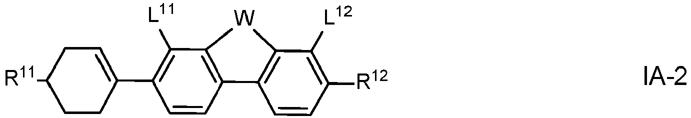 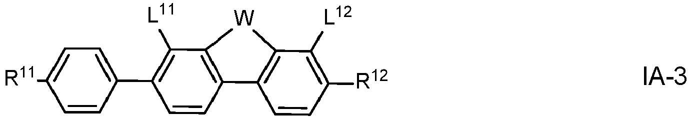 in which the occurring groups have the meanings given above for formula IA.

In another preferred embodiment, the group R¹² in formula IA and its subformulae denotes F, CF₃ or OCF₃.

In a preferred embodiment the media comprise one or more compounds of the formula IA selected from the group of compounds of formulae IA-O-1 to IA-O-3, preferably of formula IA-O-2 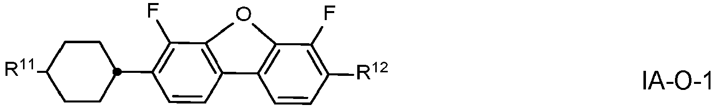 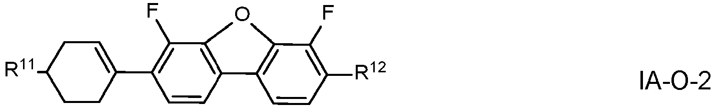 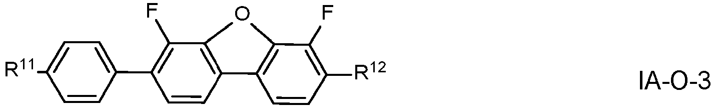 in which the occurring groups have the meanings given above.

In another preferred embodiment the media comprise one or more compounds of the formula IA selected from the group of compounds of formulae IA-S-1 to IA-S-3, preferably of formula IA-S-2, 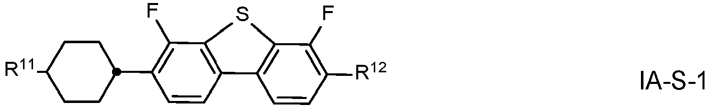 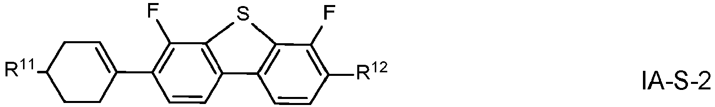 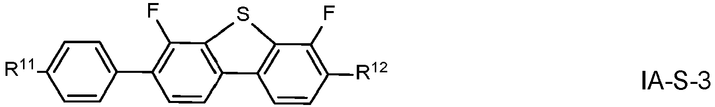 in which the parameters have the meanings given above.

In a preferred embodiment of the present invention the media comprise one or more compounds selected from the group of compounds of formulae IA-O-1 to IA-O-3 and one or more compounds selected from the group of compounds of formulae IA-S-1 to IA-S-3.

In a preferred embodiment of the present invention the liquid crystalline medium comprises one or more compounds of formula T, preferably in a concentration in the range of from 1 % to 60 %, more preferably from 5 % to 40 %, particularly preferably from 8 % to 35 %, 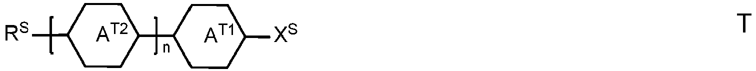 in which 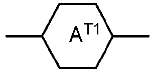 denotes 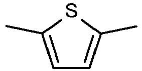 one of 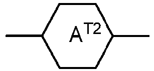 on each occurrence, identically or differently, denotes 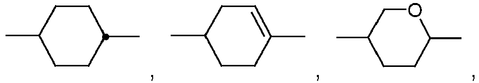 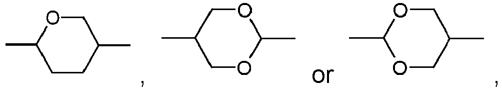 preferably 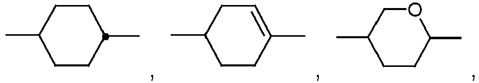 or 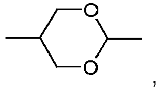 more preferably 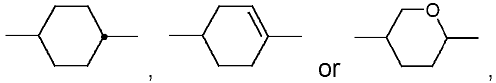 and, in case n is 2, one of 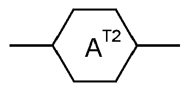 alternatively denotes 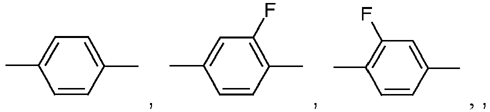 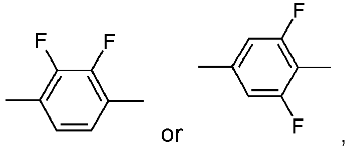 preferably 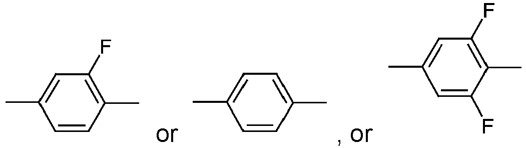 in which the rings, and preferably the phenylene rings, optionally may each be substituted by one or two alkyl groups, preferably by methyl and/or ethyl groups, preferably by one methyl group,
- n: denotes 1 or 2, preferably 2,
- R^{S}: denotes alkyl, alkoxy, fluorinated alkyl or fluorinated alkoxy, preferably having 1 o 7 C atoms, wherein one-CH₂- group may be replaced by cyclo-propylene, 1,3-cyclobutylene, 1,3-cyclopentylene, 1,3-cyclo-pentenylene, preferably by cyclopropylene or 1,3-cyclopentylene, alkenyl, alkenyloxy, alkoxyalkyl or fluorinated alkenyl having 2 to 7 C atoms and preferably alkyl or alkenyl, wherein one
-CH₂- group may be replaced by cyclo-propylene, 1,3-cyclobutylene, 1,3-cyclopentylene, 1,3-cyclo-pentenylene, preferably by cyclopropylene or 1,3-cyclopentylene,
1,3-Cyclopentenylene is a moiety selected from the group of the formulae 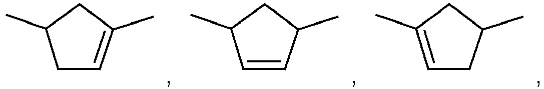 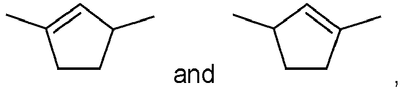 preferably 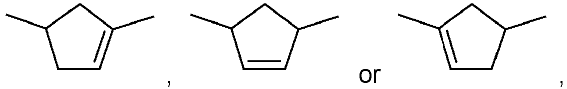 most preferably 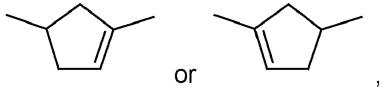 and
- X^{S}: denotes F, Cl, CN, NCS, fluorinated alkyl, fluorinated alkenyl, fluorinated alkoxy or fluorinated alkenyloxy, the latter four groups preferably having 1 to 4, preferably 1 or 2, C atoms, preferably F, Cl, CF₃ or OCF₃, more preferably F, CF₃ or OCF₃, most preferably CF₃ or OCF₃.

Preferably the compounds of formula T are selected from the group of compounds of the formulae T-1 to T-4: 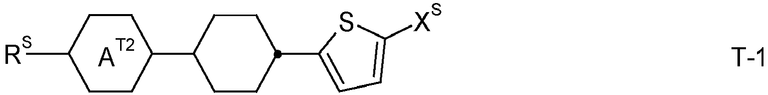 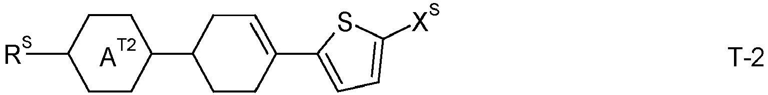 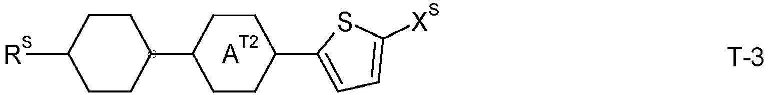 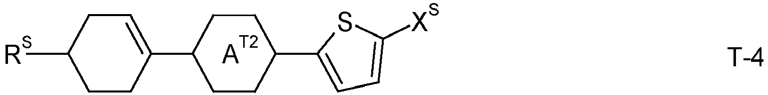 in which
- R^{S}: denotes alkyl, alkoxy, fluorinated alkyl or fluorinated alkoxy, preferably having 1 to 7 C atoms, wherein one-CH₂- group may be replaced by cyclopropylene, 1,3-cyclobutylene, 1,3-cyclopentylene, 1,3-cyclo-pentenylene, preferably by cyclopropylene or 1,3-cyclopentylene, alkenyl, alkenyloxy, alkoxyalkyl or fluorinated alkenyl having 2 to 7 C atoms, , wherein one-CH₂- group may be replaced by cyclopropylene, 1,3-cyclobutylene, 1,3-cyclopentylene, 1,3-cyclo-pentenylene, preferably by cyclopropylene or 1,3-cyclopentylene and preferably alkyl, alkoxy, alkenyl or alkenyloxy, most preferably alkoxy or alkenyloxy,
- X^{S}: denotes F, Cl, CN, NCS, fluorinated alkyl, fluorinated alkenyl, fluorinated alkoxy or fluorinated alkenyloxy, the latter four groups preferably having 1 to 4 C atoms, preferably F, Cl, CF₃ or OCF₃, more preferably CF₃ or OCF₃, and 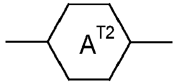 has the meaning given above, and
in which the compounds of the formulae T-1 and T-2 are excluded from formulae T-3 and T-4.

Especially preferred compounds of formulae T-1, T-2, T-3 and T-4 are selected from the group of compounds of the following formulae T-1-1, T-2-1, T-3-1 to T-3-4 and T-4-1 to T4-4: 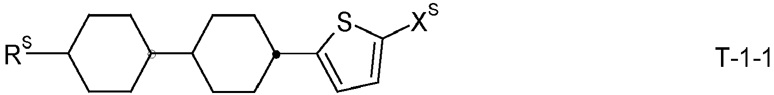 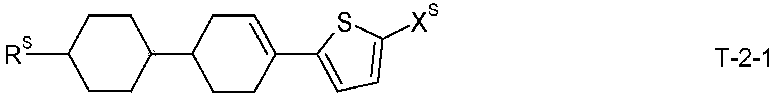 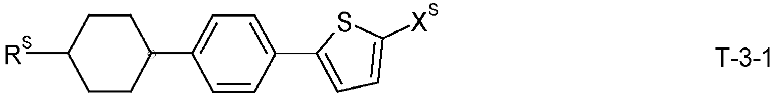 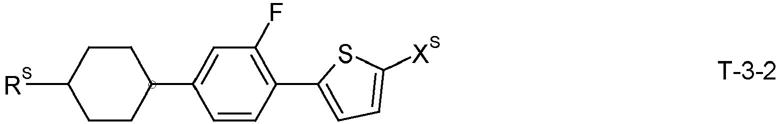 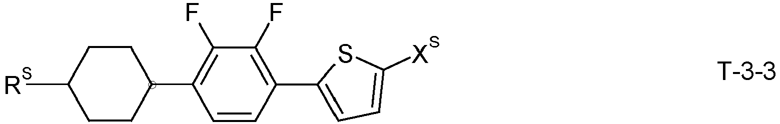 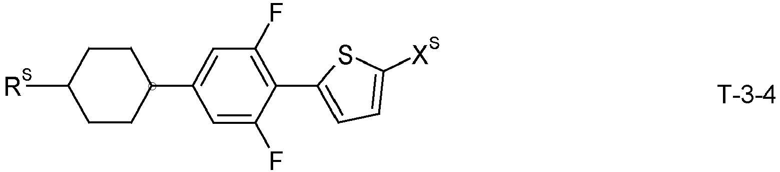 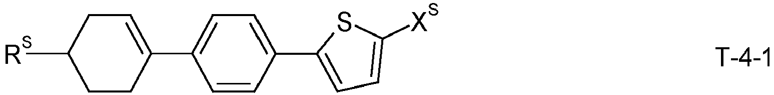 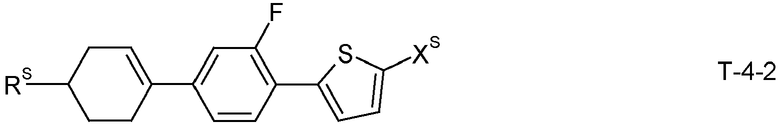 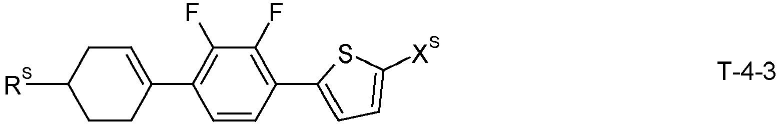 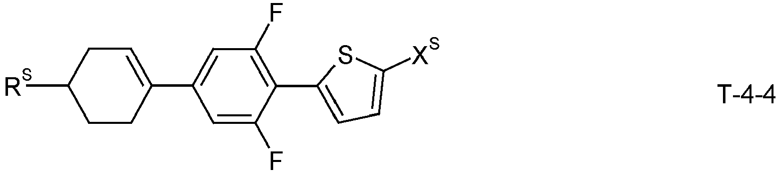 in which R^{S} and X^{S} have the meanings given above and preferably R^{S} denotes alkyl having 1 to 7 C atoms and X^{S} denotes CF₃.

Above and below, the definitions of the abbreviations (acronyms) of preferred compounds are given in table A to C below.

In further preferred embodiments, the medium according to the invention comprises
- one or more compounds of formula I in a total concentration in the range of from 2 % to 20 %, preferably 5% to 15%, particularly preferably 7% to 10%;
   and
- one or more compounds of formula II, preferably of formula II-1 and/or II-3, very preferably of formula II-1, in particular of the sub-formulae II-1a-1 and/or II-1f-1 and/or II-1g-1 and/or 11-1h-1, preferably in a total concentration in the range of from 5 % to 35 %, preferably from 7 % to 25 %, particularly preferably from 8 % to 20 %;
   and/or
- one or more compounds of formula Y, preferably of formula Y1 and/or Y2 and/or LY
   and/or
- one or more compounds of formula Y and 11-1, preferably 11-1h, in a total concentration in the range of from 5 % to 25%, preferably from 7 % to 20 %. particularly preferably from 8% to 15 %
   and/or
- one or more compounds of formula IV-1 in a total concentration in the range of from 20 % to 60 %; preferably selected from the subformulae of formula CC-n-V and CC-nV-m, more preferably of formula CC-n-V, preferably CC-3-V, CC-3-V1 and/or CC-3-2V1;
- one or more compounds of formula IV-4, preferably of formula CCP-V-n and/or CCP-nV-m and/or CCP-Vn-m, more preferably of formula CCP-V-n and/or CCP-V2-n and most preferably selected from the group of formulae CCP-V-1 and CCP-V2-1, preferably in a total concentration in the range of from 2 % to 20 %, more preferably from 4 % to 15 %;
   and/or
- one or more compounds of formula VI, preferably of formula VI-1, very preferably selected from its subformula PP-n-2Vm, in particular of formula PP-1-2V1, preferably in a total concentration in the range of from 2 % to 15 %, preferably from 3 to 10 %;
   and/or
- one or more compounds of formula VI-2, preferably of its subformula PGP-n-m, more preferably of its subformulae PGP-2-m and PGP-3-m, more preferably selected from of formulae PGP-2-2V, PGP-3-2, PGP-3-3, PGP-3-4, PGP-3-5, preferably in a total concentration in the range of from 2 % to 25 %, preferably from 3 % to 20%;
- a total amount of 0.2 % to 2 % of a compound of formula III-2l, preferably PPGU-n-F, in particular the compound PPGU-3-F;:
- a total amount of 3 % to 10 % of a compound of formula III-2, preferably III-2f-1, in particular the compound CLP-3-T;

The term "alkyl" or "alkyl*" in this application encompasses straight-chain and branched alkyl groups having 1-6 carbon atoms, in particular the straight-chain groups methyl, ethyl, propyl, butyl, pentyl and hexyl. Groups having 2-5 carbon atoms are generally preferred.

The term "alkenyl" or "alkenyl*" encompasses straight-chain and branched alkenyl groups having 2-6 carbon atoms, in particular the straight-chain groups. Preferred alkenyl groups are C₂-C₇-1 E-alkenyl, C₄-C₆-3E-alkenyl, in particular C₂-C₆-1 E-alkenyl. Examples of particularly preferred alkenyl groups are vinyl, 1 E-propenyl, 1 E-butenyl, 1 E-pentenyl, 1 E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the liquid-crystalline media according to the invention is not crucial. The mixtures can therefore comprise one or more further components for the purposes of optimisation of various properties. However, the observed effect on the desired improvement in the properties of the medium is generally greater, the higher the total concentration of compounds of the above-mentioned formulae.

The individual compounds of the above-mentioned formulae and the subformulae thereof which can be used in the liquid-crystalline media according to the invention are either known or can be prepared analogously to the known compounds.

In another preferred embodiment of the present invention the liquid-crystalline medium additionally comprises one or more polymerisable compounds. The polymerisable compounds are preferably selected from formula M

R^{a}-B¹-(Z^{b}-B²)m-R^{b} M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, - SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
- P: a polymerisable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)n1-, -CF₂CH₂-, -CH₂CF₂-, -(CF₂)n1- , -CH=CH-, -CF=CF-, -C≡C-, -CH=CH-COO-, -OCO-CH=CH-, CR⁰R⁰⁰ or a single bond,
- R⁰ and R⁰⁰: each, independently of one another, denote H or alkyl having 1 to 12 C atoms,
- m: denotes 0, 1, 2, 3 or 4,
- n1: denotes 1, 2, 3 or 4,
- L: P, P-Sp-, OH, CH₂OH, F, Cl, Br, I, -CN, -NO₂, -NCO, -NCS, -OCN, -SCN, -C(=O)N(R^{x})2, -C(=O)Y¹, -C(=O)R^{x}, -N(R^{x})2, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxy-carbonyloxy having 1 to 25 C atoms, in which, in addition, one or more H atoms may be replaced by F, Cl, P or P-Sp-,
- P and Sp: have the meanings indicated above,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-,-S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the formula I are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarin, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula M are those in which B¹ and B² each, independently of one another, denote 1,4-phenylene, 1,3-phenylene, naphthalene-1,4-diyl or naphthalene-2,6-diyl,

Very preferred compounds of formula M are selected from the following formulae: 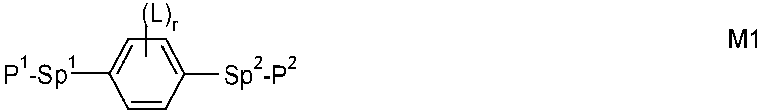 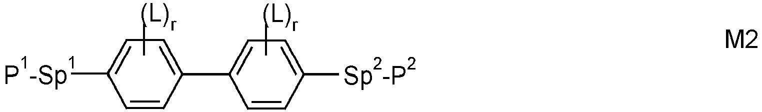 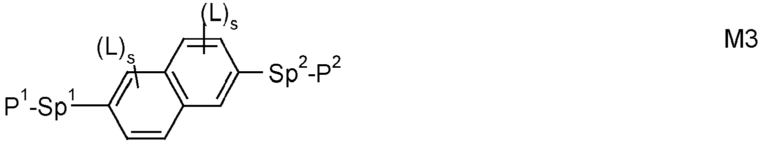 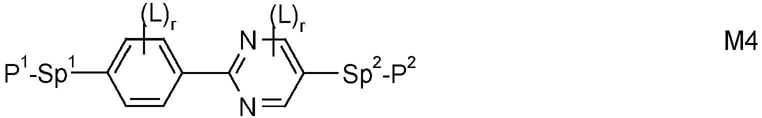 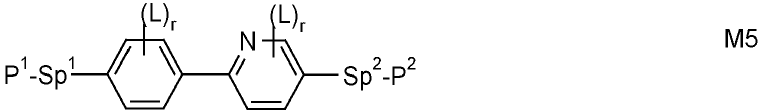 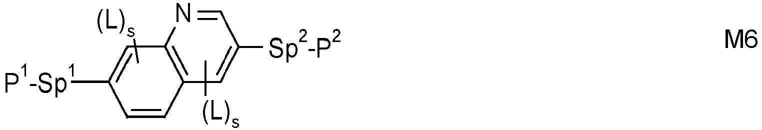 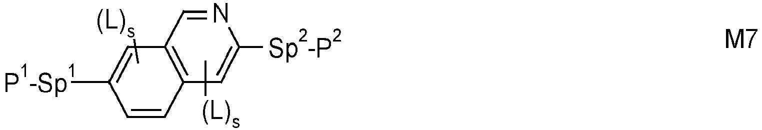 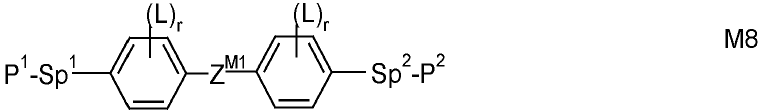 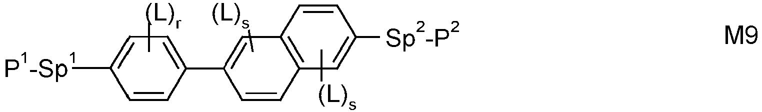 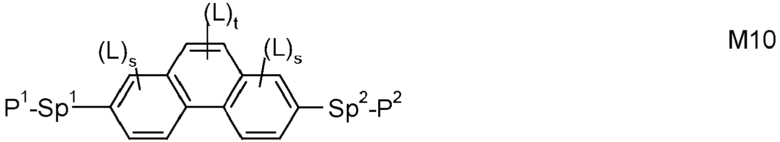 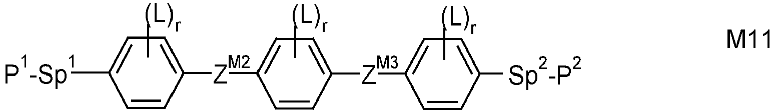 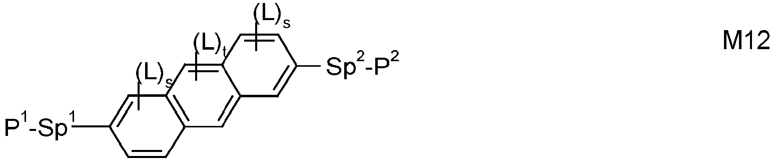 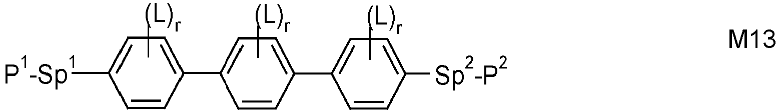 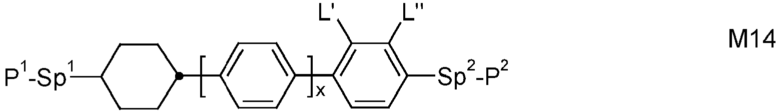 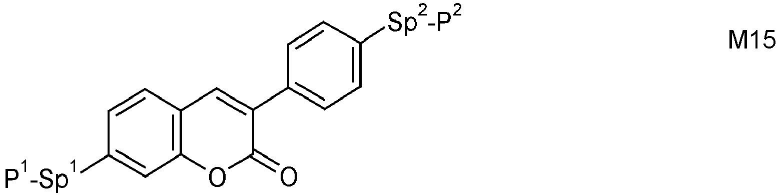 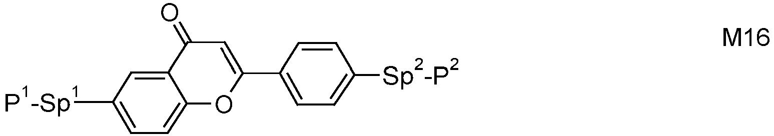 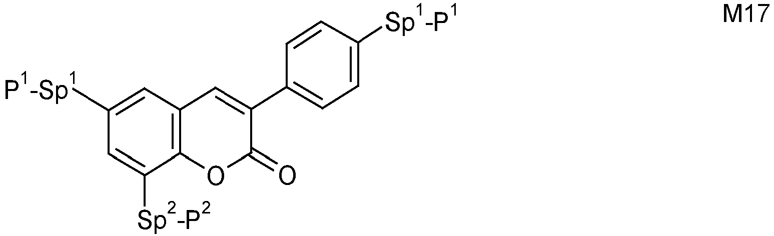 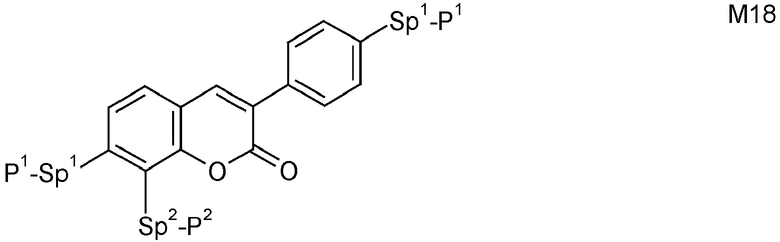 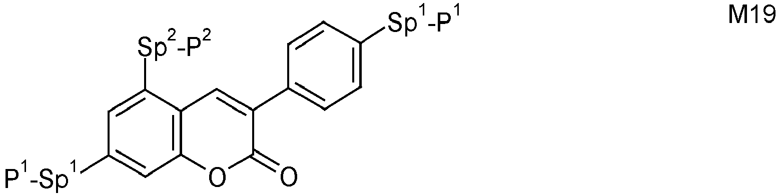 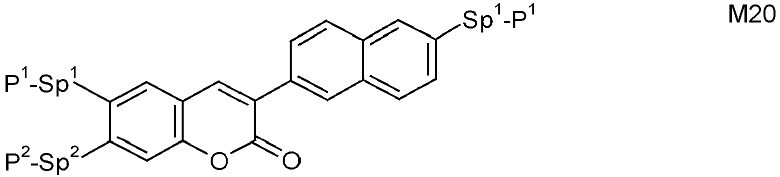 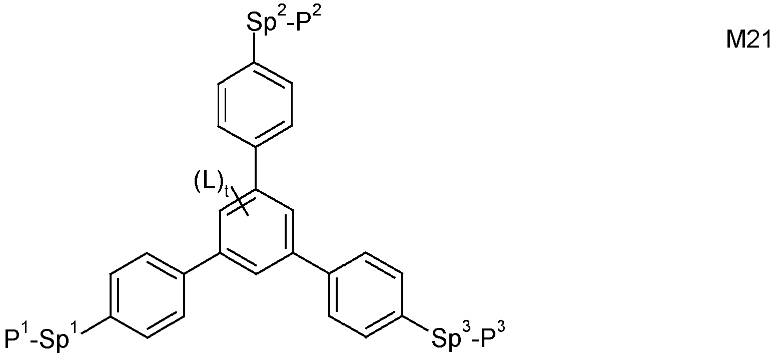 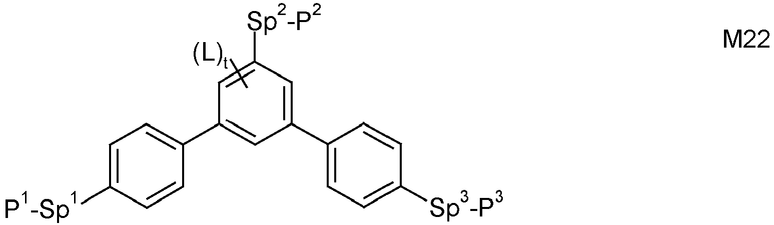 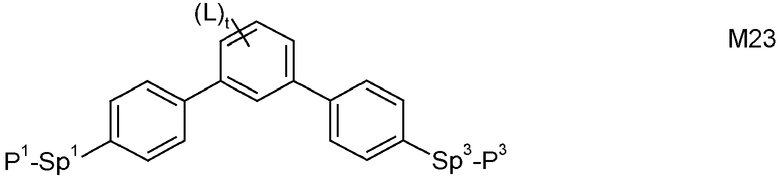 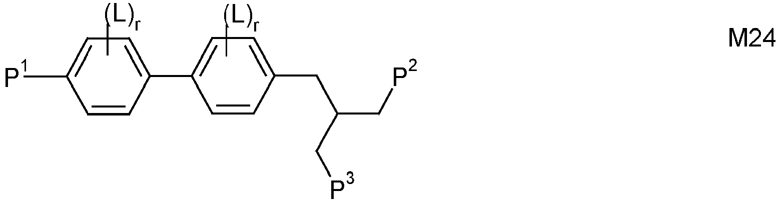 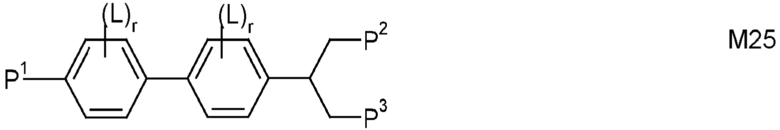 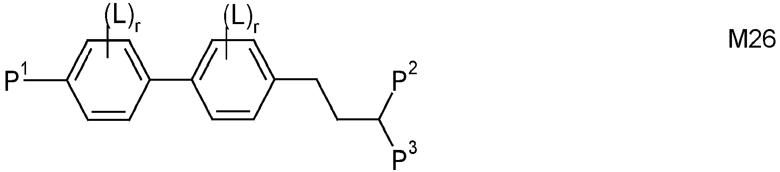 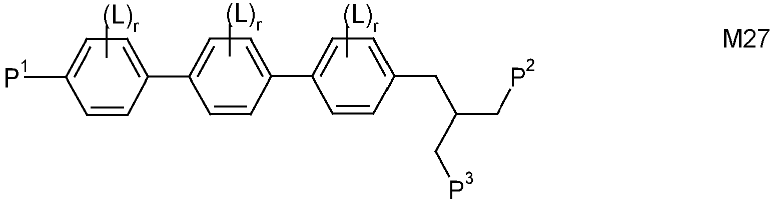 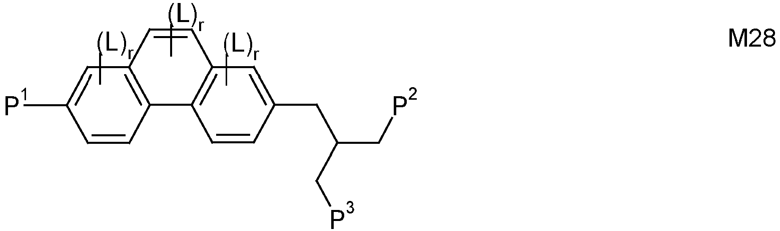 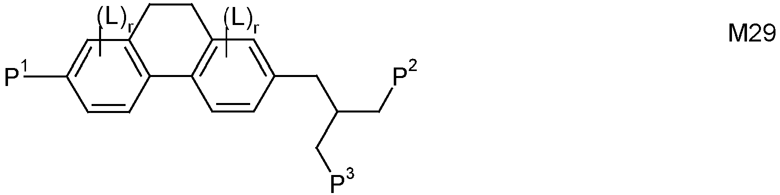 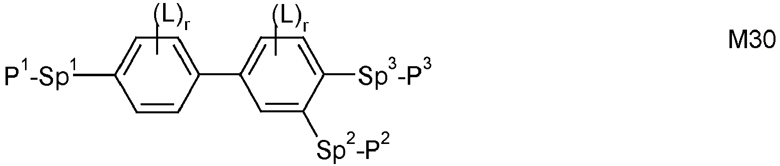 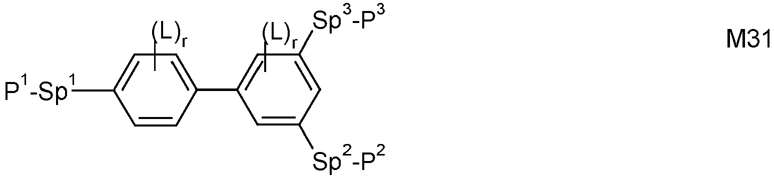 in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa}, preferably -(CH₂)ₚ₁-, -(CH2)ₚ₁-O-, -(CH2)ₚ₁-CO-O- or-(CH₂)ₚ₁-O-CO-O-, in which p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- R^{y} and R^{z}: H, F, CH₃ or CF₃,
- X1, X², X³: -CO-O-, -O-CO- or a single bond,
- Z^{M1}: -O-, -CO-, -C(R^{y}R^{z})- or -CF₂CF₂-,
- Z^{M2 ,} Z^{M3}: -CO-O-, -O-CO-, -CH₂O-, -OCH₂-, -CF₂O-, -OCF₂- or -(CH₂)n-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, For Cl,
- r: 0, 1, 2, 3 or 4,
- s: 0, 1, 2 or 3,
- t: 0, 1 or 2,
- x: 0 or 1.

Especially preferred are compounds of formulae M2 and M13.

Further preferred are trireaktive compounds M15 to M31, in particular M17, M18, M19, M22, M23, M24, M25, M30 and M31.

In the compounds of formulae M1 to M31 the group 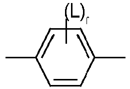 is preferably 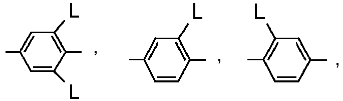 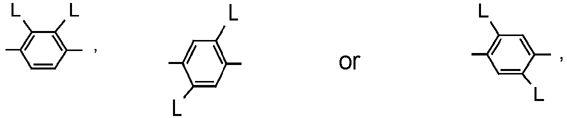 in which L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ or OCF₃, especially F or CH₃.

Preferred compounds of formulae M1 to M31 are those in which P¹, P² and P³ denote an acrylate, methacrylate, oxetane or epoxy group, very preferably an acrylate or methacrylate group.

Further preferred compounds of formulae M1 to M31 are those in which Sp¹, Sp² and Sp³ are a single bond.

Further preferred compounds of formulae M1 to M31 are those in which one of Sp¹, Sp² and Sp³ is a single bond and another one of Sp¹, Sp² and Sp³ is different from a single bond.

Further preferred compounds of formulae M1 to M31 are those in which those groups Sp¹, Sp² and Sp³ that are different from a single bond denote -(CH₂)ₛ₁-X"-, in which s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to liquid-crystalline media comprising one, two or three polymerisable compounds of formula M, preferably selected from formulae M1 to M31.

Further preferably the liquid-crystalline media according to the present invention comprise one or more polymerisable compounds selected from Table E below.

Preferably the proportion of polymerisable compounds in the liquid-crystalline medium, preferably selected from formula M and Table E, is from 0.01 to 5%, very preferably from 0.05 to 1%, most preferably from 0.1 to 0.5%.

It was observed that the addition of one or more polymerisable compounds to the liquid-crystalline medium, like those selected from formula M and Table E, leads to advantageous properties like fast response times. Such a liquid-crystalline medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the liquid-crystalline medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-CO-O-, CH₂=CW¹-CO-, 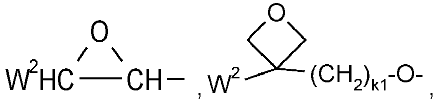 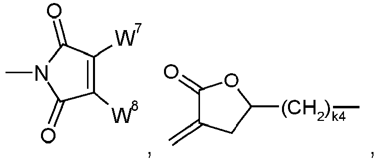 CH₂=CW²-(O)ₖ₃-, CW¹=CH-CO-(O)ₖ₃-, CW¹=CH-CO-NH-, CH₂=CW¹-CO-NH- , CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 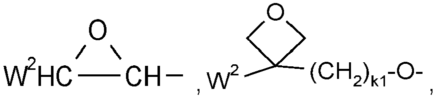 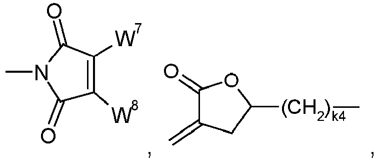 CH₂=CW²-O- CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

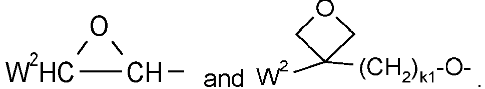

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp- conforms to the formula P-Sp"-X"-, in which
- Sp": denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by-O-, -S-, -NH-, -N(R⁰)--Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH-or -C≡C- in such a way that O and/or S atoms are not linked directly to one another,
- X": denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH2-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
- R⁰ and R⁰⁰: each, independently of one another, denote H or alkyl having 1 to 20 C atoms, and
- Y² and Y³: each, independently of one another, denote H, F, Cl or CN.

X" is preferably -O-, -S-, -CO-, -COO-, -OCO-, -O-COO-, -CO-NR⁰⁻, -NR⁰-CO-, -NR⁰-CO-NR⁰⁰- or a single bond.

Typical spacer groups Sp and -Sp"-X"- are, for example, -(CH₂)ₚ₁-, - (CH₂CH₂O)_{q1}-CH₂CH₂-, -CH2CH2-S-CH2CH2-, -CH2CH2-NH-CH2CH2- or - (SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the production of PSA displays, the polymerisable compounds contained in the liquid-crystalline medium are polymerised or crosslinked (if one compound contains two or more polymerisable groups) by in-situ polymerisation in the liquid-crystalline medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the liquid-crystalline media according to the invention at the same time as constantly high clearing points and high VHR values.

The use of liquid-crystalline media containing polymerisable compounds allows the rapid establishment of a particularly low pretilt angle in PSA displays. In particular, the liquid-crystalline media exhibit significantly shortened response times, in particular also the grey-shade response times, in PSA displays compared with the media from the prior art.

Preference is generally given to liquid-crystalline media which have a nematic liquid-crystalline phase, and preferably have no chiral liquid crystal phase.

The invention also relates to the use of a liquid-crystalline medium according to the present invention as described above and below for electro-optical purposes, in particular for the use is in shutter glasses, for 3D applications, in TN, PS-TN, STN, TN-TFT, OCB, IPS, PS-IPS, FFS, HB-FFS, PS-FFS, positive VA and positive PS-VA displays, and to electro-optical displays, in particular of the aforementioned types, containing a liquid-crystalline medium according to the present invention as described above and below, in particular a TN, PS-TN, STN, TN-TFT, OCB, IPS, PS-IPS, FFS, HB-FFS, PS-FFS, positive VA (vertically aligned) or positive PS-VA display.

The invention also relates to electro-optical displays, such as, for example, STN or MLC displays, having two plane-parallel outer plates, which, together with a frame, form a cell, integrated non-linear elements for switching individual pixels on the outer plates, and a nematic liquid-crystal mixture having positive dielectric anisotropy and high specific resistance located in the cell, wherein a nematic liquid-crystal mixture is a liquid-crystalline medium according to the present invention as described above and below.

The liquid-crystalline media according to the invention enable a significant broadening of the available parameter latitude. The achievable combinations of clearing point, viscosity at low temperature, thermal and UV stability and high optical anisotropy are far superior to previous materials from the prior art.

The liquid-crystalline media according to the invention, while retaining the nematic phase down to -20°C and preferably down to -30°C, particularly preferably down to -40°C, and the clearing point ≥ 75°C, preferably ≥ 80°C, at the same time allow rotational viscosities γ1 of ≤ 110 mPa·s, particularly preferably ≤ 100 mPa·s, to be achieved, enabling excellent MLC displays having fast response times to be achieved. The rotational viscosities are determined at 20°C.

The dielectric anisotropy Δε of the liquid-crystalline media according to the invention at 20°C and 1 kHz is preferably ≥ +1.5, more preferably from +1.5 to +10, more preferably from 2.0 to 7.0, particularly preferably from 2.2 to 4.7.

The birefringence Δn of the liquid-crystalline media according to the invention at 20°C is preferably from 0.080 to 0.130, very preferably from 0.090 to 0.110.

The rotational viscosity γ1 of the liquid-crystalline media according to the invention is preferably ≤ 80 mPa s, more preferably ≤ 70 mPa s, very preferably ≤ 60 mPa s.

The ratio γ₁/K₁₁ (in which γ1 is the rotational viscosity γ1 and K₁₁ is the elastic constant for splay deformation) of the liquid-crystalline media according to the invention is preferably ≤ 4.5 mPa·s/pN, very preferably ≤ 4.2 mPa·s/pN, most preferably ≤ 4.0 mPa·s/pN.

The nematic phase range of the liquid-crystalline media according to the invention preferably has a width of at least 90°, more preferably of at least 100°C, in particular at least 110°. This range preferably extends at least from -25° to +80°C.

It goes without saying that, through a suitable choice of the components of the liquid-crystalline media according to the invention, it is also possible for higher clearing points (for example above 100°C) to be achieved at higher threshold voltages or lower clearing points to be achieved at lower threshold voltages with retention of the other advantageous properties. At viscosities correspondingly increased only slightly, it is likewise possible to obtain liquid-crystalline media having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of liquid-crystalline media comprising cyano compounds. Through a suitable choice of the individual components and their proportions by weight, the person skilled in the art is able to set the birefringence necessary for a prespecified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that liquid-crystalline media according to the invention comprising compounds of the formulae I and II and/or III exhibit a significantly smaller decrease in the HR on UV exposure than analogous mixtures comprising cyanophenylcyclohexanes of the formula 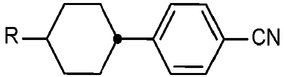 or esters of the formula 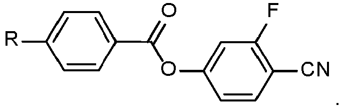 The light stability and UV stability of the liquid-crystalline media according to the invention are considerably better, i.e. they exhibit a significantly smaller decrease in the HR on exposure to light, heat or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the liquid-crystal parameters of the liquid-crystal layer.

The liquid-crystalline media which can be used in accordance with the invention are prepared in a manner conventional per se, for example by mixing one or more compounds of Claim 1 with one or more compounds of the formulae Y, B, IA, IV, V and VI or with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The liquid-crystalline media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0-15% of pleochroic dyes or chiral dopants can be added. Suitable stabilisers and dopants are mentioned below in Tables C and D.

In a preferred embodiment the liquid-crystalline media contain one or more chiral dopants, preferably in a concentration from 0.01 to 1% by weight, very preferably from 0.05 to 0.5% by weight. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the liquid-crystalline media contain a racemate of one or more chiral dopants, which are preferably selected from the chiral dopants mentioned in the previous paragraph.

In another preferred embodiment of the present invention the liquid-crystalline media contain one or more further stabilisers, preferably selected from Table D, very preferably of the following formula 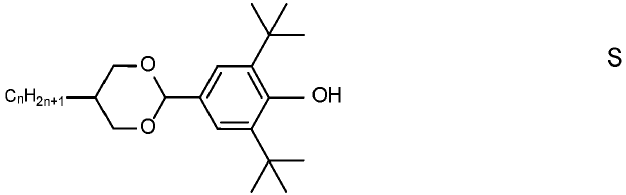 in which n is an integer from 1 to 6, preferably 3.

Preferably the proportion of stabilisers, like those of formula S, in the liquid-crystalline medium is from 10 to 500 ppm, very preferably from 20 to 100 ppm.

In another preferred embodiment the LC medium according to the present invention contains a self-aligning (SA) additive, preferably in a concentration of 0.1 to 2.5 %. An LC medium according to this preferred embodiment is especially suitable for use in polymer stabilised SA-FFS or SA-HB-FFS displays.

In a preferred embodiment the SA-FFS or SA-HB-FFS display according to the present invention does not contain a polyimide alignment layer. In another preferred embodiment the SA-FFS or SA-HB-FFS display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group. These polymerisable SA additives can be polymerised in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-FFS or SA-HB-FFS display according to the present invention contains one or more self-aligning additives selected from Table F below.

Furthermore, it is possible to add to the liquid-crystalline media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.
n the present invention and especially in the following examples, the structures of the mesogenic compounds are indicated by means of abbreviations also referred to as acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1 E-alkenyl, having n, m and I C atoms respectively, where n, m and l, independently of one another, denote an integer from 1 to 9, preferably 1 to 7, or from 2 to 9, preferably 2 to 7, respectively. CₒH₂ₒ₊₁ denotes straight-chain alkyl having 1 to 7, preferably 1 to 4, C atoms, or branched alkyl having 1 to 7, preferably 1 to 4, C atoms.

Table A lists the codes used for the ring elements of the core structures of the compounds, while Table C shows the linking groups. Table C gives the meanings of the codes for the left-hand or right-hand end groups. Table D shows illustrative structures of compounds with their respective abbreviations.

**Table A: Ring elements**

| | | | |
|---|---|---|---|
| **C** | 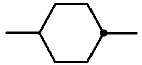 | | |
| **D** | 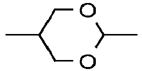 | Dl | 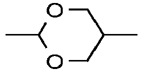 |
| **A** | 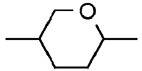 | **Al** | 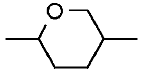 |
| **P** | 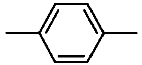 | | |
| **G** | 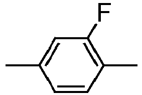 | **Gl** | 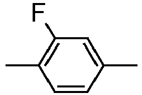 |
| **U** | 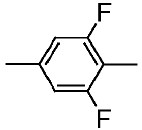 | **Ul** | 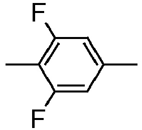 |
| **Y** | 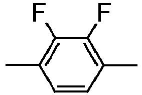 | | |
| **P(F,** CI)Y | 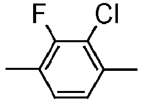 | **P(Cl,F)Y** | 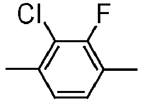 |
| **np** | 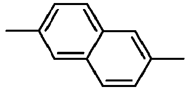 | | |
| **n3f** | 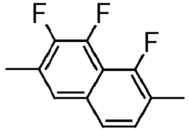 | **nN3fl** | 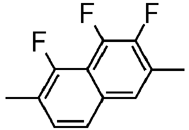 |
| **th** | 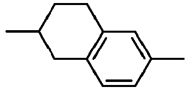 | thl | 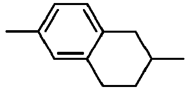 |
| **tH2f** | 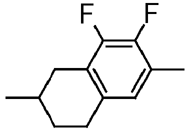 | **tH2fl** | 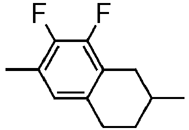 |
| **o2f** | 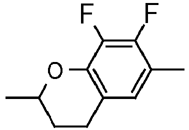 | **o2fl** | 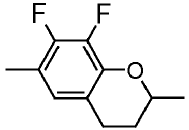 |
| **dh** | 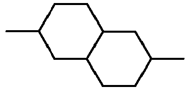 | | |
| **B** | 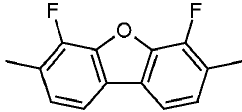 | **B(S)** | 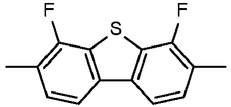 |
| **Bh** | 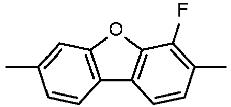 | **Bh(S)** | 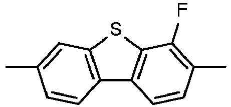 |
| **O** | 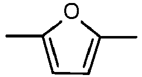 | **S** | 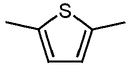 |
| **K** | 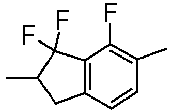 | **Kl** | 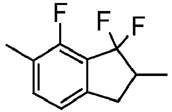 |
| **L** | 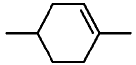 | **Ll** | 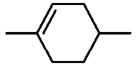 |
| **F** | 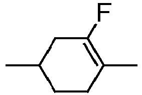 | **Fl** | 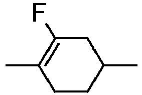 |

**Table B: Linking groups**

| | | | |
|---|---|---|---|
| **E** | -CH₂CH₂- | Z | -CO-O- |
| **V** | -CH=CH- | Zl | -O-CO- |
| **X** | -CF=CH- | **O** | -CH₂-O- |
| **Xl** | -CH=CF- | **Ol** | -O-CH₂- |
| **B** | -CF=CF- | **Q** | -CF₂-O- |
| **T** | -C≡C- | **Ql** | -O-CF₂- |
| **W** | -CF₂CF₂- | | |

**Table C: End groups**

| **Left-hand side** | | **Right-hand side** | |
|---|---|---|---|
| **Use alone** | | | |
| **-n-** | CₙH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| | | | |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Use together with others** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...Zl...-** | -O-CO- | **-...Zl...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are place-holders for other abbreviations from this table.
The following table shows illustrative structures together with their respective abbreviations. These are shown in order to illustrate the meaning of the rules for the abbreviations. They furthermore represent compounds which are preferably used.

**Table D: Illustrative structures**

| |
|---|
| The illustrative structures show compounds which are particularly preferably employed. |
| 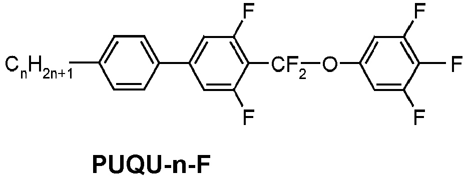 |
| 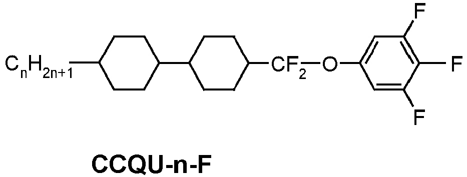 |
| 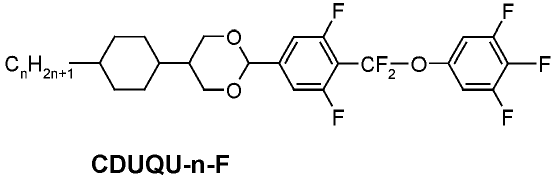 |
| 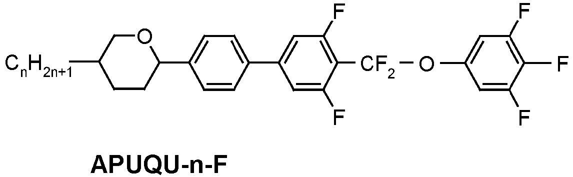 |
| 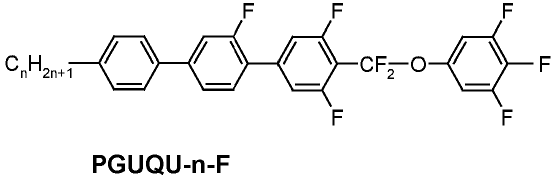 |
| 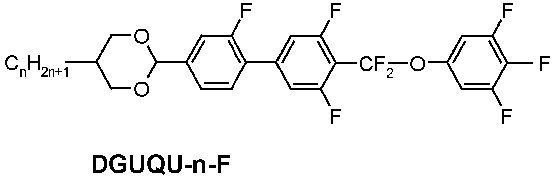 |
| 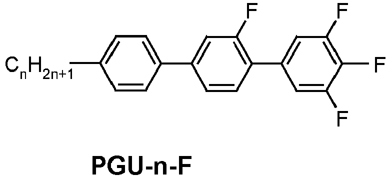 |
| 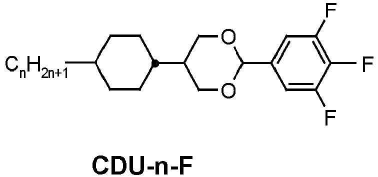 |
| 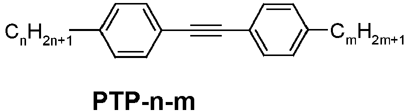 |
| 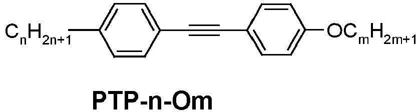 |
| 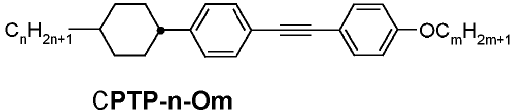 |
| 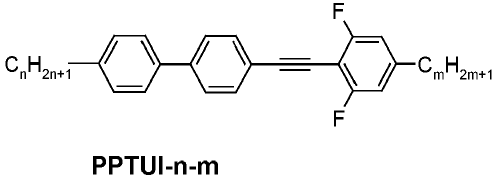 |
| 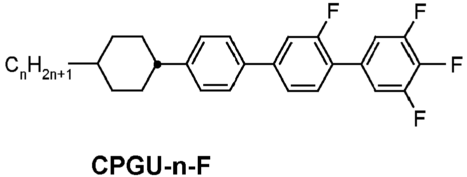 |
| 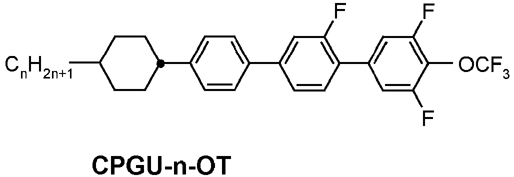 |
| 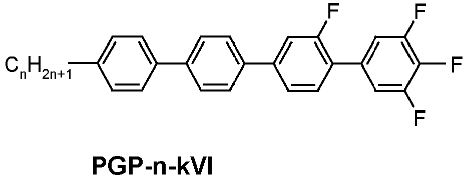 |
| 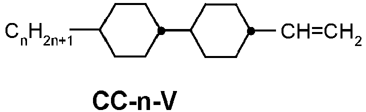 |
| 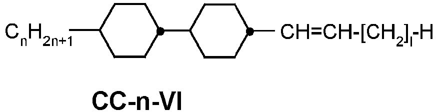 |
| 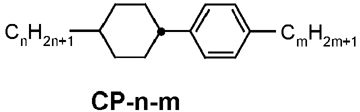 |
| 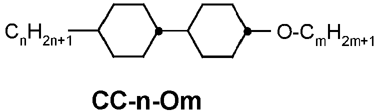 |
| 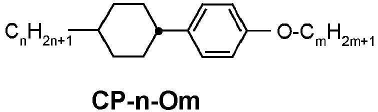 |
| 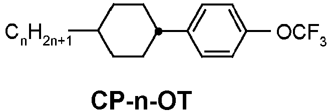 |
| 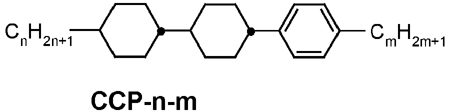 |
| 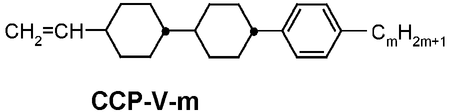 |
| 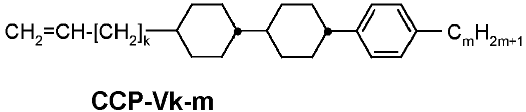 |
| 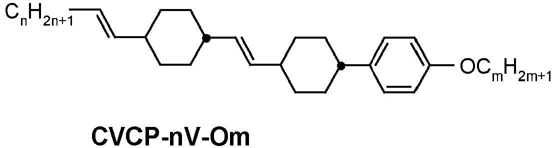 |
| 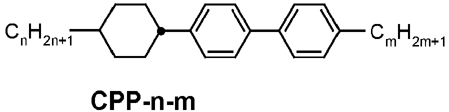 |
| 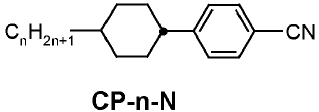 |
| 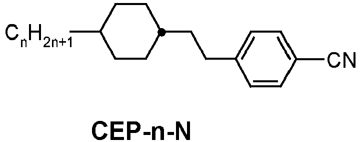 |
| 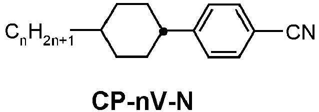 |
| 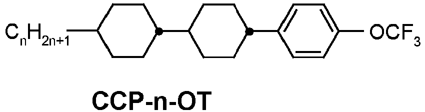 |
| 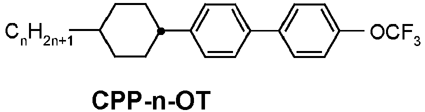 |
| 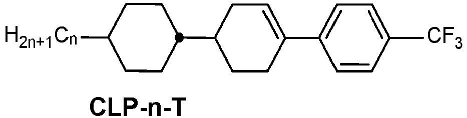 |
| 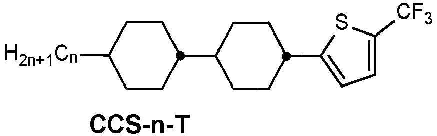 |
| 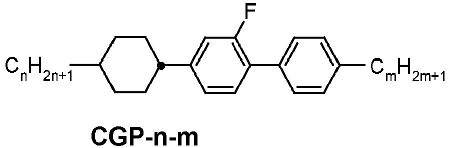 |
| 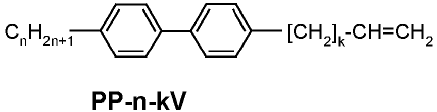 |
| 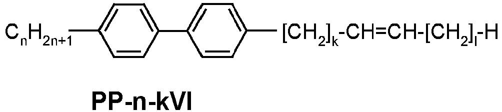 |
| 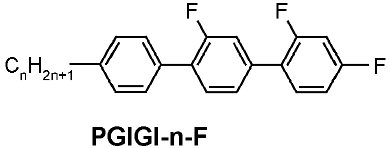 |
| 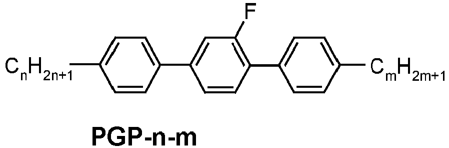 |
| 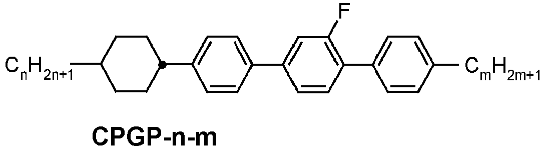 |
| 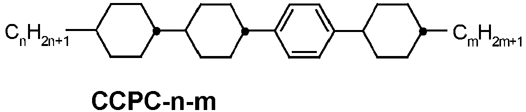 |
| 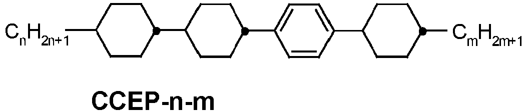 |
| 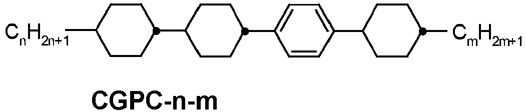 |
| 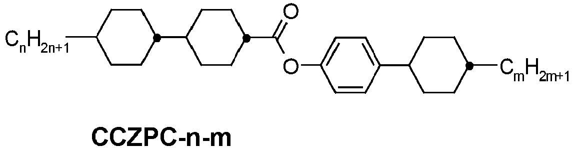 |
| 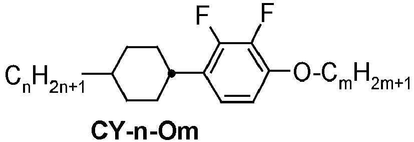 |
| 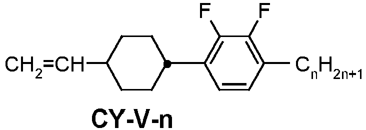 |
| 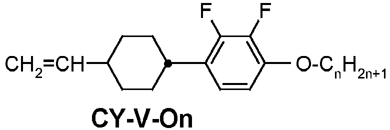 |
| 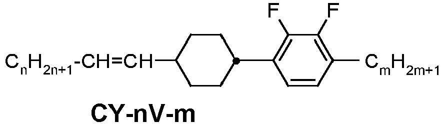 |
| 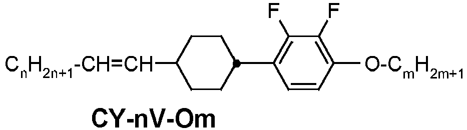 |
| 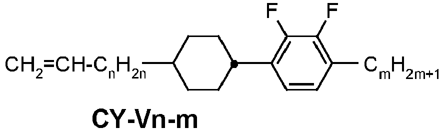 |
| 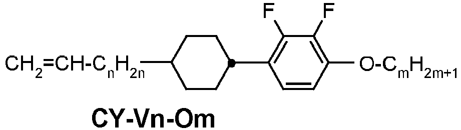 |
| 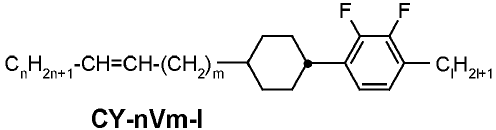 |
| 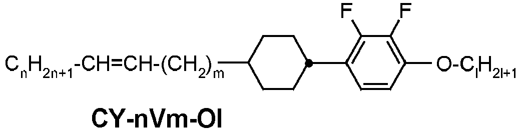 |
| 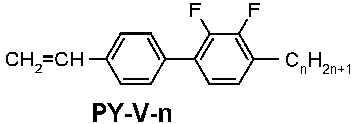 |
| 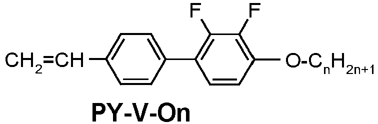 |
| 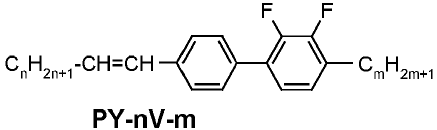 |
| 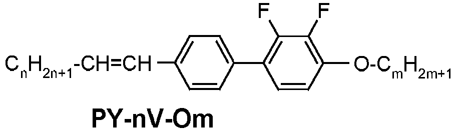 |
| 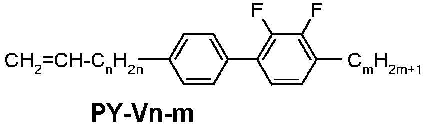 |
| 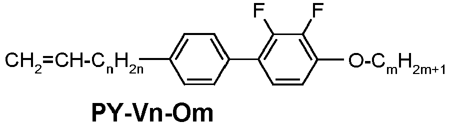 |
| 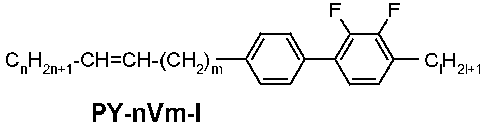 |
| 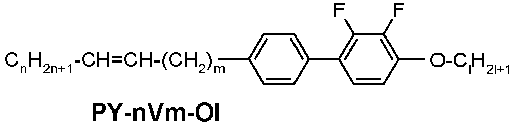 |
| 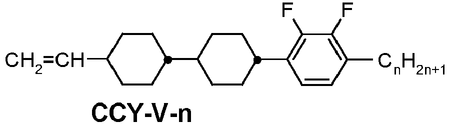 |
| 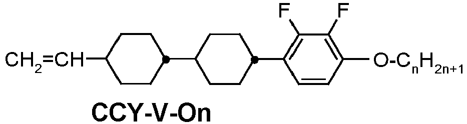 |
| 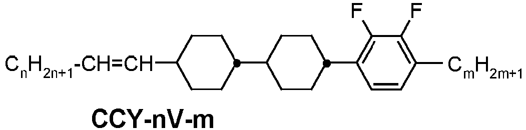 |
| 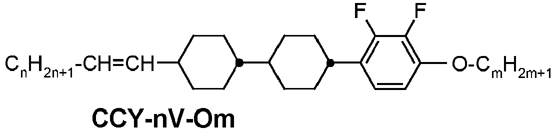 |
| 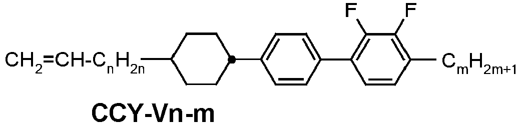 |
| 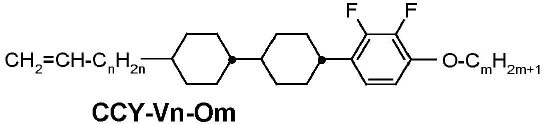 |
| 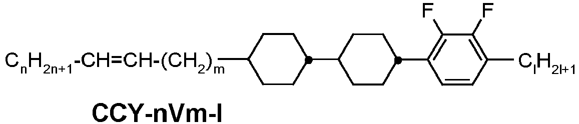 |
| 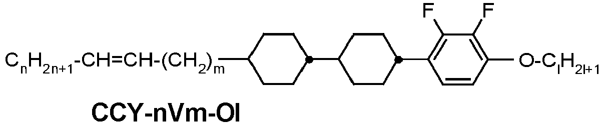 |
| 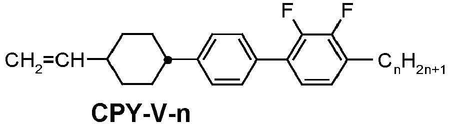 |
| 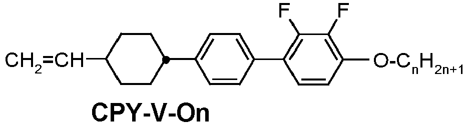 |
| 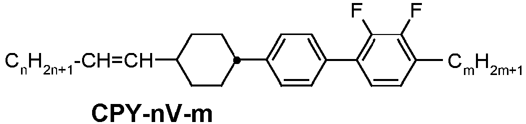 |
| 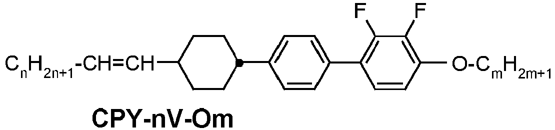 |
| 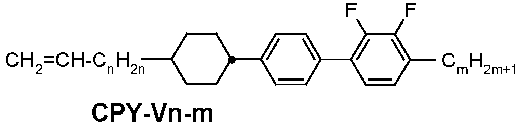 |
| 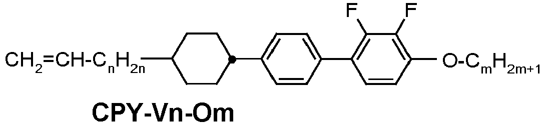 |
| 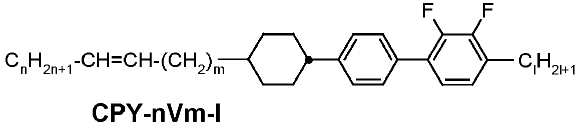 |
| 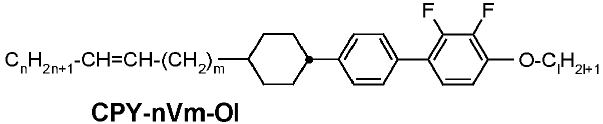 |
| 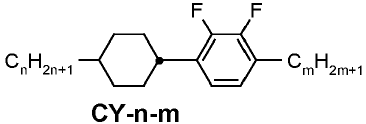 |
| 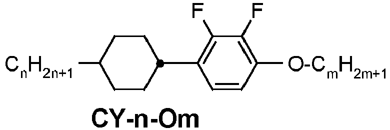 |
| 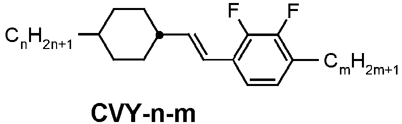 |
| 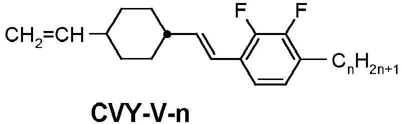 |
| 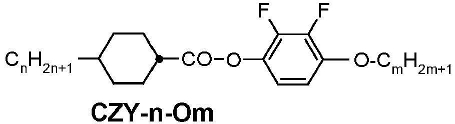 |
| 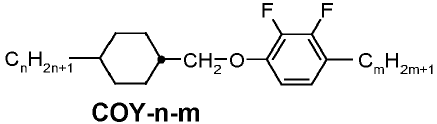 |
| 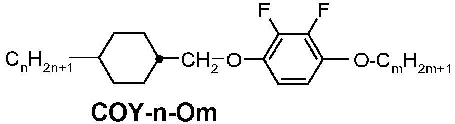 |
| 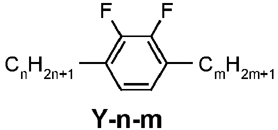 |
| 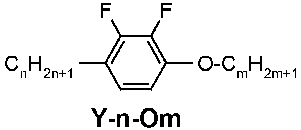 |
| 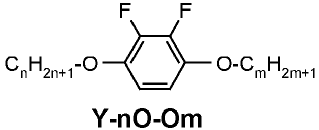 |
| 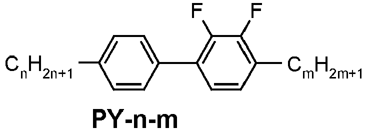 |
| 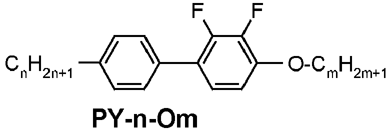 |
| 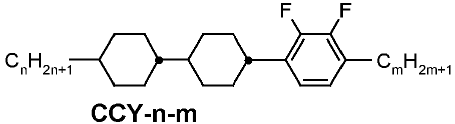 |
| 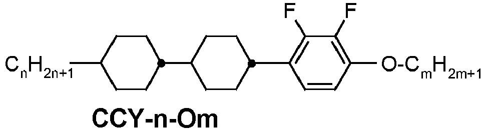 |
| 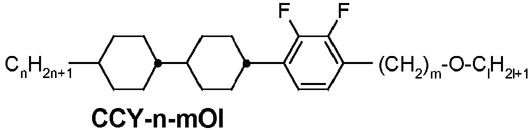 |
| 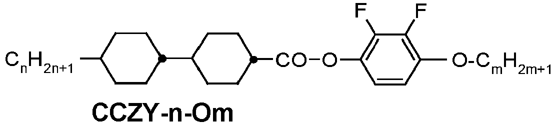 |
| 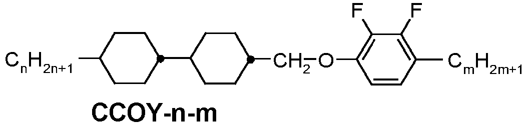 |
| 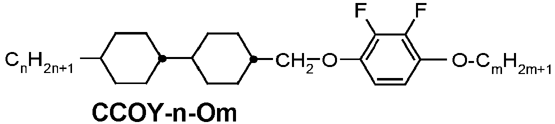 |
| 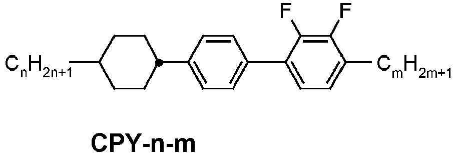 |
| 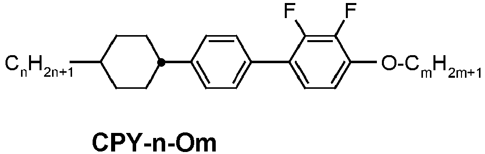 |
| 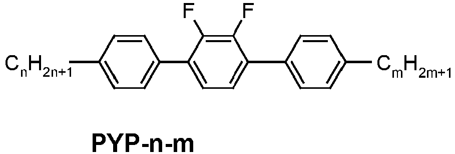 |
| 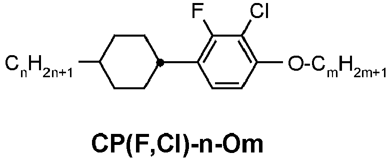 |
| 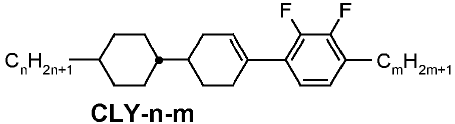 |
| 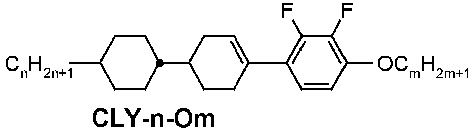 |

**Table E**

| | |
|---|---|
| Table E indicates possible dopants which are generally added to the liquid-crystalline media according to the invention. The liquid-crystalline media | |
| preferably comprise 0-10% by weight, in particular 0.01-5% by weight and particularly preferably 0.01-3% by weight of dopants. | |
| 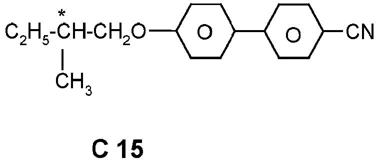 | 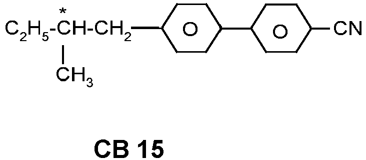 |
| 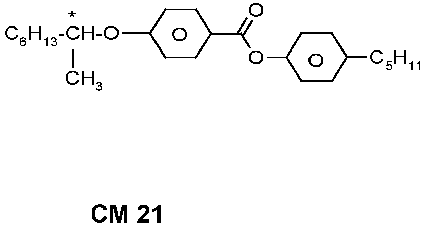 | 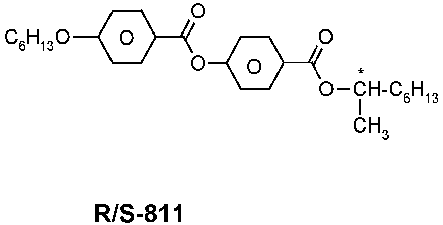 |
| 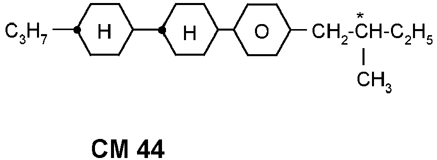 | 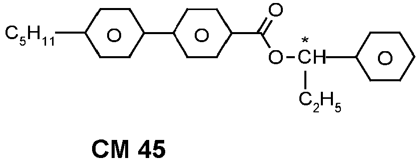 |
| 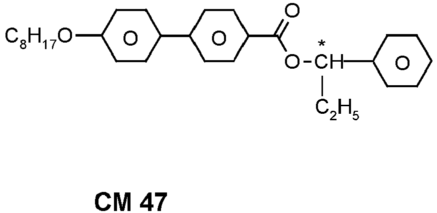 | 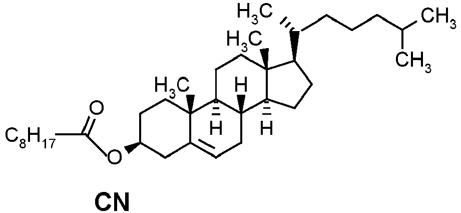 |
| 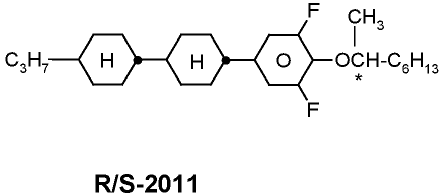 | 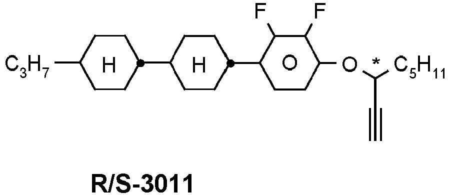 |
| 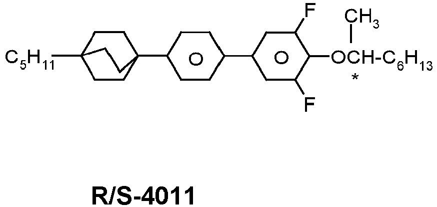 | 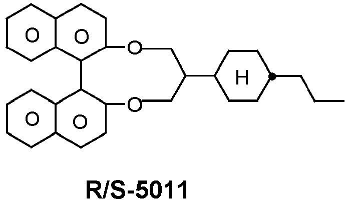 |
| 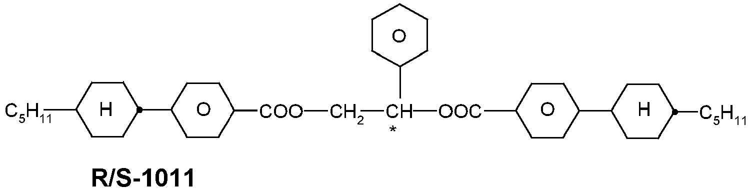 | |

**Table F**

| | |
|---|---|
| Stabilisers, which can additionally be added, for example, to the liquid-crystalline media according to the invention in amounts of 0-10% by weight, are mentioned below. | |
| 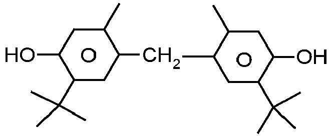 | 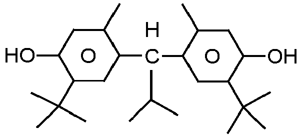 |
| 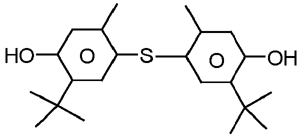 | 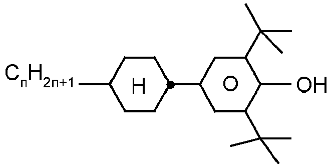 |
| | n = 1, 2, 3, 4, 5, 6 or 7 |
| 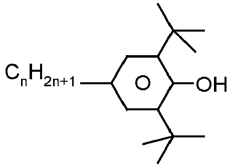 | 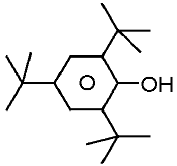 |
| n = 1, 2, 3, 4, 5, 6 or 7 | |
| 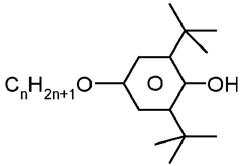 | 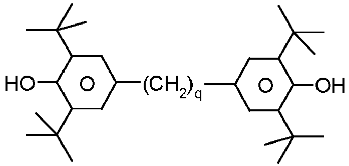 |
| n = 1, 2, 3, 4, 5, 6 or 7 | q = 1,2,3,4,5,6 or 7 |
| 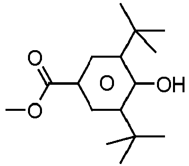 | 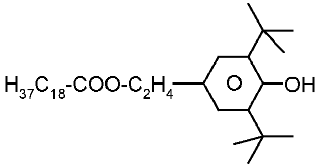 |
| 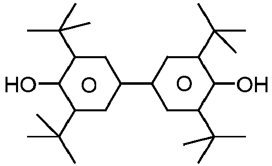 | 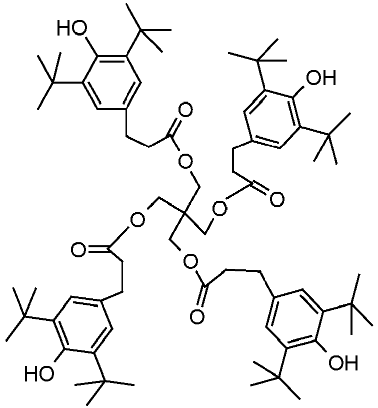 |
| 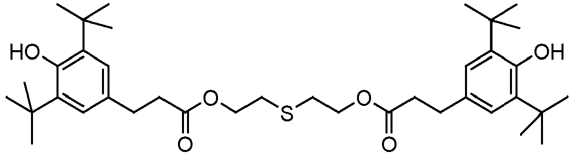 | |
| 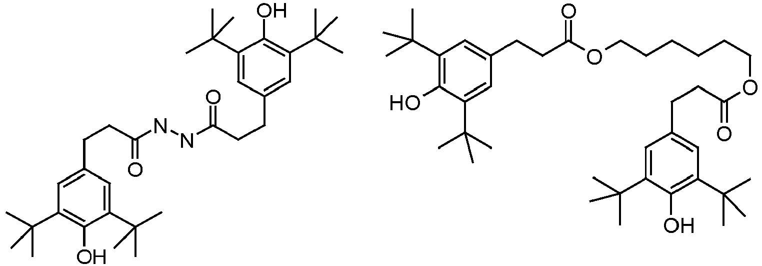 | |
| 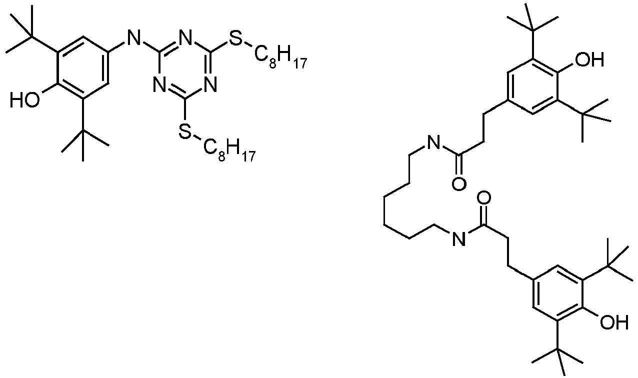 | |
| 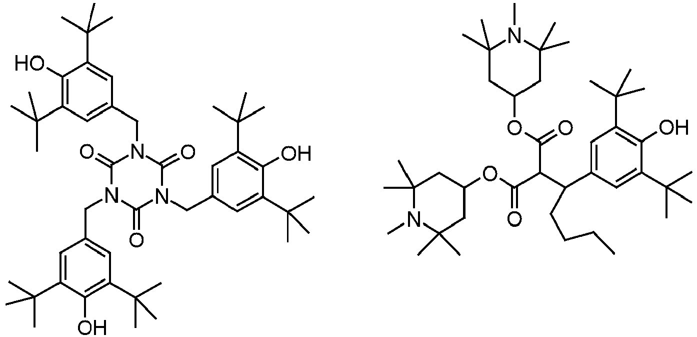 | |
| 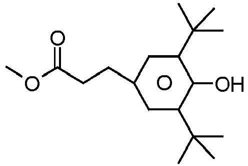 | 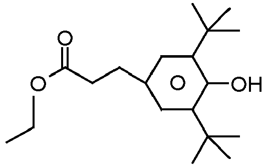 |
| 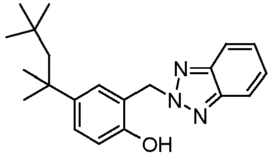 | 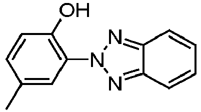 |
| 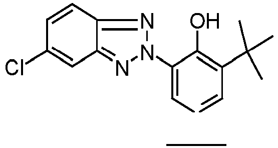 | 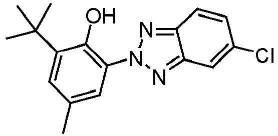 |
| 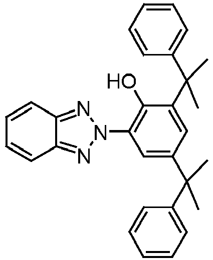 | 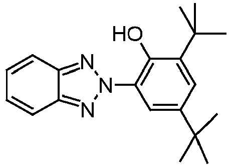 |
| 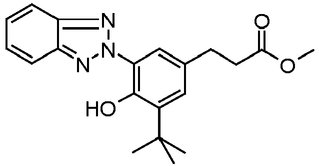 | 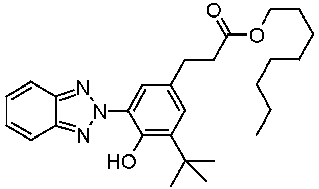 |
| 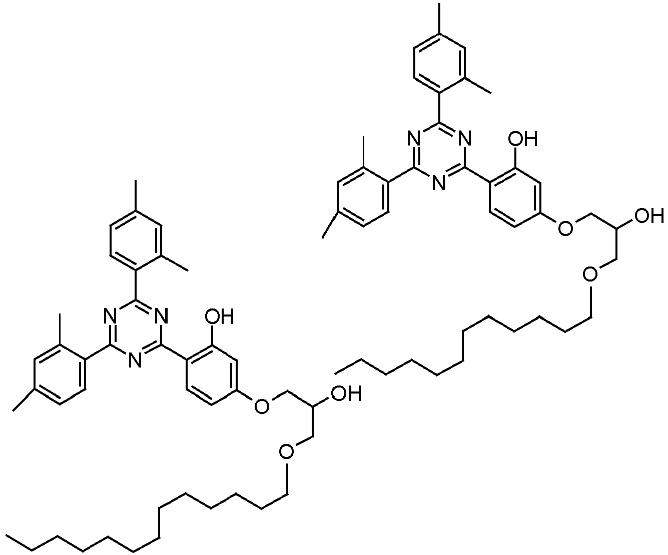 | |
| 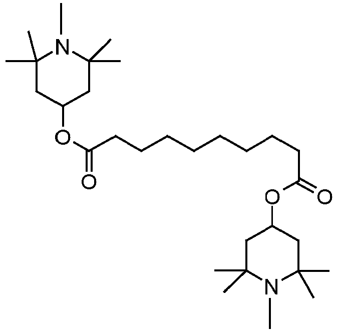 | |
| 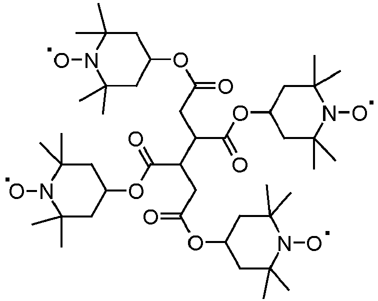 | |
| 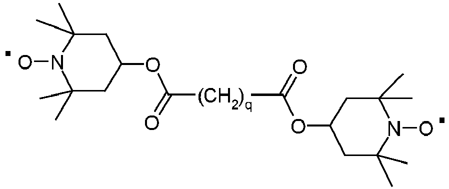 | |
| q = 1, 2, 3, 4, 5, 6, 7, 8, 9 or 10 | |

**Table G**

| |
|---|
| Table G shows illustrative reactive mesogenic compounds (RMs) which can be used in the liquid-crystalline media in accordance with the present invention. |
| 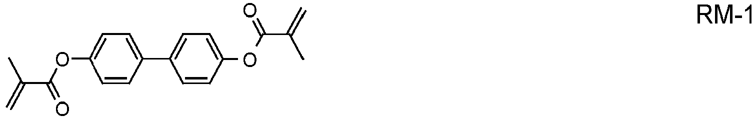 |
| 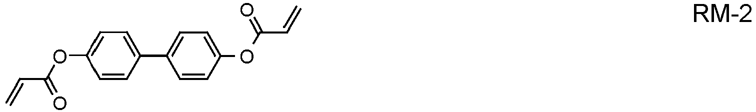 |
| 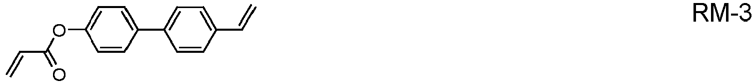 |
| 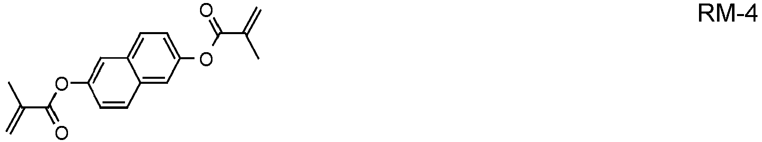 |
| 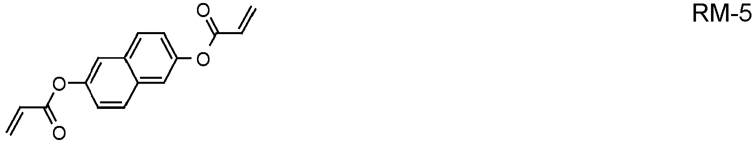 |
| 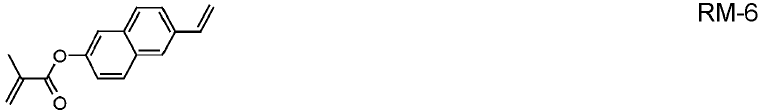 |
| 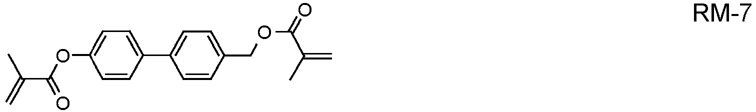 |
| 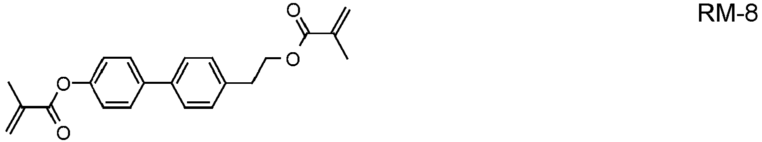 |
| 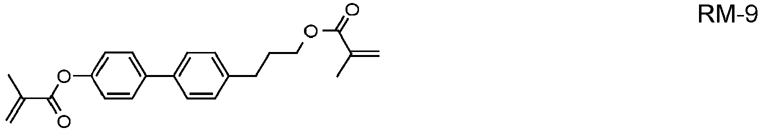 |
| 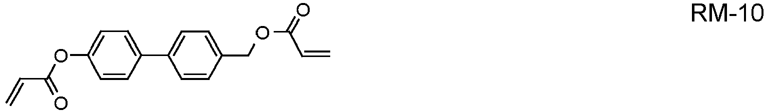 |
| 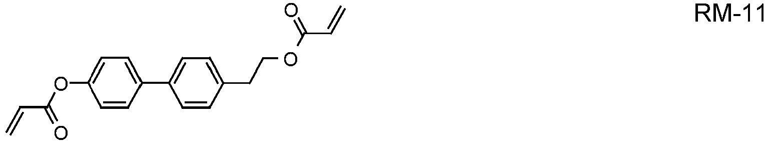 |
| 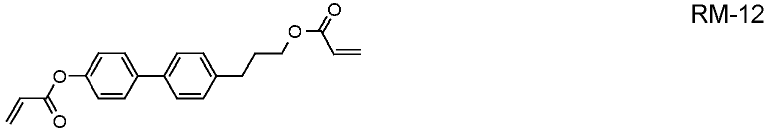 |
| 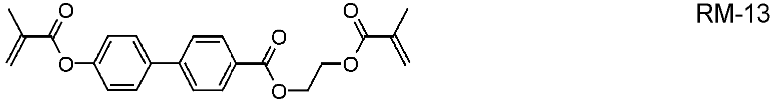 |
| 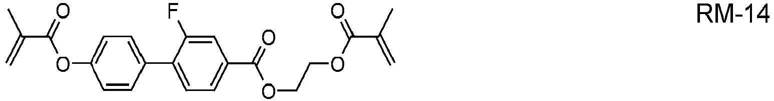 |
| 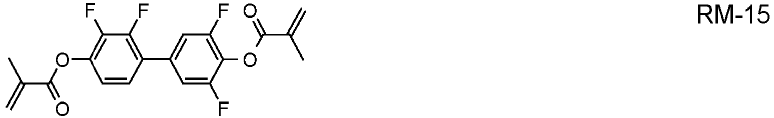 |
| 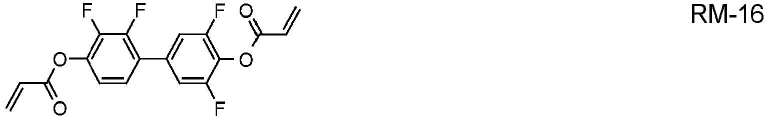 |
| 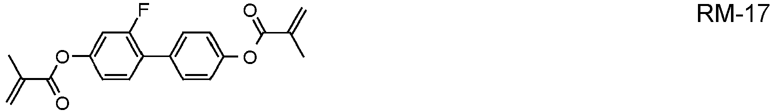 |
| 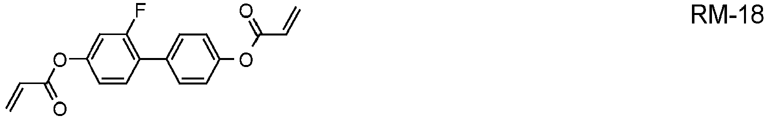 |
| 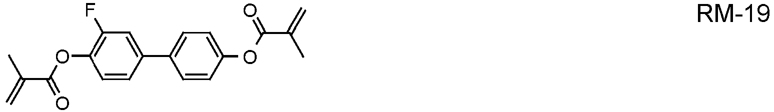 |
| 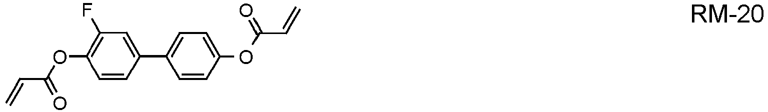 |
| 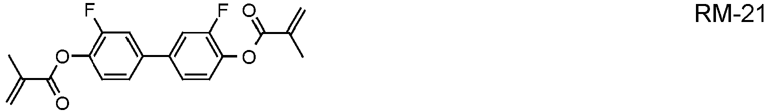 |
| 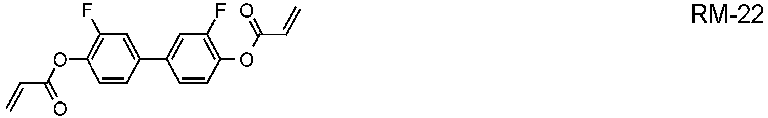 |
| 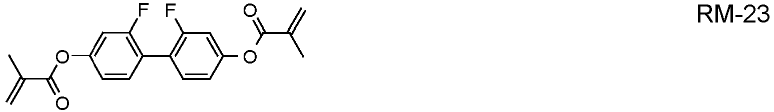 |
| 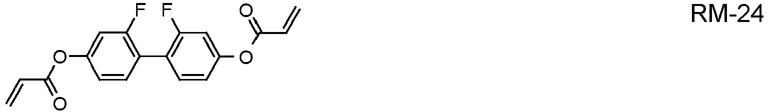 |
| 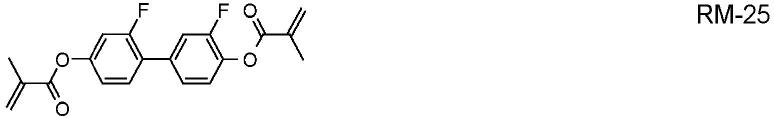 |
| 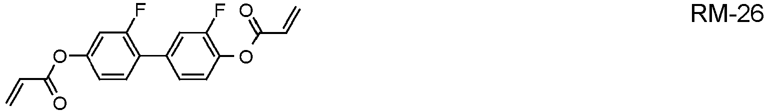 |
| 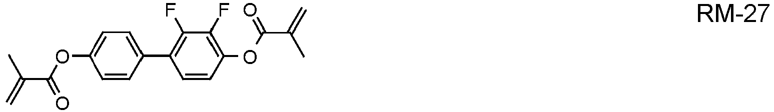 |
| 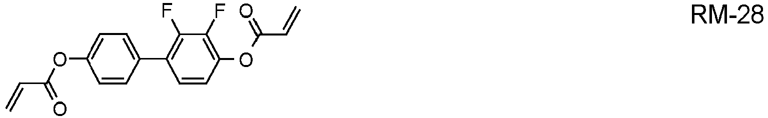 |
| 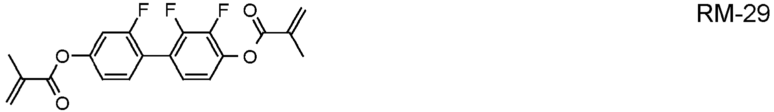 |
| 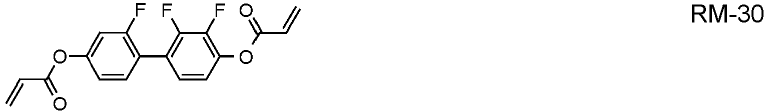 |
| 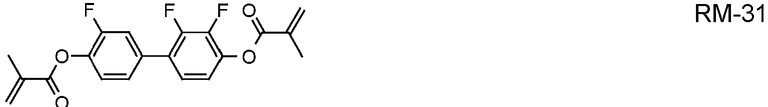 |
| 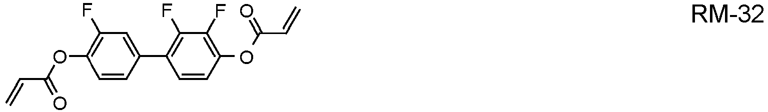 |
| 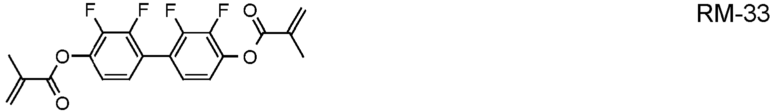 |
| 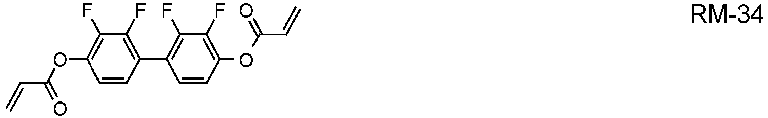 |
| 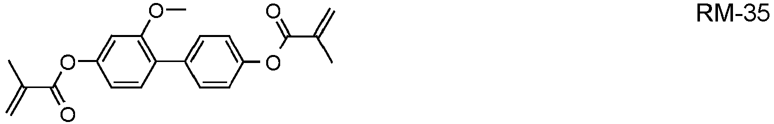 |
| 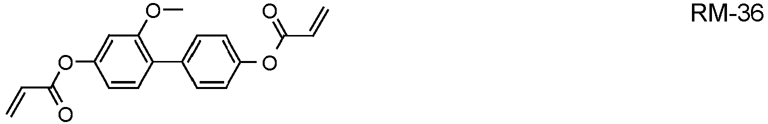 |
| 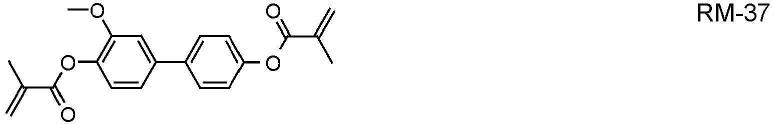 |
| 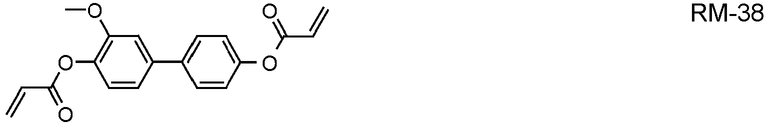 |
| 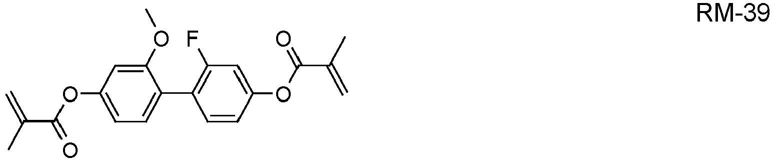 |
| 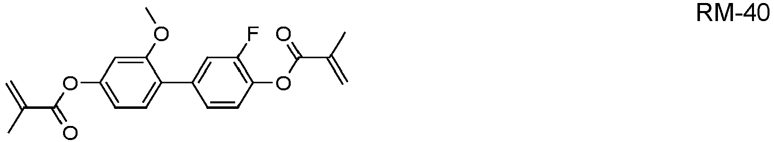 |
| 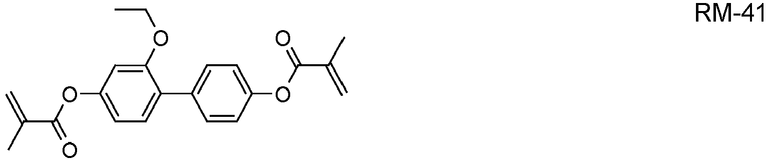 |
| 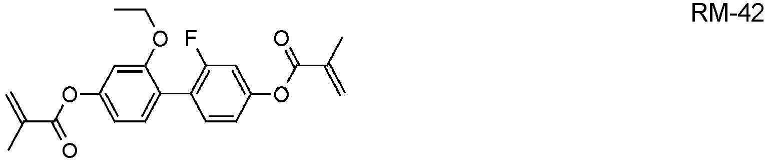 |
| 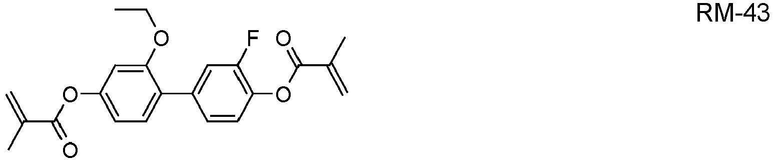 |
| 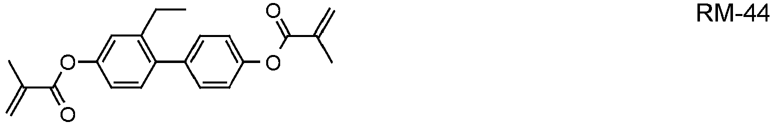 |
| 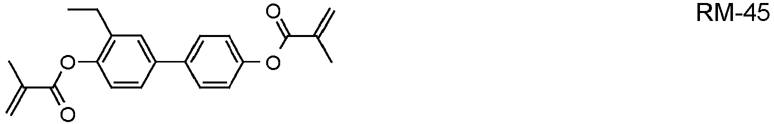 |
| 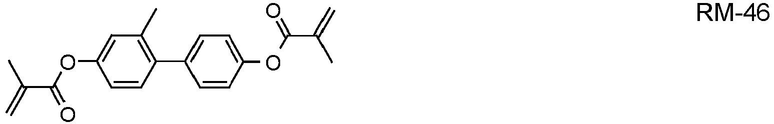 |
| 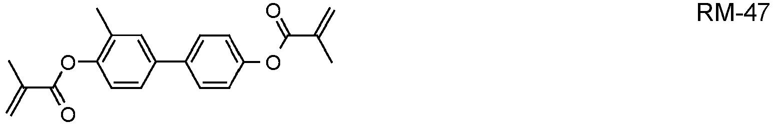 |
| 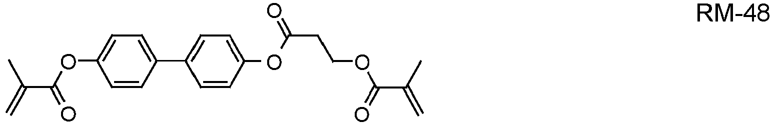 |
| 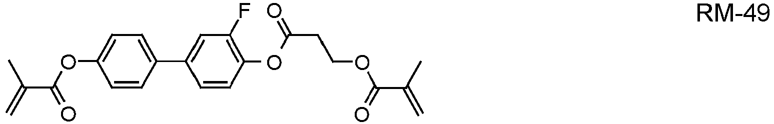 |
| 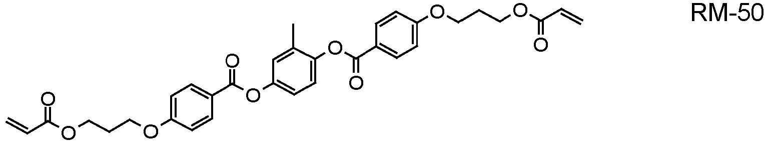 |
| 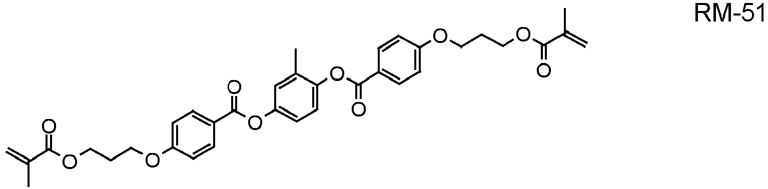 |
| 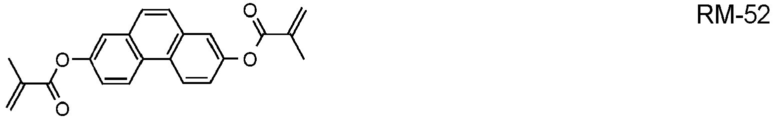 |
| 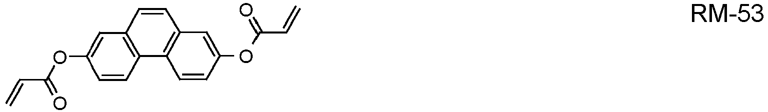 |
| 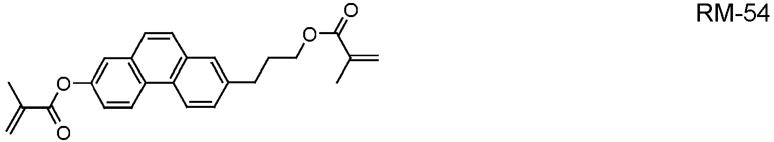 |
| 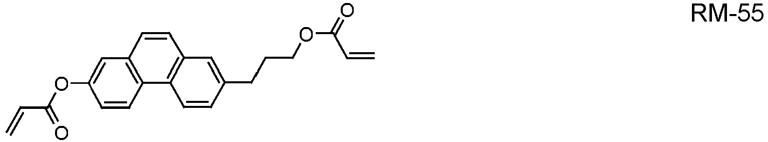 |
| 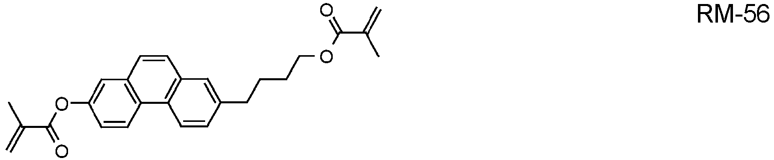 |
| 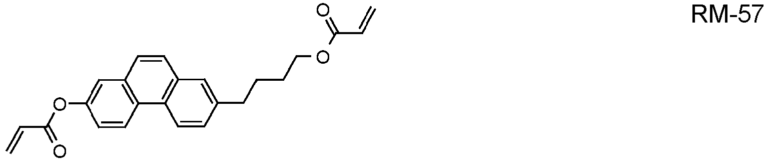 |
| 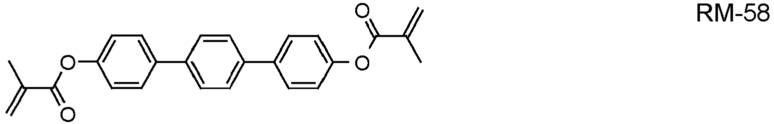 |
| 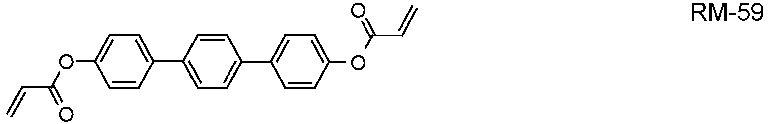 |
| 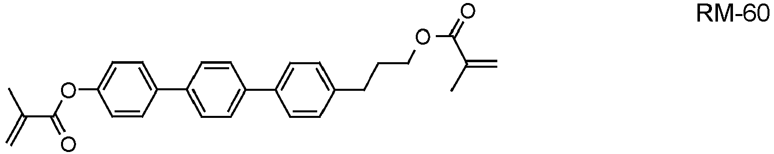 |
| 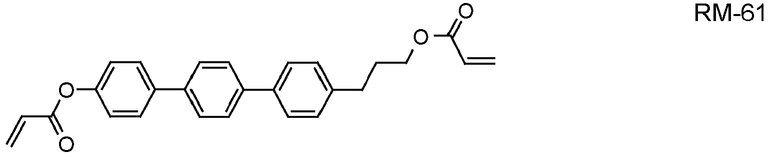 |
| 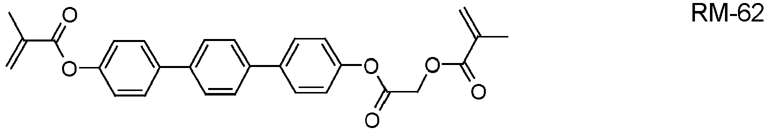 |
| 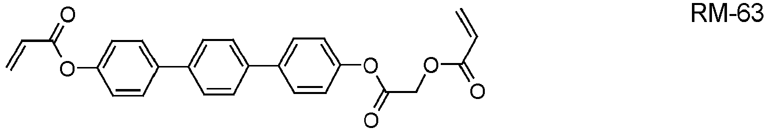 |
| 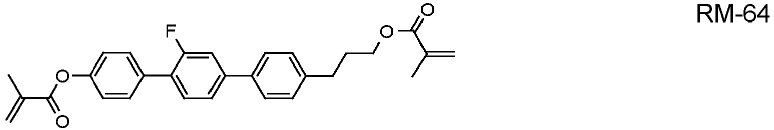 |
| 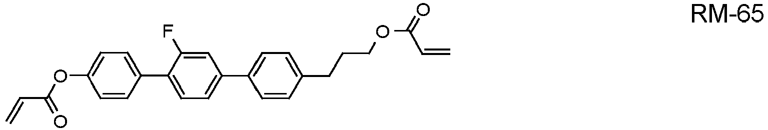 |
| 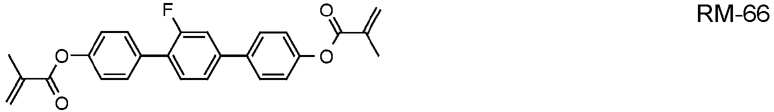 |
| 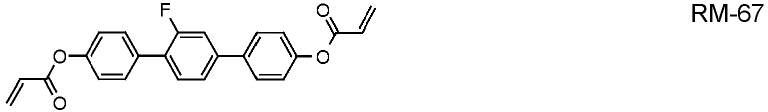 |
| 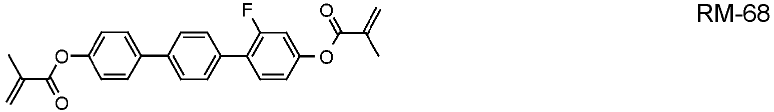 |
| 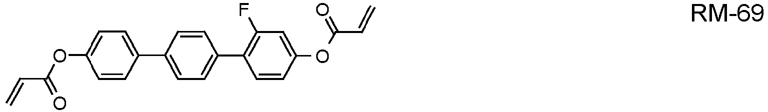 |
| 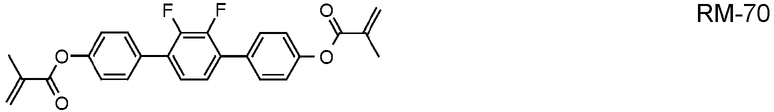 |
| 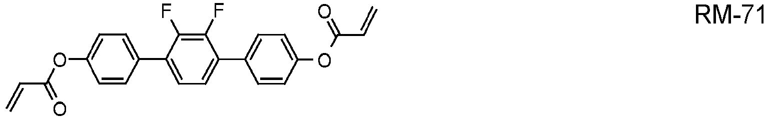 |
| 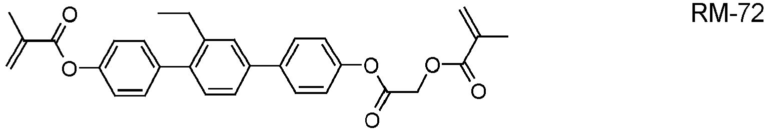 |
| 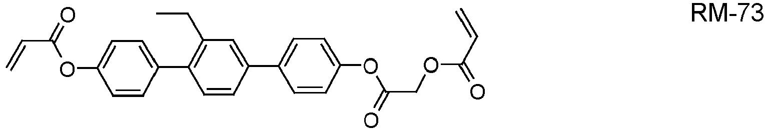 |
| 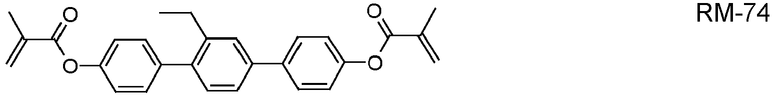 |
| 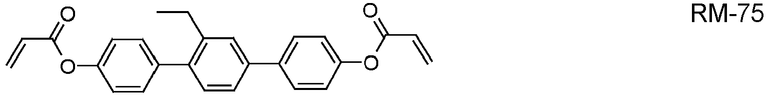 |
| 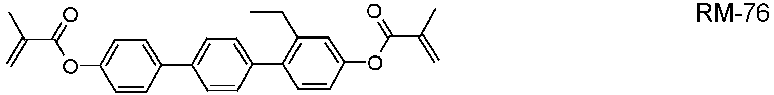 |
| 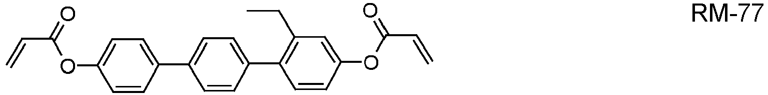 |
| 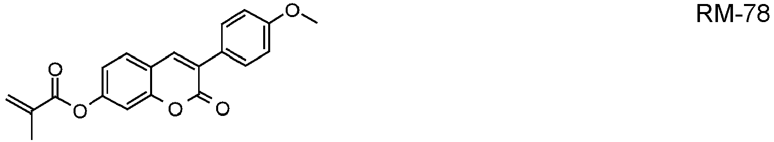 |
| 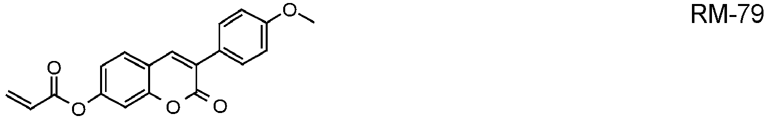 |
| 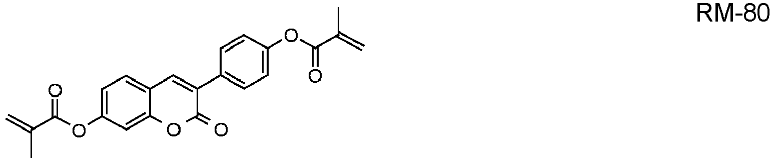 |
| 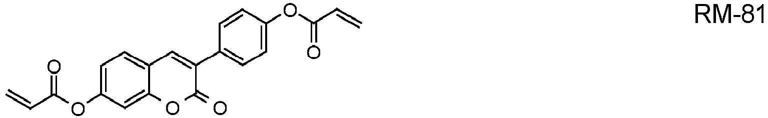 |
| 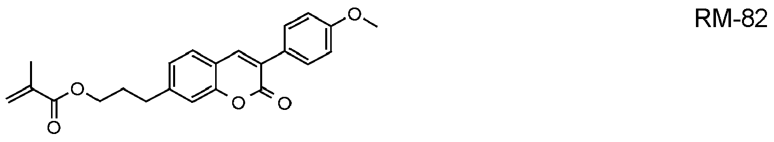 |
| 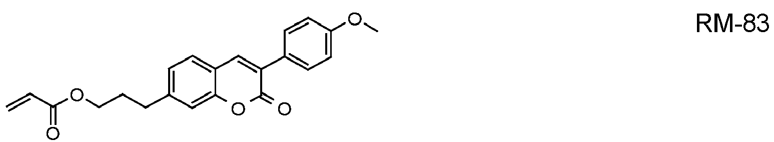 |
| 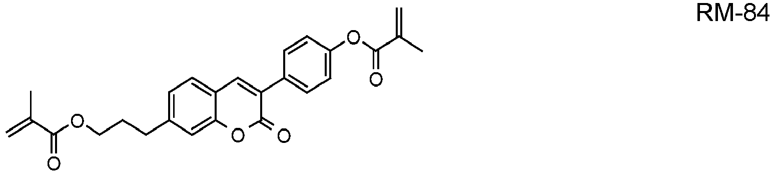 |
| 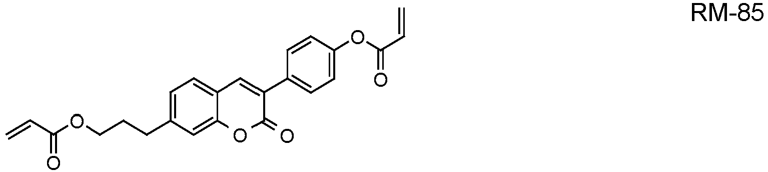 |
| 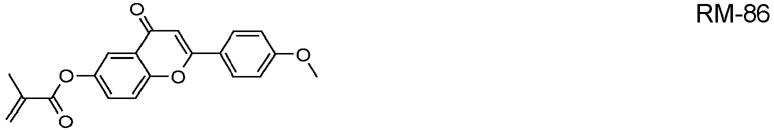 |
| 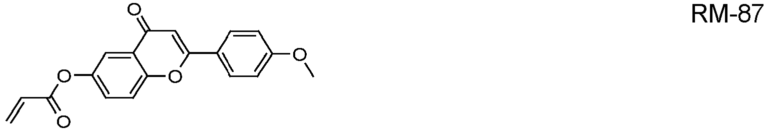 |
| 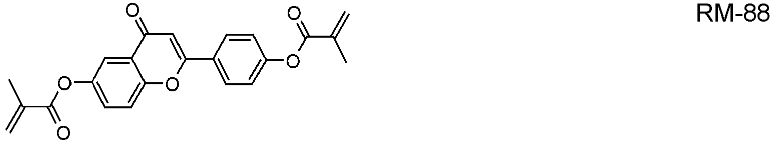 |
| 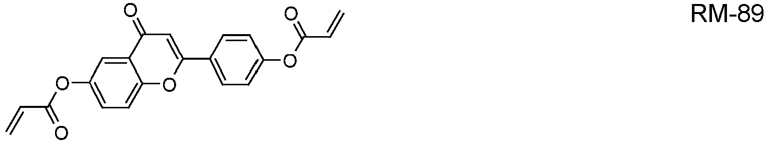 |
| 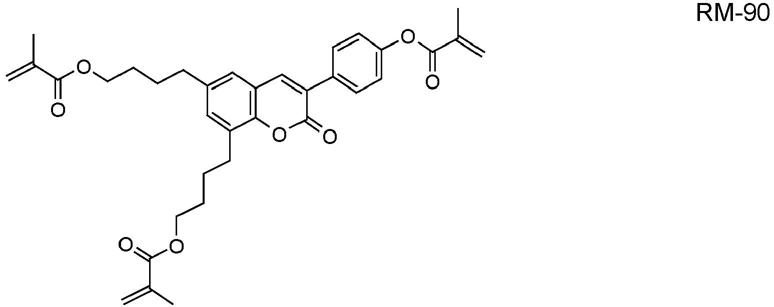 |
| 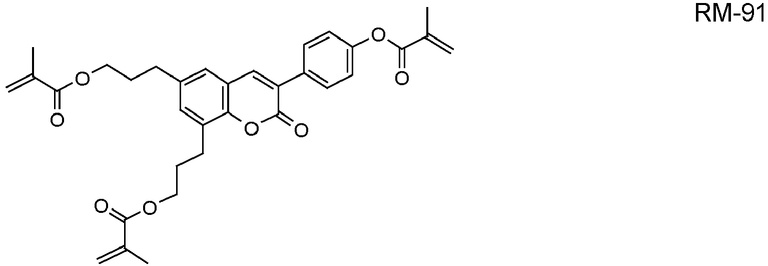 |
| 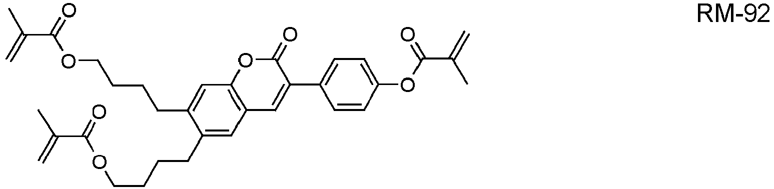 |
| 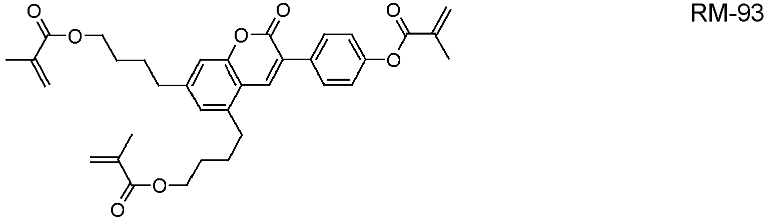 |
| 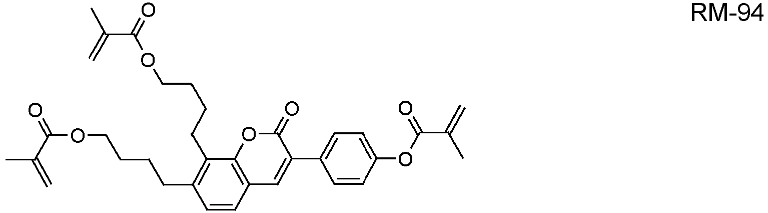 |
| 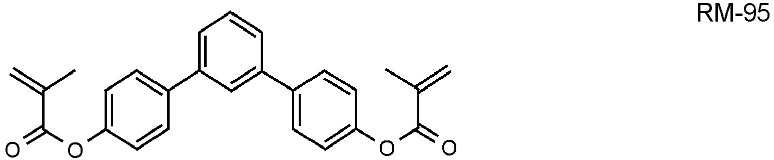 |
| 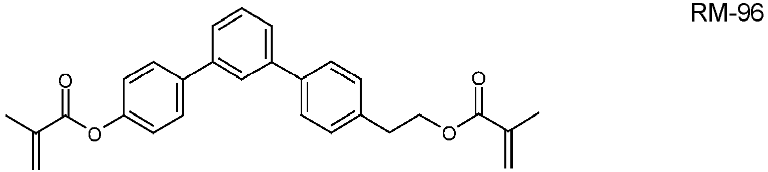 |
| 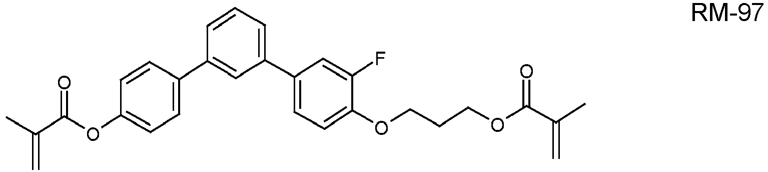 |
| 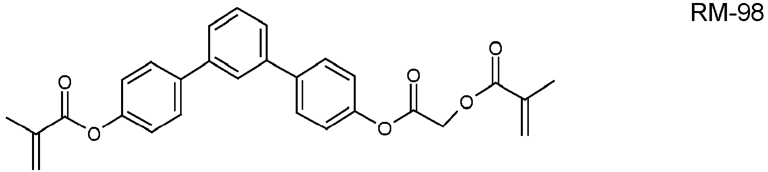 |
| 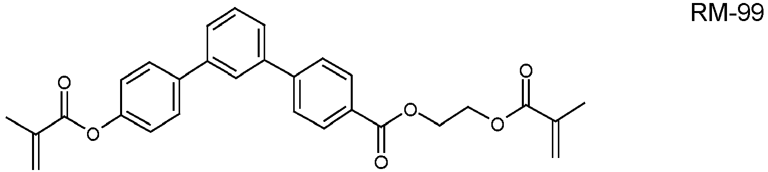 |
| 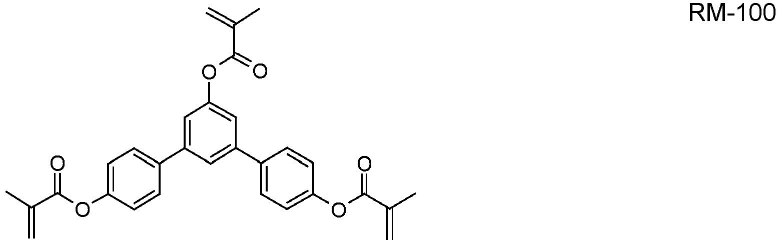 |
| 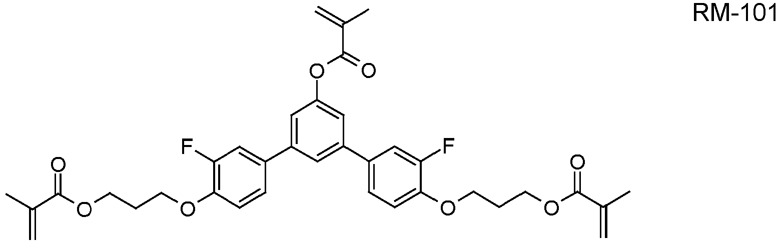 |
| 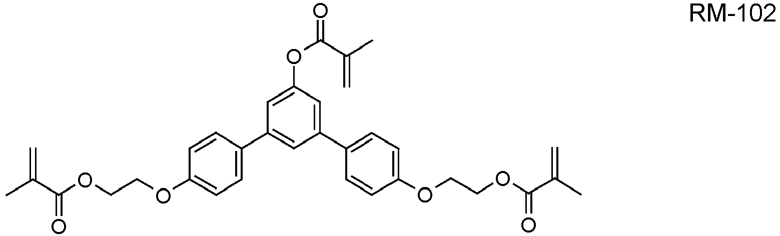 |
| 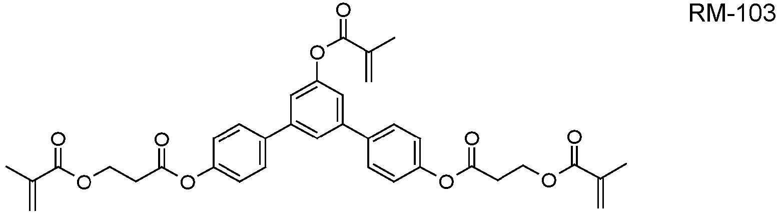 |
| 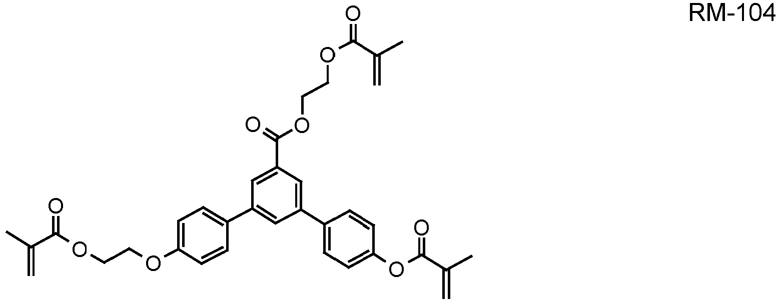 |
| 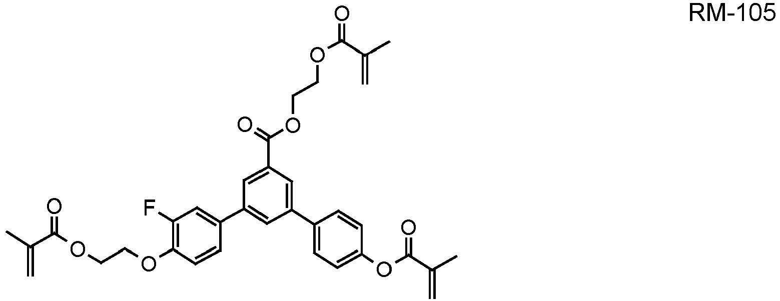 |
| 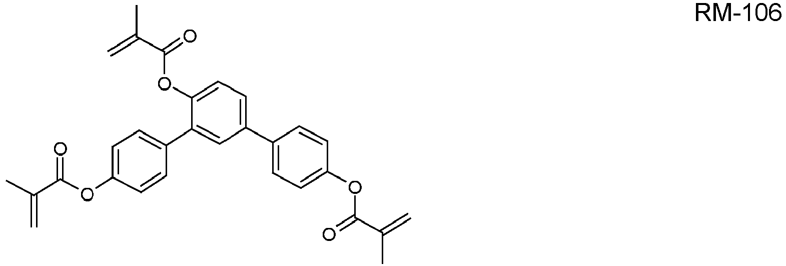 |
| 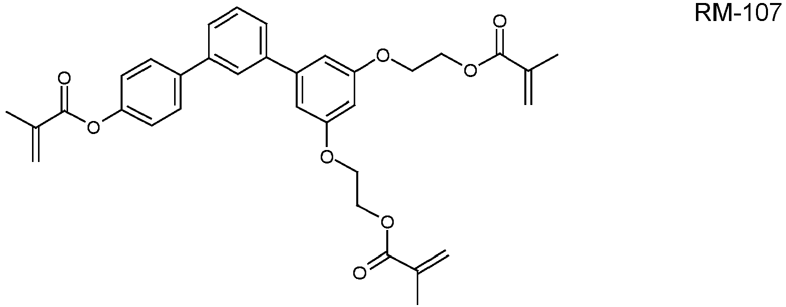 |
| 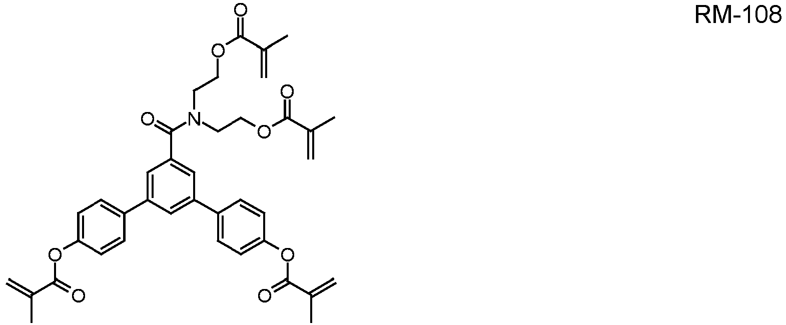 |
| 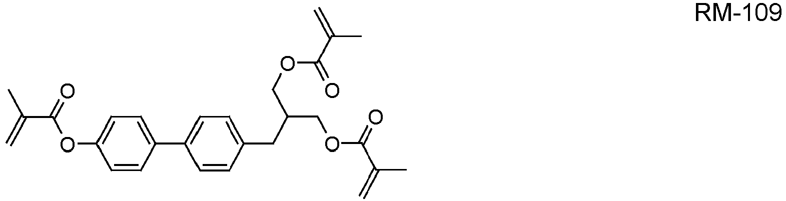 |
| 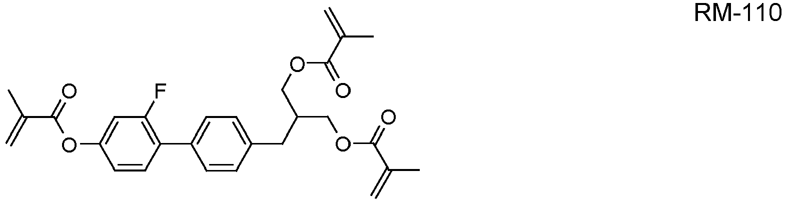 |
| 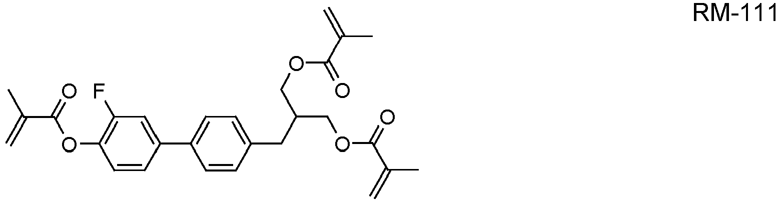 |
| 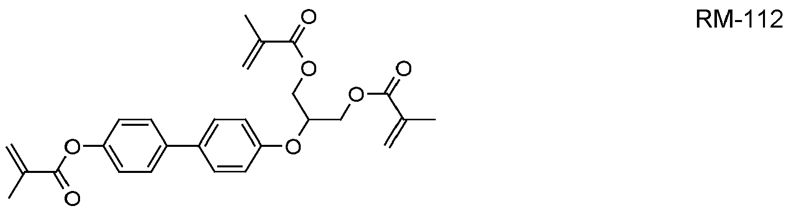 |
| 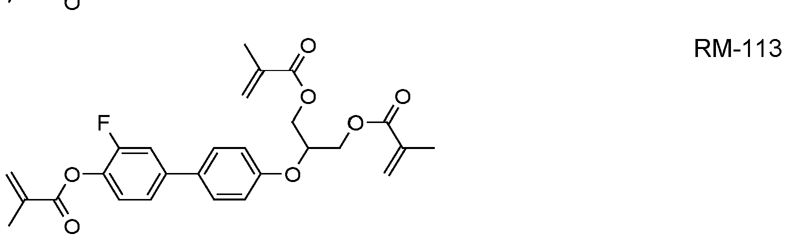 |
| 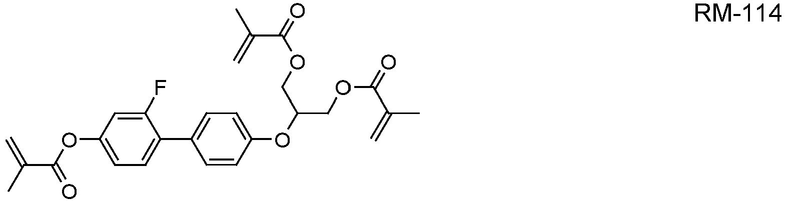 |
| 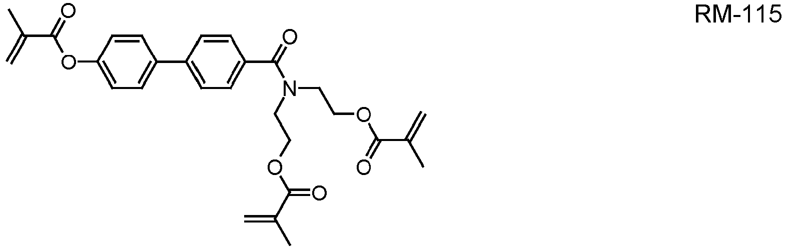 |
| 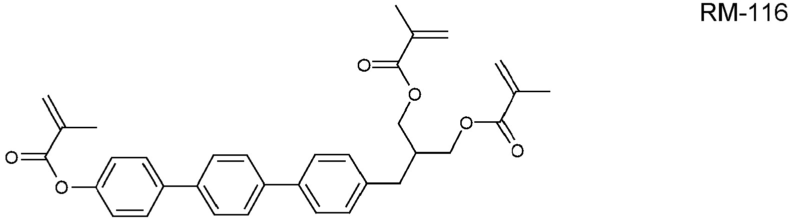 |
| 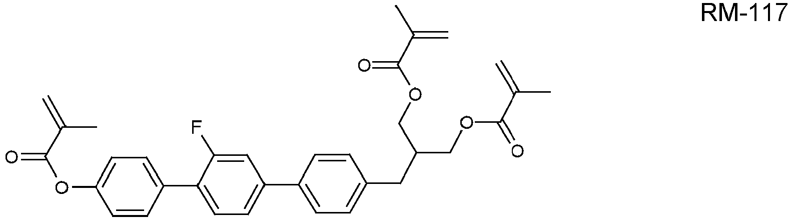 |
| 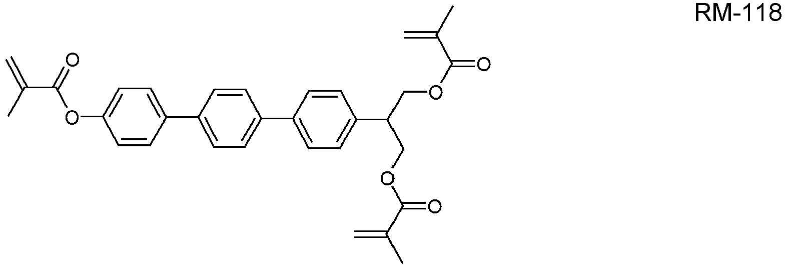 |
| 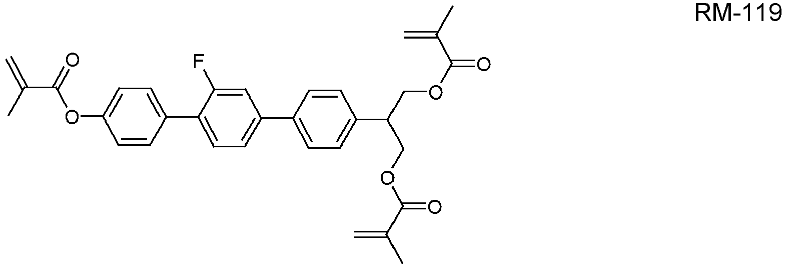 |
| 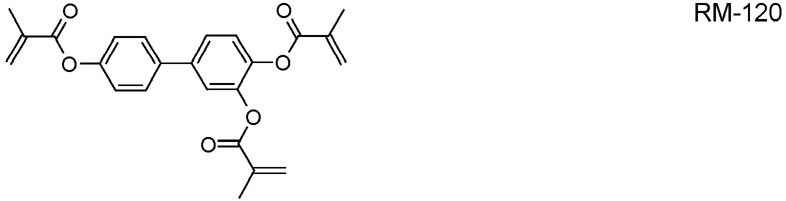 |
| 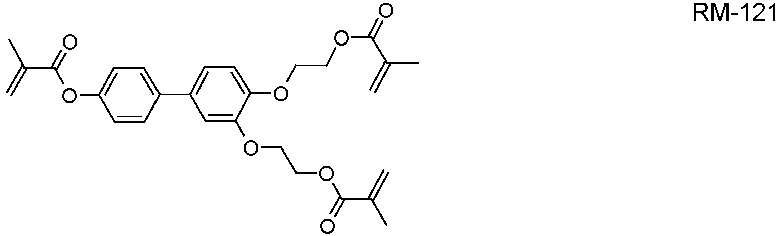 |
| 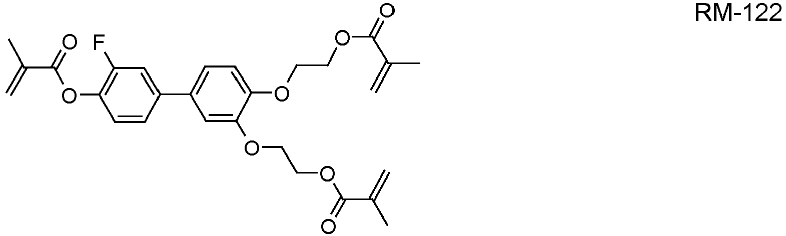 |
| 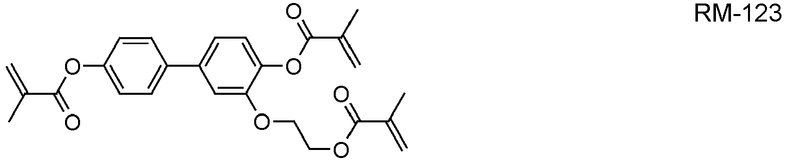 |
| 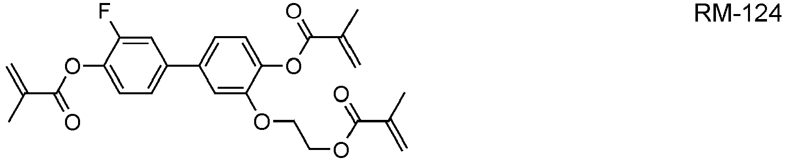 |
| 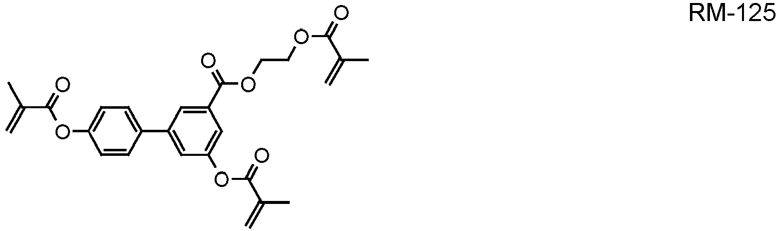 |
| 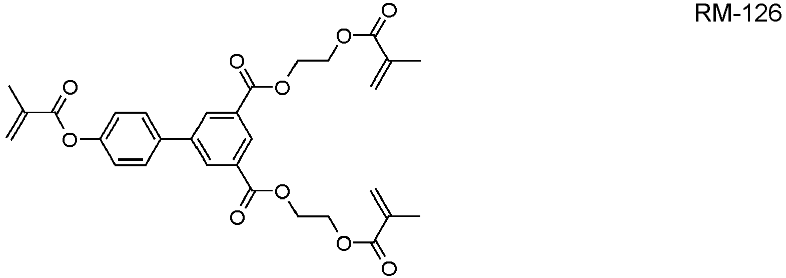 |
| 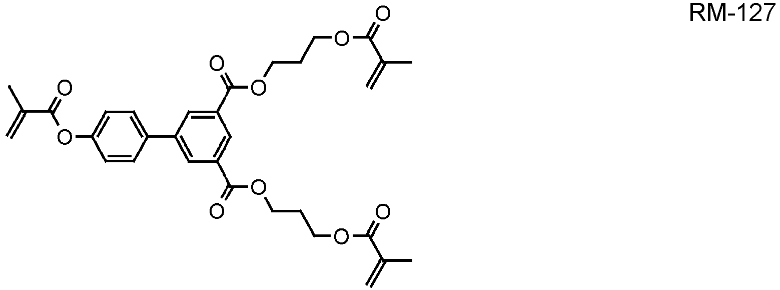 |
| 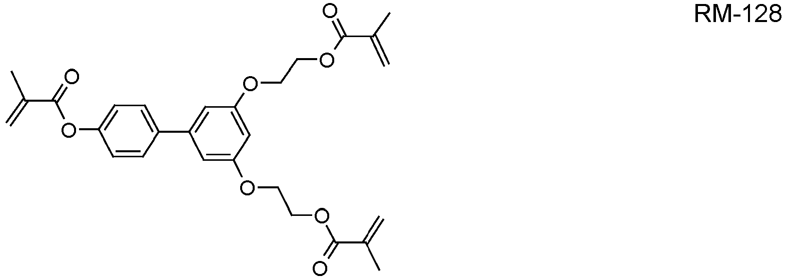 |
| 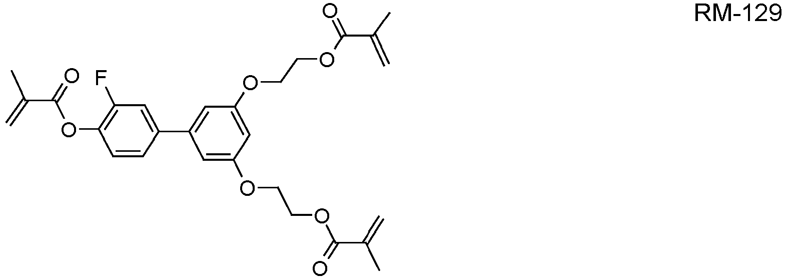 |
| 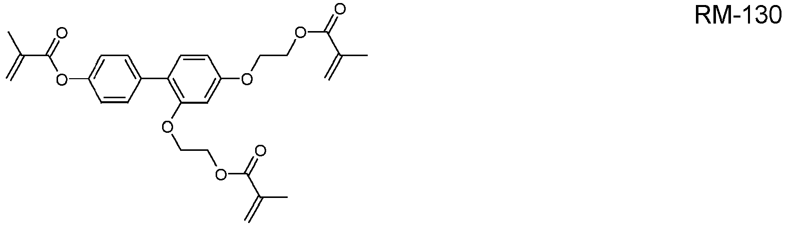 |
| 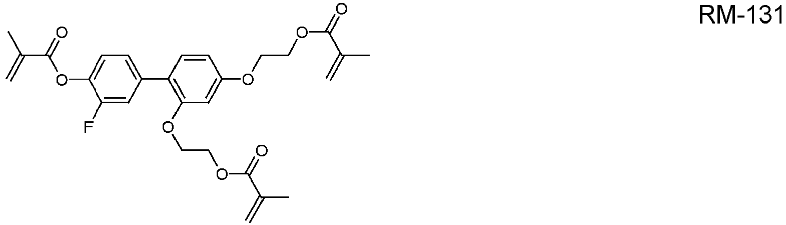 |
| 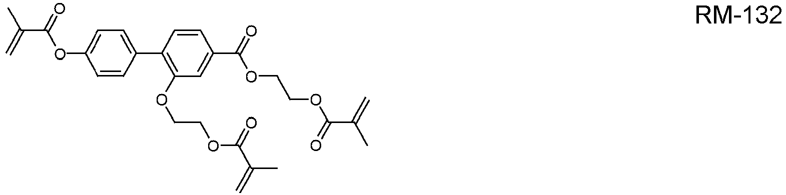 |
| 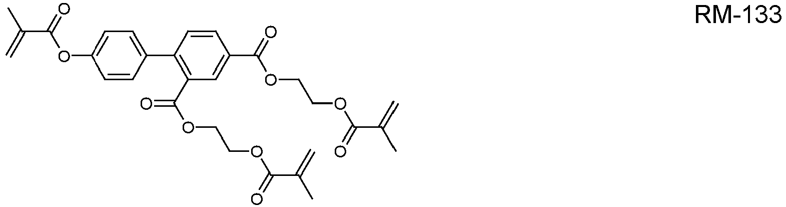 |
| 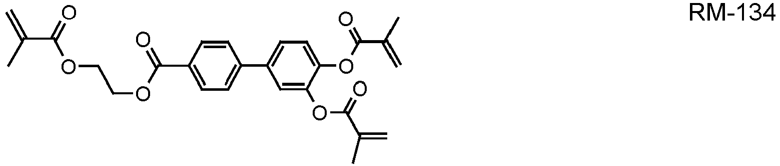 |
| 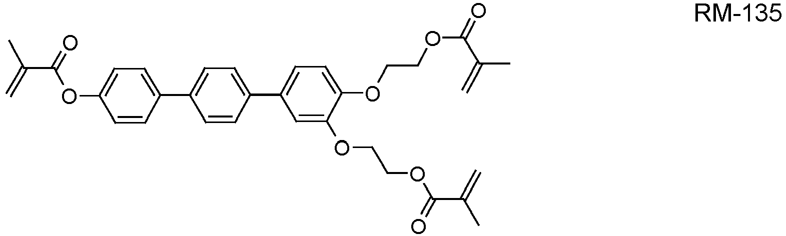 |
| 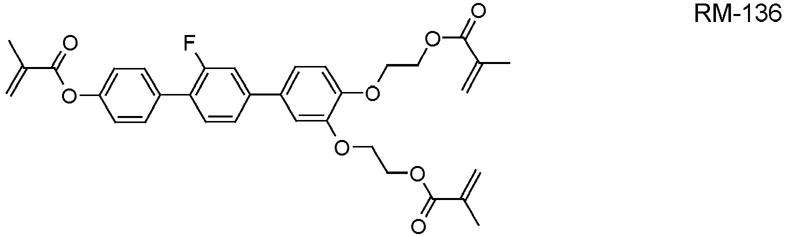 |
| 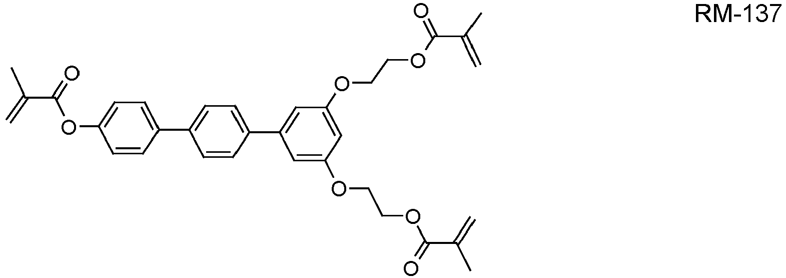 |
| 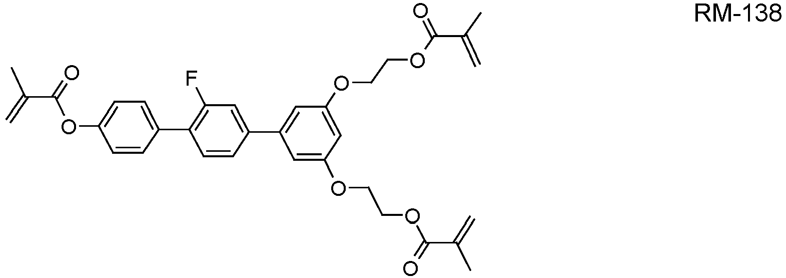 |
| 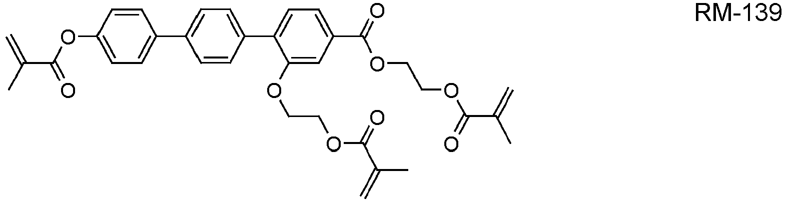 |
| 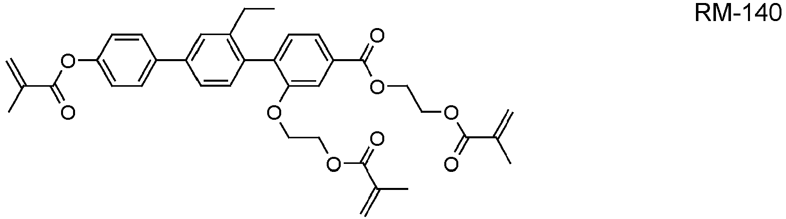 |
| 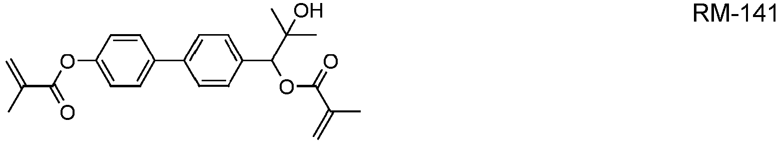 |
| 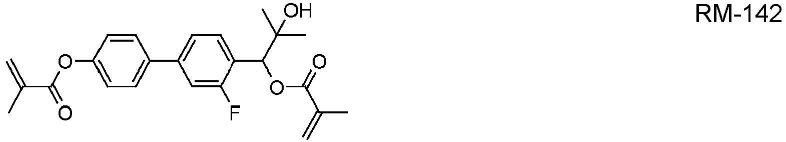 |
| 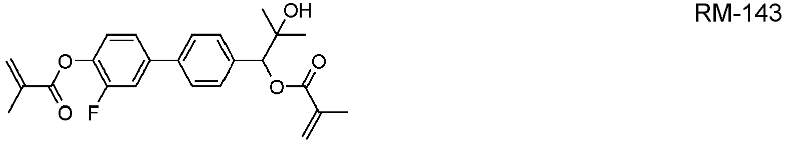 |

In a preferred embodiment, the liquid-crystalline media according to the invention comprise one or more polymerisable compounds, preferably selected from the polymerisable compounds of the formulae RM-1 to RM-143. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121 and RM-122 are particularly preferred.

**Table H**

| |
|---|
| Table H shows self-alignment additives for vertical alignment which can be used in LC media for SA-VA and SA-FFS displays according to the present invention together with the polymerizable compounds of formula I: |
| 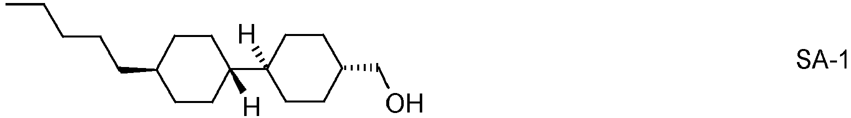 |
| 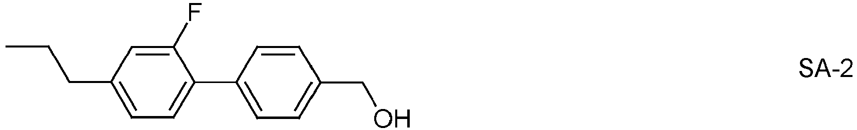 |
| 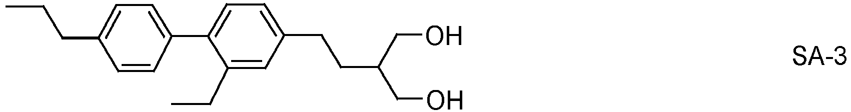 |
| 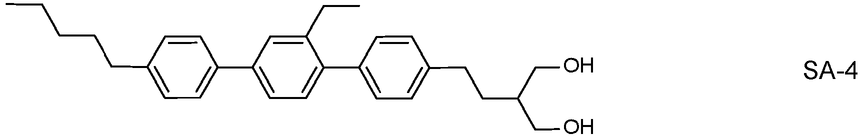 |
| 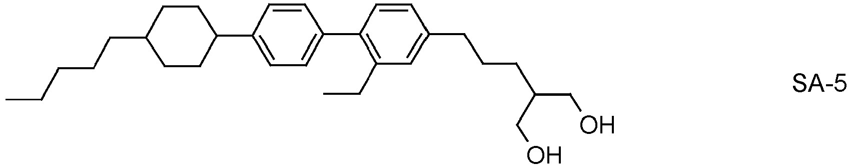 |
| 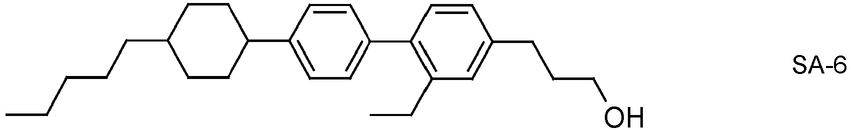 |
| 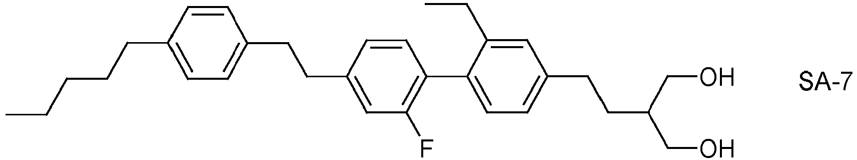 |
| 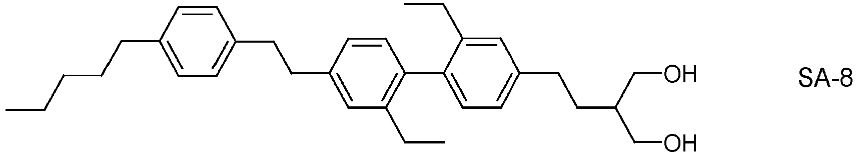 |
| 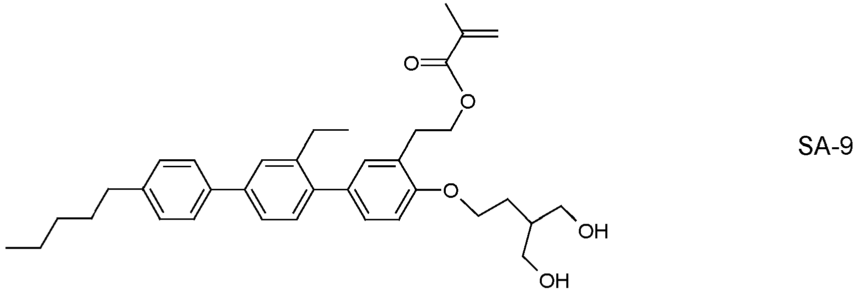 |
| 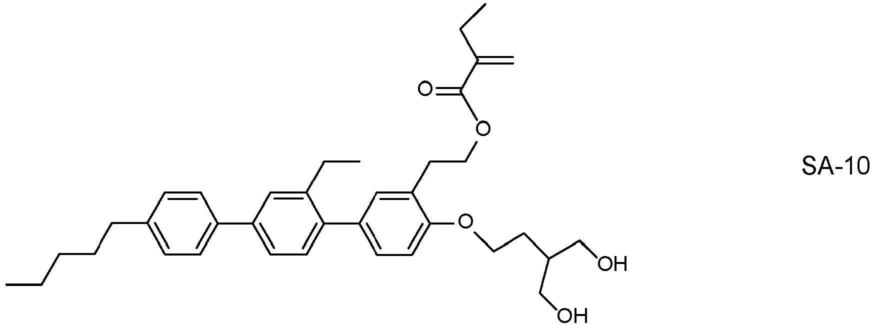 |
| 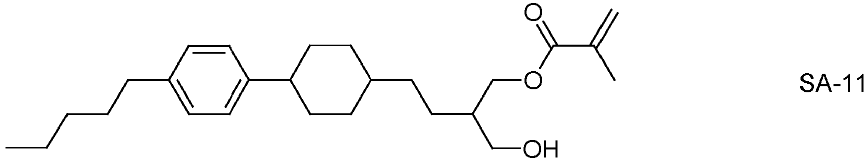 |
| 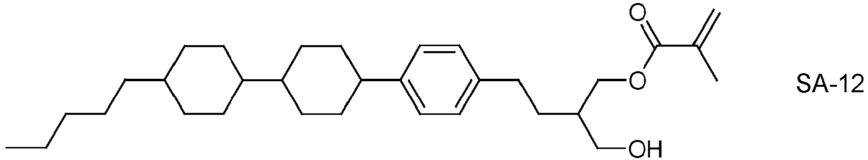 |
| 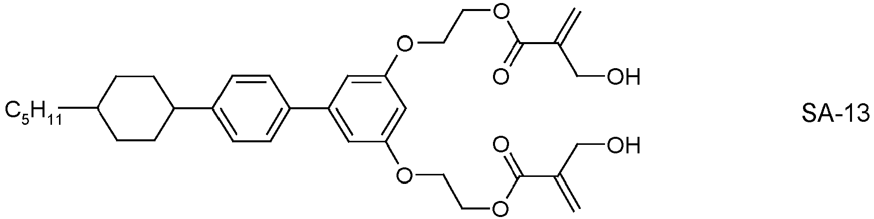 |
| 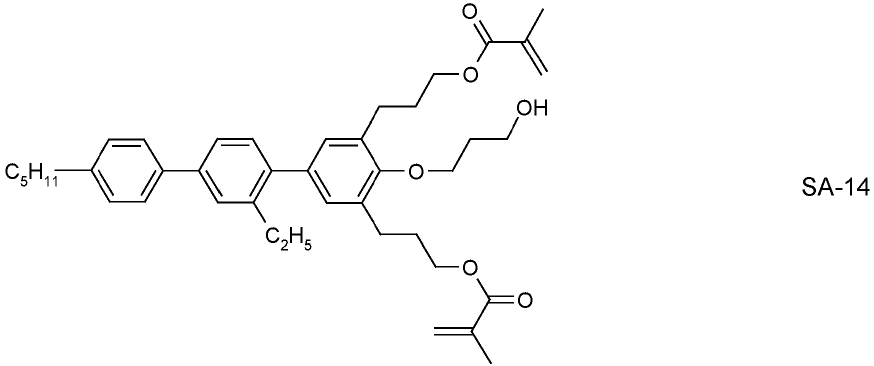 |
| 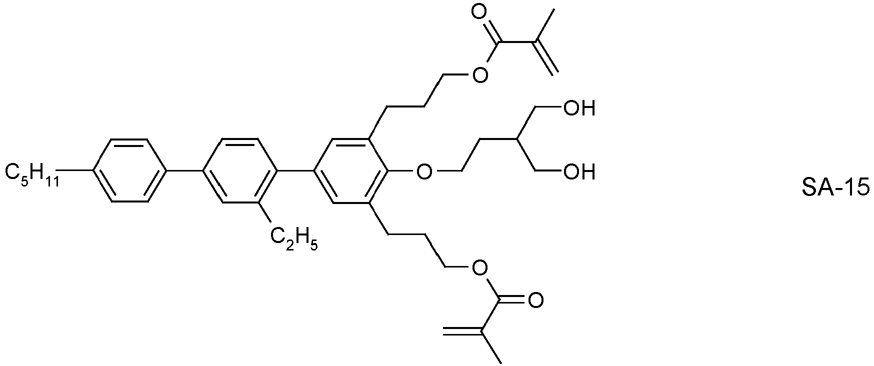 |
| 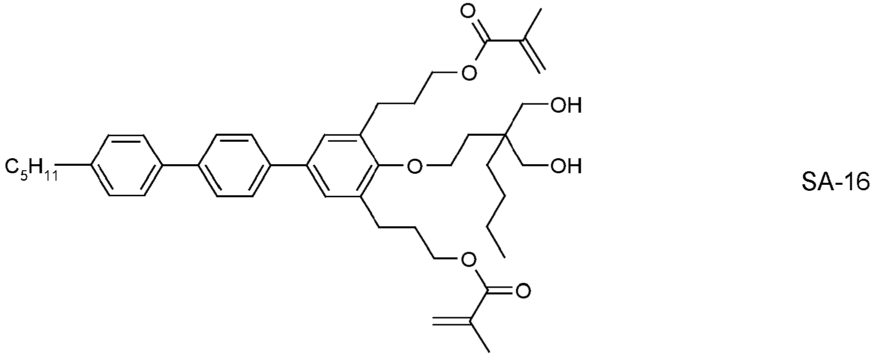 |
| 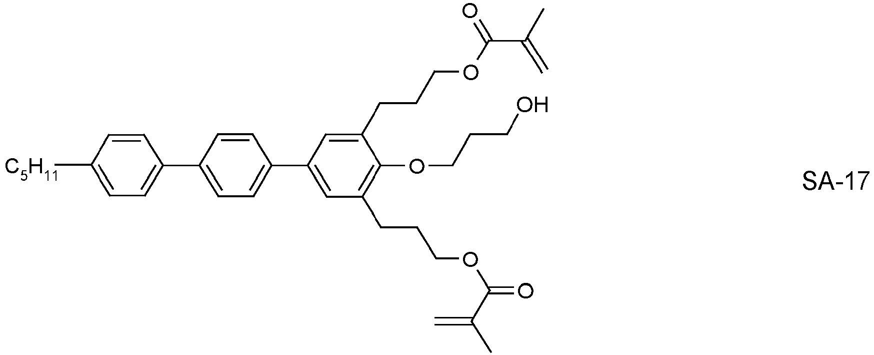 |
| 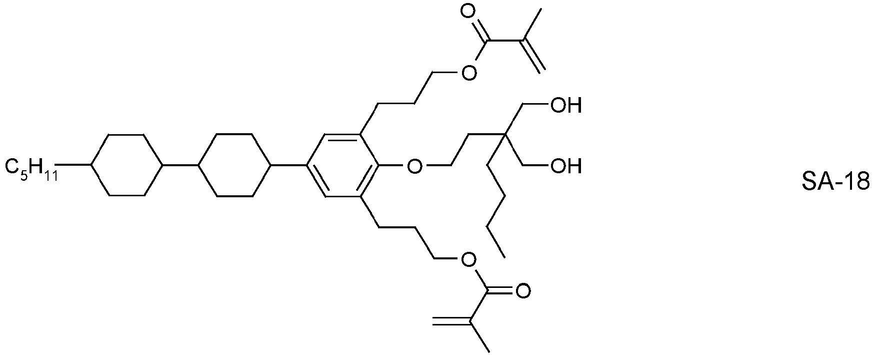 |
| 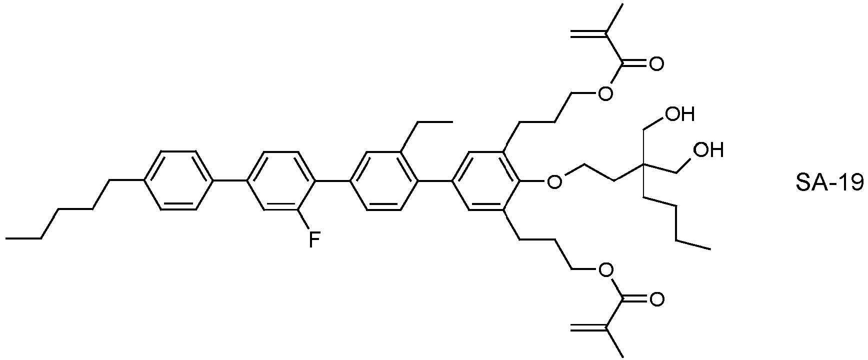 |
| 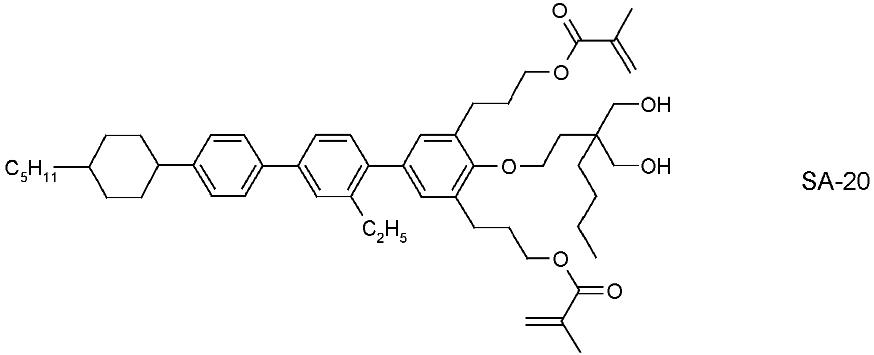 |
| 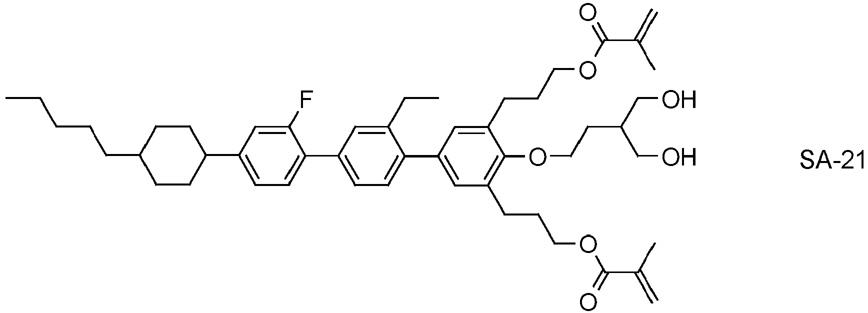 |
| 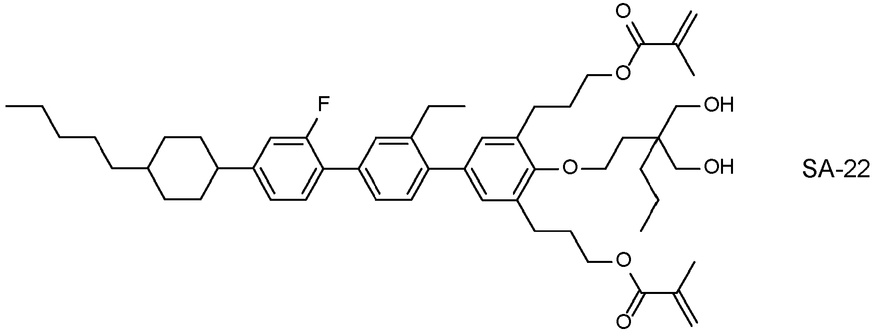 |
| 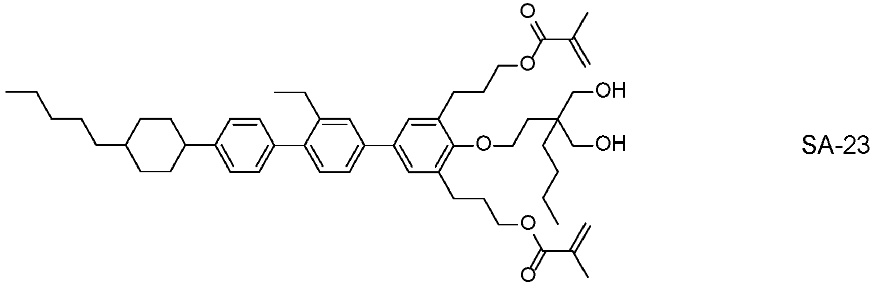 |
| 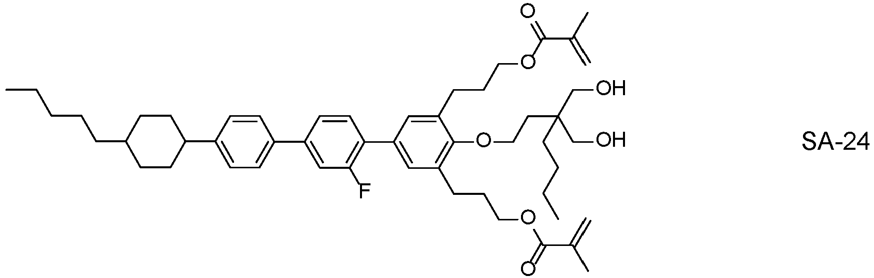 |
| 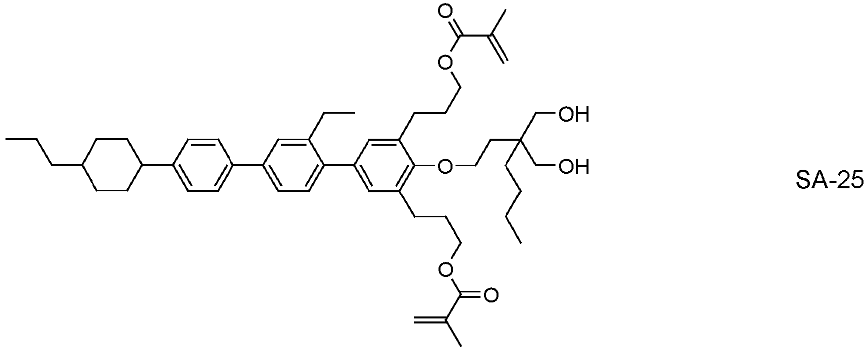 |
| 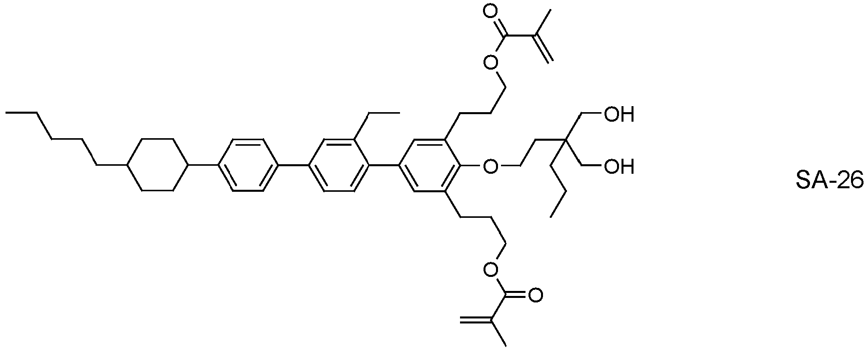 |
| 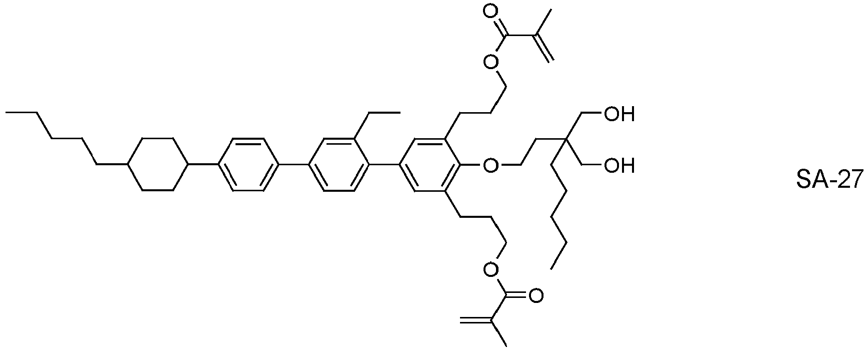 |
| 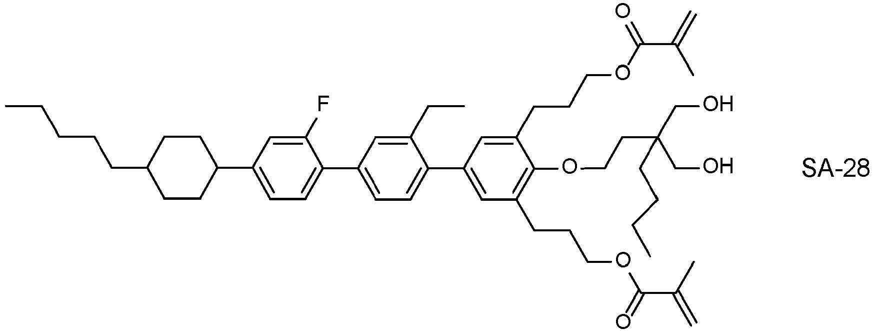 |
| 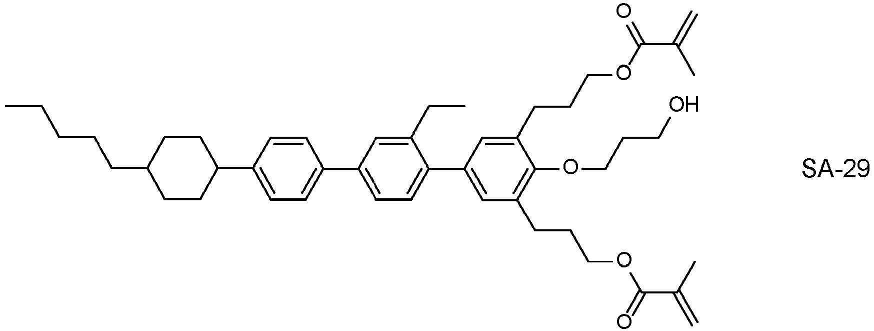 |
| 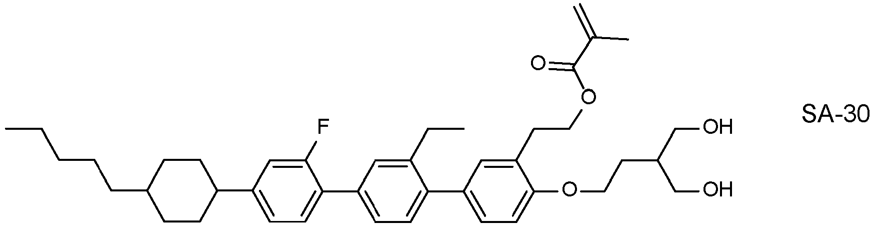 |
| 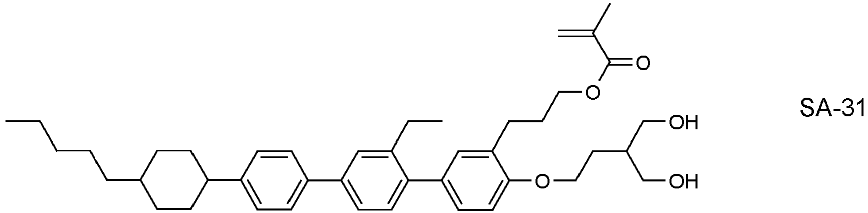 |
| 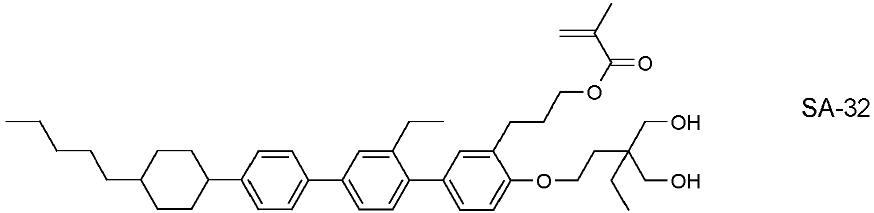 |
| 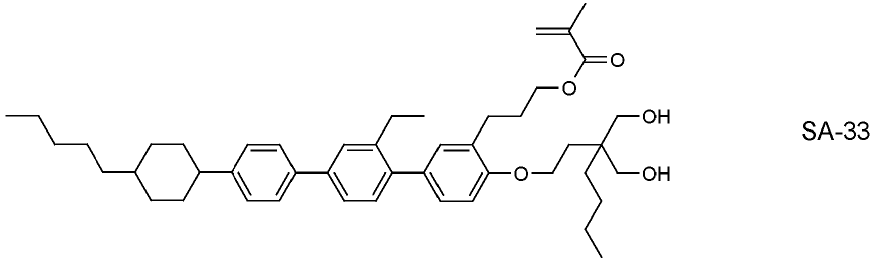 |
| 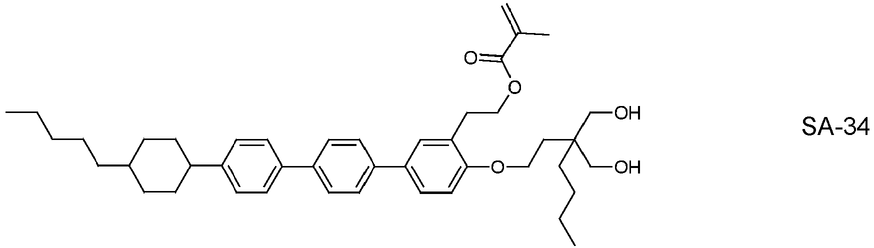 |

In a preferred embodiment, the LC media, SA-FFS and SA-HB-FFS displays according to the present invention comprise one or more SA additives selected from formulae SA-1 to SA-34, preferably from formulae SA-14 to SA-34, very preferably from formulae SA-20 to SA-28, most preferably of formula SA-20, in combination with one or more RMs of formula I. Very preferred is a combination of polymerizable compound 1, 2 or 3 of Example 1 below, very preferably of polymerizable compound 3 of Example 1, with an SA additive of formula SA-20 to SA-28, very preferably of formula SA-20.

The following mixture examples are intended to explain the invention without limiting it.

Above and below, percentage data denote per cent by weight. All temperatures are indicated in degrees Celsius. m.p. denotes melting point, cl.p. = clearing point. Furthermore, C = crystalline state, N = nematic phase, S = smectic phase and I = isotropic phase. The data between these symbols represent the transition temperatures. Furthermore, the following symbols are used
- V₀: Freedericks threshold voltage, capacitive [V] at 20°C,
- V₁₀: voltage [V] for 10% transmission,
- nₑ: extraordinary refractive index measured at 20°C and 589 nm,
- nₒ: ordinary refractive index measured at 20°C and 589 nm,
- Δn: optical anisotropy measured at 20°C and 589 nm,
- ε_{⊥}: dielectric susceptibility (or "dielectric constant") perpendicular to the to the longitudinal axes of the molecules at 20°C and 1 kHz,
- ε_{∥}: dielectric susceptibility (or "dielectric constant") parallel to the to the longitudinal axes of the molecules at 20°C and 1 kHz,
- Δε: dielectric anisotropy at 20°C and 1 kHz,
- cl.p. or T(N,I): clearing point [°C],
- v: flow viscosity measured at 20°C [mm²·s⁻¹],
- γ₁: rotational viscosity measured at 20°C [mPa·s],
- K₁₁: elastic constant, "splay" deformation at 20°C [pN],
- K₂₂: elastic constant, "twist" deformation at 20°C [pN],
- K₃₃: elastic constant, "bend" deformation at 20°C [pN], and
- LTS: low-temperature stability of the phase, determined in bulk,
- VHR: voltage holding ratio.

All physical properties are determined in accordance with "Merck Liquid Crystals, Physical Properties of Liquid Crystals", status Nov. 1997, Merck KGaA, Germany, and apply for a temperature of 20°C, unless explicitly indicated otherwise.

### Examples

The nematic mixtures N-1 to N-48 are prepared as follows:

**Mixture N-1**

| | | | |
|---|---|---|---|
| APUQU-3-F | 8.0 % | Clearing point [°C]: | 79.0 |
| PGUQU-3-F | 6.0 % | Δn (589 nm, 20°C): | 0.0989 |
| PGUQU-5-F | 5.0 % | nₑ (589 nm, 20°C): | 1.5818 |
| PPGU-3-F | 0.5 % | Δε (1 kHz, 20°C): | 4.3 |
| CCP-V-1 | 6.5 % | ε_{⊥} (1 kHz, 20°C): | 3.9 |
| CLP-3-T | 1.0 % | K₁ [pN], (20°C): | 13.9 |
| COB(S)-2-O4 | 11.0% | K₃ [pN], (20°C): | 15.4 |
| CC-3-V | 52.0 % | γ₁ [mPa·s] (20°C): | 62 |
| CC-3-V1 | 7.0 % | | |
| PP-1-2V1 | 3.0 % | | |
| Σ | 100.0 % | | |

| | | | |
|---|---|---|---|
| VHR (60°C, 1Hz, 1 V, on polyimide SE-6414) = 93.3 % | | | |

**Mixture N-2**

| | | | |
|---|---|---|---|
| DGUQU-4-F | 2.0 % | Clearing point [°C]: | 79.5 |
| PPGU-3-F | 0.5 % | Δn (589 nm, 20°C): | 0.0998 |
| CCP-V-1 | 10.5 % | ne (589 nm, 20°C): | 1.5857 |
| CCY-3-O2 | 8.0 % | Δε (1 kHz, 20°C): | 2.2 |
| PGP-2-2V | 5.5 % | ε_{⊥} (1 kHz, 20°C): | 4.1 |
| PGU-2-F | 7.0 % | K₁ [pN], (20°C): | 13.3 |
| PUQU-2-F | 5.0 % | K₃ [pN], (20°C): | 15.4 |
| CC-3-V | 50.0 % | γ₁ [mPa·s] (20°C): | 57 |
| CC-3-V1 | 3.5 % | LTS_{bulk} (-20°C) [h]: | 336 |
| COB(S)-2-O4 | 8.0 % | | |
| Σ | 100.0 % | | |

| | | | |
|---|---|---|---|
| VHR (60°C, 1Hz, 1 V, on polyimide SE-6414) = 95.3 % VHR (60°C, 1Hz, 1 V, on polyimide RB-001) = 99.1 % | | | |

**Mixture N-3**

| | | | |
|---|---|---|---|
| CC-3-V | 33.5 % | Clearing point [°C]: | 87.5 |
| CC-3-V1 | 8.0 % | Δn (589 nm, 20°C): | 0.0998 |
| CC-3-2V1 | 11.0 % | ne (589 nm, 20°C): | 1.5857 |
| CCP-V-1 | 10.0 % | Δε (1 kHz, 20°C): | 2.7 |
| CCP-V2-1 | 5.0 % | ε_{⊥} (1 kHz, 20°C): | 3.6 |
| APUQU-2-F | 5.0 % | K₁ [pN], (20°C): | 17.2 |
| APUQU-3-F | 5.0 % | K₃ [pN], (20°C): | 17.5 |
| PP-1-2V1 | 9.0 % | γ₁ [mPa·s] (20°C): | 70 |
| PPGU-3-F | 0.5 % | LTS_{bulk} (-20°C) [h]: | 984 |
| COB(S)-2-O4 | 8.0 % | | |
| CDUQU-3-F | 3.0 % | | |
| COB(S)-2-O5 | 2.0 % | | |
| Σ | 100.0 % | | |

**Mixture N-4**

| | | | |
|---|---|---|---|
| CC-3-V | 33.5 % | Clearing point [°C]: | 88.0 |
| CC-3-V1 | 8.0 % | Δn (589 nm, 20°C): | 0.1008 |
| CC-3-2V1 | 9.0 % | ne (589 nm, 20°C): | 1.5868 |
| CCP-V-1 | 9.5 % | Δε (1 kHz, 20°C): | 3.4 |
| CCP-V2-1 | 5.0 % | ε_{⊥} (1 kHz, 20°C): | 3.7 |
| APUQU-2-F | 5.0 % | K₁ [pN], (20°C): | 17.1 |
| APUQU-3-F | 5.0 % | K₃ [pN], (20°C): | 17.3 |
| PP-1-2V1 | 9.0 % | γ₁ [mPa·s] (20°C): | 74 |
| PPGU-3-F | 0.5 % | | |
| COB(S)-2-O4 | 8.0 % | | |
| CDUQU-3-F | 5.5 % | | |
| COB(S)-2-O5 | 2.0 % | | |
| Σ | 100.0 % | | |

**Mixture N-5**

| | | | |
|---|---|---|---|
| CC-3-V | 33.5 % | Clearing point [°C]: | 87.0 |
| CC-3-V1 | 8.5 % | Δn (589 nm, 20°C): | 0.1003 |
| CC-3-2V1 | 10.0 % | nₑ (589 nm, 20°C): | 1.5845 |
| CCP-V-1 | 4.0 % | Δ_{ε} (1 kHz, 20°C): | 3.6 |
| CCP-V2-1 | 5.0 % | ε_{⊥} (1 kHz, 20°C): | 3.7 |
| APUQU-2-F | 4.0 % | K₁ [pN], (20°C): | 18.4 |
| APUQU-3-F | 4.5 % | K₃ [pN], (20°C): | 14.9 |
| PP-1-2V1 | 9.0 % | γ₁ [mPa·s] (20°C): | 76 |
| PPGU-3-F | 0.5 % | | |
| COB(S)-2-O4 | 8.0 % | | |
| CDUQU-3-F | 6.0 % | | |
| COB(S)-2-O5 | 2.0 % | | |
| CLP-3-T | 5.0 % | | |
| Σ | 100.0 % | | |

**Mixture N-6**

| | | | |
|---|---|---|---|
| CC-3-V | 37.0 % | Clearing point [°C]: | 81.0 |
| CC-3-V1 | 8.5 % | Δn (589 nm, 20°C): | 0.1003 |
| CC-3-2V1 | 9.0 % | ne (589 nm, 20°C): | 1.5840 |
| CCP-V-1 | 1.0 % | Δε (1 kHz, 20°C): | 3.5 |
| CCP-V2-1 | 3.5 % | ε_{⊥} (1 kHz, 20°C): | 3.7 |
| APUQU-2-F | 4.0 % | K₁ [pN], (20°C): | 17.6 |
| APUQU-3-F | 5.5 % | K₃ [pN], (20°C): | 16.7 |
| PP-1-2V1 | 11.0 % | γ₁ [mPa·s] (20°C): | 67 |
| PPGU-3-F | 0.5 % | LTS_{bulk} (-20°C) [h]: | 192 |
| COB(S)-2-O4 | 8.0 % | | |
| CDUQU-3-F | 5.0 % | | |
| COB(S)-2-O5 | 2.0 % | | |
| CLP-3-T | 5.0 % | | |
| Σ | 100.0 % | | |

**Mixture N-7**

| | | | |
|---|---|---|---|
| APUQU-3-F | 5.0 % | Clearing point [°C]: | 80.0 |
| PGUQU-3-F | 7.0 % | Δn (589 nm, 20°C): | 0.1018 |
| PGUQU-5-F | 7.0 % | nₑ (589 nm, 20°C): | 1.5874 |
| PPGU-3-F | 0.5 % | Δε (1 kHz, 20°C): | 4.6 |
| CCP-V-1 | 14.0 % | ε_{⊥} (1 kHz, 20°C): | 3.5 |
| CLP-3-T | 1.0 % | K₁ [pN], (20°C): | 13.6 |
| COB(S)-2-O4 | 7.0 % | K₃ [pN], (20°C): | 15.4 |
| CC-3-V | 52.0 % | γ₁ [mPa·s] (20°C): | 60 |
| CC-3-V1 | 1.5 % | LTS_{bulk} (-20°C) [h]: | 1000 |
| PP-1-2V1 | 5.0 % | | |
| Σ | 100.0 % | | |

**Mixture N-8**

| | | | |
|---|---|---|---|
| APUQU-3-F | 6.0 % | Clearing point [°C]: | 80.0 |
| PGUQU-3-F | 6.0 % | Δn (589 nm, 20°C): | 0.0984 |
| PGUQU-5-F | 6.0 % | ne (589 nm, 20°C): | 1.5828 |
| PPGU-3-F | 0.5 % | Δε (1 kHz, 20°C): | 4.1 |
| CCP-V-1 | 11.0 % | ε_{⊥} (1 kHz, 20°C): | 3.7 |
| CLP-3-T | 1.0 % | K₁ [pN], (20°C): | 13.4 |
| COB(S)-2-O4 | 10.0 % | K₃ [pN], (20°C): | 14.9 |
| CC-3-V | 56.5 % | γ₁ [mPa·s] (20°C): | 60 |
| PP-1-2V1 | 3.0 % | | |
| Σ | 100.0 % | | |

**Mixture N-9**

| | | | |
|---|---|---|---|
| CC-3-V | 49.5 % | Clearing point [°C]: | 80.5 |
| CCP-V-1 | 6.0 % | Δn (589 nm, 20°C): | 0.0993 |
| PGP-2-2V | 4.0 % | nₑ (589 nm, 20°C): | 1.5836 |
| PUQU-3-F | 11.0 % | Δε (1 kHz, 20°C): | 2.4 |
| CCGU-3-F | 6.0 % | ε_{⊥} (1 kHz, 20°C): | 4.1 |
| PPGU-3-F | 0.5 % | K₁ [pN], (20°C): | 13.4 |
| CPY-3-O2 | 9.0 % | K₃ [pN], (20°C): | 14.8 |
| COB(S)-2-O4 | 8.0 % | γ₁ [mPa·s] (20°C): | 61 |
| CC-3-V1 | 6.0 % | | |
| Σ | 100.0 % | | |

**Mixture N-10**

| | | | |
|---|---|---|---|
| DGUQU-4-F | 2.0 % | Clearing point [°C]: | 79.5 |
| PPGU-3-F | 0.5 % | Δn (589 nm, 20°C): | 0.0998 |
| CCP-V-1 | 10.5 % | ne (589 nm, 20°C): | 1.5849 |
| CCY-3-O2 | 8.0 % | Δε (1 kHz, 20°C): | 2.4 |
| PGP-2-2V | 5.5 % | ε_{⊥} (1 kHz, 20°C): | 4.3 |
| PGU-2-F | 7.0 % | K₁ [pN], (20°C): | 13.3 |
| PUQU-2-F | 5.0 % | K₃ [pN], (20°C): | 14.4 |
| CC-3-V | 50.0 % | γ₁ [mPa·s] (20°C): | 57 |
| CC-3-V1 | 3.5 % | LTS_{bulk} (-20°C) [h]: | 336 |
| COB(S)-2-O4 | 8.0 % | | |
| Σ | 100.0 % | | |

**Mixture N-11**

| | | | |
|---|---|---|---|
| DGUQU-4-F | 3.0 % | Clearing point [°C]: | 79.5 |
| PPGU-3-F | 0.5 % | Δn (589 nm, 20°C): | 0.0993 |
| CCP-V-1 | 8.5 % | nₑ (589 nm, 20°C): | 1.5849 |
| CCY-3-O2 | 9.5 % | Δ_{ε} (1 kHz, 20°C): | 2.4 |
| PGP-2-2V | 4.5 % | ε_{⊥} (1 kHz, 20°C): | 4.3 |
| PGU-2-F | 7.0 % | K₁ [pN], (20°C): | 13.2 |
| PUQU-2-F | 5.0 % | K₃ [pN], (20°C): | 14.2 |
| CC-3-V | 50.0 % | γ₁ [mPa·s] (20°C): | 61 |
| CC-3-V1 | 3.5 % | | |
| COB(S)-2-O4 | 8.5 % | | |
| Σ | 100.0 % | | |

**Mixture N-12**

| | | | |
|---|---|---|---|
| CC-3-V | 34.0 % | Clearing point [°C]: | 91.5 |
| CC-3-V1 | 12.0 % | Δn (589 nm, 20°C): | 0.0990 |
| CC-3-2V1 | 8.0 % | nₑ (589 nm, 20°C): | 1.5835 |
| CCP-V-1 | 10.0 % | Δε (1 kHz, 20°C): | 4.1 |
| CCP-V2-1 | 5.0 % | ε_{⊥} (1 kHz, 20°C): | 3.5 |
| PGP-2-2V | 3.0 % | K₁ [pN], (20°C): | 16.8 |
| APUQU-2-F | 7.5 % | K₃ [pN], (20°C): | 17.9 |
| APUQU-3-F | 7.0 % | γ₁ [mPa·s] (20°C): | 72 |
| PP-1-2V1 | 3.5 % | LTS_{bulk} (-20°C) [h]: | 504 |
| PPGU-3-F | 0.5 % | | |
| COB(S)-2-O4 | 7.0 % | | |
| CDUQU-3-F | 2.5 % | | |
| Σ | 100.0 % | | |

**Mixture N-13**

| | | | |
|---|---|---|---|
| CC-3-V | 33.5 % | Clearing point [°C]: | 86 |
| CC-3-V1 | 8.0 % | Δn (589 nm, 20°C): | 0.0993 |
| CC-3-2V1 | 11.0 % | nₑ (589 nm, 20°C): | 1.5843 |
| CCP-V-1 | 10.0 % | Δ_{ε} (1 kHz, 20°C): | 3.7 |
| CCP-V2-1 | 5.0 % | ε_{⊥} (1 kHz, 20°C): | 3.4 |
| APUQU-2-F | 6.0 % | K₁ [pN], (20°C): | 16.7 |
| APUQU-3-F | 7.0 % | K₃ [pN], (20°C): | 17.4 |
| PP-1-2V1 | 9.0 % | γ₁ [mPa·s] (20°C): | 68 |
| PPGU-3-F | 0.5 % | LTS_{bulk} (-20°C) [h]: | 912 |
| COB(S)-2-O4 | 7.0 % | | |
| CDUQU-3-F | 3.0 % | | |
| Σ | 100.0 % | | |

**Mixture N-14**

| | | | |
|---|---|---|---|
| CC-3-V | 33.5 % | Clearing point [°C]: | 90 |
| CC-3-V1 | 8.0 % | Δn (589 nm, 20°C): | 0.0968 |
| CC-3-2V1 | 11.0 % | nₑ (589 nm, 20°C): | 1.5805 |
| CCP-V-1 | 10.0 % | Δ_{ε} (1 kHz, 20°C): | 4.0 |
| CCP-V2-1 | 5.0 % | ε_{⊥} (1 kHz, 20°C): | 3.4 |
| APUQU-2-F | 6.0 % | K₁ [pN], (20°C): | 18.0 |
| APUQU-3-F | 7.0 % | K₃ [pN], (20°C): | 18.5 |
| PP-1-2V1 | 9.0 % | γ₁ [mPa·s] (20°C): | 73 |
| PPGU-3-F | 0.5 % | LTS_{bulk} (-20°C) [h]: | 1000 |
| COB(S)-2-O4 | 7.0 % | | |
| CDUQU-3-F | 3.0 % | | |
| CLP-3-T | 5.0 % | | |
| Σ | 100.0 % | | |

**Mixture N-15**

| | | | |
|---|---|---|---|
| CC-3-V | 33.5 % | Clearing point [°C]: | 90 |
| CC-3-V1 | 8.0 % | Δn (589 nm, 20°C): | 0.0984 |
| CC-3-2V1 | 11.0 % | nₑ (589 nm, 20°C): | 1.5825 |
| CCP-V-1 | 10.5 % | Δ_{ε} (1 kHz, 20°C): | 4.0 |
| APUQU-2-F | 6.0 % | ε_{⊥} (1 kHz, 20°C): | 3.4 |
| APUQU-3-F | 6.0 % | K₁ [pN], (20°C): | 18.2 |
| PP-1-2V1 | 6.0 % | K₃ [pN], (20°C): | 18.3 |
| PPGU-3-F | 0.5 % | γ₁ [mPa·s] (20°C): | 73 |
| COB(S)-2-O4 | 7.0 % | LTS_{bulk} (-20°C) [h]: | 1000 |
| CDUQU-3-F | 3.0 % | | |
| CLP-3-T | 5.0 % | | |
| CLP-V-1 | 3.5 % | | |
| Σ | 100.0 % | | |

**Mixture N-16**

| | | | |
|---|---|---|---|
| DGUQU-4-F | 3.0 % | Clearing point [°C]: | 79 |
| PPGU-3-F | 0.5 % | Δn (589 nm, 20°C): | 0.0994 |
| CCP-V-1 | 9.5 % | nₑ (589 nm, 20°C): | 1.5854 |
| CLY-2-O4 | 3.0 % | Δ_{ε} (1 kHz, 20°C): | 2.5 |
| CLY-3-O2 | 4.0 % | ε_{⊥} (1 kHz, 20°C): | 4.2 |
| CLY-3-O3 | 4.0 % | K₁ [pN], (20°C): | 13.4 |
| PGP-2-2V | 4.0 % | K₃ [pN], (20°C): | 14.2 |
| PGU-2-F | 7.0 % | γ₁ [mPa·s] (20°C): | 61 |
| PUQU-2-F | 5.0 % | | |
| CC-3-V | 49.5 % | | |
| CC-3-V1 | 3.5 % | | |
| COB(S)-2-O4 | 7.0 % | | |
| Σ | 100.0 % | | |

**Mixture N-17**

| | | | |
|---|---|---|---|
| CDUQU-3-F | 6.0 | Clearing point [°C]: | 79.6 |
| PGUQU-3-F | 5.0 | Δn [589 nm, 20°C]: | 0.1010 |
| PGUQU-4-F | 4.0 | nₑ [589 nm, 20°C]: | 1.5863 |
| PPGU-3-F | 0.5 | nₒ [589 nm, 20°C]: | 1.4853 |
| CC-3-V | 44.0 | Δ_{ε} [1 kHz, 20°C]: | 2.3 |
| CCP-V-1 | 12.5 | ε_{∥} [1 kHz, 20°C]: | 7.6 |
| CCVC-3-V | 2.0 | ε_{⊥} [1 kHz, 20°C]: | 5.3 |
| PP-1-2V1 | 3.0 | K₁ [pN] (20°C): | 13.3 |
| COB(S)-2-O4 | 10.0 | K₃ [pN] (20°C): | 15.2 |
| B(S)-2O-O4 | 4.0 | | |
| CY-3-O2 | 9.0 | | |
| Σ | 100.0 | | |

**Mixture N-18**

| | | | |
|---|---|---|---|
| CDUQU-3-F | 5.5 | Clearing point [°C]: | 79.4 |
| PGUQU-3-F | 5.0 | Δn [589 nm, 20°C]: | 0.1007 |
| PGUQU-4-F | 4.0 | ne [589 nm, 20°C]: | 1.5860 |
| PPGU-3-F | 0.5 | nₒ [589 nm, 20°C]: | 1.4853 |
| CC-3-V | 43.0 | Δ_{ε} [1 kHz, 20°C]: | 2.3 |
| CCP-V-1 | 13.5 | ε_{∥} [1 kHz, 20°C]: | 7.4 |
| CCVC-3-V | 4.0 | ε_{⊥} [1 kHz, 20°C]: | 5.2 |
| COB(S)-2-O4 | 10.0 | K₁ [pN] (20°C): | 12.9 |
| PY-3-O2 | 10.0 | K₃ [pN] (20°C): | 15.1 |
| CY-3-O2 | 4.5 | | |
| Σ | 100.0 | | |

**Mixture N-19**

| | | | |
|---|---|---|---|
| APUQU-3-F | 8.0 | Clearing point [°C]: | 79 |
| PGUQU-3-F | 6.0 | Δn [589 nm, 20°C]: | 0.0989 |
| PGUQU-5-F | 5.0 | nₑ [589 nm, 20°C]: | 1.5818 |
| PPGU-3-F | 0.5 | nₒ [589 nm, 20°C]: | 1.4829 |
| CCP-V-1 | 6.5 | Δ_{ε} [1 kHz, 20°C]: | 4.3 |
| CLP-3-T | 1.0 | ε_{∥} [1 kHz, 20°C]: | 8.2 |
| COB(S)-2-O4 | 11.0 | ε_{⊥} [1 kHz, 20°C]: | 3.9 |
| CC-3-V | 52.0 | γ₁ [mPa s] (20°C): | 62 |
| CC-3-V1 | 7.0 | K₁ [pN] (20°C): | 13.9 |
| PP-1-2V1 | 3.0 | K₃ [pN] (20°C): | 15.4 |
| Σ | 100.0 | | |

**Mixture N-20**

| | | | |
|---|---|---|---|
| CC-3-V | 49.5 | Clearing point [°C]: | 80 |
| CCP-V-1 | 4.0 | Δn [589 nm, 20°C]: | 0.0992 |
| PGP-2-2V | 3.0 | nₑ [589 nm, 20°C]: | 1.5828 |
| PUQU-3-F | 11.0 | nₒ [589 nm, 20°C]: | 1.4836 |
| CCGU-3-F | 6.0 | Δ_{ε} [1 kHz, 20°C]: | 2.3 |
| PPGU-3-F | 0.5 | ε_{∥} [1 kHz, 20°C]: | 6.5 |
| CPY-2-O2 | 3.0 | ε_{⊥} [1 kHz, 20°C]: | 4.3 |
| CPY-3-O2 | 10.0 | γ₁ [mPa s] (20°C): | 63 |
| COB(S)-2-O4 | 7.0 | K₁ [pN] (20°C): | 13.3 |
| CC-3-V1 | 6.0 | K₃ [pN] (20°C): | 14.7 |
| Σ | 100.0 | | |

**Mixture N-21**

| | | | |
|---|---|---|---|
| CC-3-V | 49.5 | Clearing point [°C]: | 77.5 |
| CCP-V-1 | 5.5 | Δn [589 nm, 20°C]: | 0.0994 |
| PGP-2-2V | 1.5 | ne [589 nm, 20°C]: | 1.5828 |
| PUQU-3-F | 9.0 | nₒ [589 nm, 20°C]: | 1.4834 |
| CDUQU-3-F | 6.5 | Δ_{ε} [1 kHz, 20°C]: | 2.0 |
| PPGU-3-F | 0.5 | ε_{∥} [1 kHz, 20°C]: | 7.4 |
| CPY-2-O2 | 3.0 | ε_{⊥} [1 kHz, 20°C]: | 5.5 |
| CPY-3-O2 | 10.0 | γ₁ [mPa s] (20°C): | 67 |
| COB(S)-2-O4 | 12.5 | K₁ [pN] (20°C): | 12.9 |
| Y-4O-O4 | 2.0 | K₃ [pN] (20°C): | 13.9 |
| Σ | 100.0 | | |

**Mixture N-22**

| | | | |
|---|---|---|---|
| APUQU-2-F | 5.0 | Clearing point [°C]: | 85 |
| APUQU-3-F | 5.0 | Δn [589 nm, 20°C]: | 0.1243 |
| PGUQU-3-F | 4.5 | nₑ [589 nm, 20°C]: | 1.6138 |
| PGUQU-4-F | 4.0 | nₒ [589 nm, 20°C]: | 1.4895 |
| PGUQU-5-F | 3.0 | Δ_{ε} [1 kHz, 20°C]: | 5.7 |
| PPGU-3-F | 0.5 | ε_{∥} [1 kHz, 20°C]: | 9.4 |
| CCP-V-1 | 3.5 | ε_{⊥} [1 kHz, 20°C]: | 3.7 |
| PGP-1-2V | 5.0 | γ₁ [mPa s] (20°C): | 69 |
| PGP-2-2V | 7.0 | K₁ [pN] (20°C): | 14.8 |
| PGP-3-2V | 2.0 | K₃ [pN] (20°C): | 14.9 |
| CC-3-V | 43.0 | | |
| CC-3-V1 | 8.0 | | |
| PP-1-2V1 | 3.0 | | |
| COB(S)-2-O4 | 6.5 | | |
| Σ | 100.0 | | |

**Mixture N-23**

| | | | |
|---|---|---|---|
| CC-3-V | 40.0 | Clearing point [°C]: | 79.5 |
| CCP-V-1 | 15.0 | Δn [589 nm, 20°C]: | 0.0986 |
| COB(S)-2-O4 | 12.0 | nₑ [589 nm, 20°C]: | 1.5835 |
| CPY-3-O2 | 8.5 | nₒ [589 nm, 20°C]: | 1.4849 |
| CY-3-O2 | 11.0 | Δ_{ε} [1 kHz, 20°C]: | 1.9 |
| DGUQU-2-F | 5.0 | ε_{∥} [1 kHz, 20°C]: | 7.9 |
| DGUQU-4-F | 3.5 | ε_{⊥} [1 kHz, 20°C]: | 6.0 |
| PPGU-3-F | 0.5 | | |
| PUQU-3-F | 4.5 | | |
| Σ | 100.0 | | |

**Mixture N-24**

| | | | |
|---|---|---|---|
| DGUQU-2-F | 1.5 | Clearing point [°C]: | 84.5 |
| DGUQU-4-F | 4.0 | Δn [589 nm, 20°C]: | 0.1242 |
| DPGU-4-F | 4.0 | ne [589 nm, 20°C]: | 1.6142 |
| PGUQU-3-F | 3.0 | nₒ [589 nm, 20°C]: | 1.4900 |
| PGUQU-4-F | 3.0 | Δε [1 kHz, 20°C]: | 5.3 |
| PGUQU-5-F | 2.0 | ε_{∥} [1 kHz, 20°C]: | 9.0 |
| PPGU-3-F | 0.5 | ε_{⊥} [1 kHz, 20°C]: | 3.8 |
| PGP-1-2V | 7.0 | γ₁ [mPa s] (20°C): | 67 |
| PGP-2-2V | 7.0 | K₁ [pN] (20°C): | 15.0 |
| PGP-3-2V | 4.0 | K₃ [pN] (20°C): | 13.7 |
| CC-3-V | 50.0 | | |
| PP-1-2V1 | 2.0 | | |
| CCS-3-T | 6.0 | | |
| COB(S)-2-O4 | 6.0 | | |
| Σ | 100.0 | | |

**Mixture N-25**

| | | | |
|---|---|---|---|
| CC-3-V | 46.5 | Clearing point [°C]: | 77.5 |
| COB(S)-2-O4 | 12.0 | Δn [589 nm, 20°C]: | 0.0998 |
| CPY-3-O2 | 12.0 | nₑ [589 nm, 20°C]: | 1.5818 |
| CY-3-O2 | 9.0 | nₒ [589 nm, 20°C]: | 1.4820 |
| DGUQU-2-F | 4.0 | Δ_{ε} [1 kHz, 20°C]: | 1.9 |
| DGUQU-4-F | 6.0 | ε_{∥} [1 kHz, 20°C]: | 7.9 |
| PPGU-3-F | 0.5 | ε_{⊥} [1 kHz, 20°C]: | 6.0 |
| CLP-3-T | 8.0 | γ₁ [mPa s] (20°C): | 90 |
| PP-1-2V1 | 2.0 | K₁ [pN] (20°C): | 13.8 |
| Σ | 100.0 | K₃ [pN] (20°C): | 15.2 |

**Mixture N-26**

| | | | |
|---|---|---|---|
| CC-3-V | 49.5 | Clearing point [°C]: | 80.5 |
| CCP-V-1 | 6.0 | Δn [589 nm, 20°C]: | 0.0996 |
| PGP-2-2V | 1.0 | nₑ [589 nm, 20°C]: | 1.5829 |
| PUQU-3-F | 9.0 | nₒ [589 nm, 20°C]: | 1.4833 |
| CDUQU-3-F | 7.5 | Δ_{ε} [1 kHz, 20°C]: | 2.3 |
| PPGU-3-F | 0.5 | ε_{∥} [1 kHz, 20°C]: | 7.7 |
| CPY-2-O2 | 3.0 | ε_{⊥} [1 kHz, 20°C]: | 5.3 |
| CPY-3-O2 | 10.0 | γ₁ [mPa s] (20°C): | 70 |
| COB(S)-2-O4 | 12.5 | K₁ [pN] (20°C): | 13.3 |
| Y-4O-O4 | 1.0 | K₃ [pN] (20°C): | 14.2 |
| Σ | 100.0 | | |

**Mixture N-27**

| | | | |
|---|---|---|---|
| CC-3-V | 52.0 | Clearing point [°C]: | 80 |
| CCP-V-1 | 3.0 | Δn [589 nm, 20°C]: | 0.0993 |
| PGP-2-2V | 1.0 | nₑ [589 nm, 20°C]: | 1.5821 |
| PUQU-3-F | 9.5 | nₒ [589 nm, 20°C]: | 1.4828 |
| CDUQU-3-F | 7.5 | Δ_{ε} [1 kHz, 20°C]: | 2.4 |
| PPGU-3-F | 0.5 | ε_{∥} [1 kHz, 20°C]: | 7.7 |
| CPY-2-O2 | 3.0 | ε_{⊥} [1 kHz, 20°C]: | 5.3 |
| CPY-3-O2 | 10.0 | γ₁ [mPa s] (20°C): | 70 |
| COB(S)-2-O4 | 13.5 | K₁ [pN] (20°C): | 13.3 |
| Σ | 100.0 | K₃ [pN] (20°C): | 14.1 |

**Mixture N-28**

| | | | |
|---|---|---|---|
| DGUQU-2-F | 1.5 | Clearing point [°C]: | 84.5 |
| DGUQU-4-F | 4.0 | Δn [589 nm, 20°C]: | 0.1254 |
| DPGU-4-F | 4.0 | nₑ [589 nm, 20°C]: | 1.6160 |
| PGUQU-3-F | 3.0 | nₒ [589 nm, 20°C]: | 1.4906 |
| PGUQU-4-F | 3.5 | Δ_{ε} [1 kHz, 20°C]: | 5.7 |
| PGUQU-5-F | 2.0 | ε_{∥} [1 kHz, 20°C]: | 9.0 |
| PPGU-3-F | 0.5 | ε_{⊥} [1 kHz, 20°C]: | 3.4 |
| CCVC-3-V | 3.5 | γ₁ [mPa s] (20°C): | 65 |
| PGP-1-2V | 6.5 | K₁ [pN] (20°C): | 15.2 |
| PGP-2-2V | 7.0 | K₃ [pN] (20°C): | 14.5 |
| PGP-3-2V | 3.5 | | |
| COB(S)-2-O4 | 2.5 | | |
| CC-3-V | 47.0 | | |
| PP-1-2V1 | 6.0 | | |
| CCS-3-T | 5.5 | | |
| Σ | 100.0 | | |

**Mixture N-29**

| | | | |
|---|---|---|---|
| CC-3-V | 49.5 | Clearing point [°C]: | 80 |
| CCP-V-1 | 6.0 | Δn [589 nm, 20°C]: | 0.0991 |
| PGP-2-2V | 1.0 | nₑ [589 nm, 20°C]: | 1.5824 |
| PUQU-3-F | 9.0 | nₒ [589 nm, 20°C]: | 1.4833 |
| CDUQU-3-F | 7.5 | Δ_{ε} [1 kHz, 20°C]: | 2.4 |
| PPGU-3-F | 0.5 | ε_{∥} [1 kHz, 20°C]: | 7.7 |
| CPY-2-O2 | 3.0 | ε_{⊥} [1 kHz, 20°C]: | 5.3 |
| CPY-3-O2 | 10.0 | γ₁ [mPa s] (20°C): | 71 |
| COB(S)-2-O4 | 6.5 | K₁ [pN] (20°C): | 13.4 |
| COB(S)-2-O5 | 6.0 | K₃ [pN] (20°C): | 14.3 |
| Y-4O-O4 | 1.0 | | |
| Σ | 100.0 | | |

**Mixture N-30**

| | | | |
|---|---|---|---|
| CC-3-V | 49.5 | Clearing point [°C]: | 81 |
| CCP-V-1 | 6.0 | Δn [589 nm, 20°C]: | 0.1001 |
| PGP-2-2V | 1.0 | nₑ [589 nm, 20°C]: | 1.5836 |
| PUQU-3-F | 9.0 | nₒ [589 nm, 20°C]: | 1.4835 |
| CDUQU-3-F | 7.5 | Δ_{ε} [1 kHz, 20°C]: | 2.3 |
| PPGU-3-F | 0.5 | ε_{∥} [1 kHz, 20°C]: | 7.7 |
| CPY-2-O2 | 3.0 | ε_{⊥} [1 kHz, 20°C]: | 5.4 |
| CPY-3-O2 | 10.0 | γ₁ [mPa s] (20°C): | 70 |
| COB(S)-2-O4 | 6.5 | K₁ [pN] (20°C): | 13.4 |
| COB(S)-V-O4 | 6.0 | K₃ [pN] (20°C): | 14.4 |
| Y-4O-O4 | 1.0 | | |
| Σ | 100.0 | | |

**Mixture N-31**

| | | | |
|---|---|---|---|
| CC-3-V | 49.5 | Clearing point [°C]: | 79 |
| CCP-V-1 | 6.0 | Δn [589 nm, 20°C]: | 0.0995 |
| PGP-2-2V | 1.0 | nₑ [589 nm, 20°C]: | 1.5834 |
| PUQU-3-F | 9.0 | nₒ [589 nm, 20°C]: | 1.4839 |
| CDUQU-3-F | 7.5 | Δ_{ε} [1 kHz, 20°C]: | 2.5 |
| PPGU-3-F | 0.5 | ε_{∥} [1 kHz, 20°C]: | 7.6 |
| CPY-2-O2 | 3.0 | ε_{⊥} [1 kHz, 20°C]: | 5.2 |
| CPY-3-O2 | 10.0 | γ₁ [mPa s] (20°C): | 69 |
| COB(S)-2-O4 | 6.5 | K₁ [pN] (20°C): | 13.3 |
| COB(S)-2-1 | 6.0 | K₃ [pN] (20°C): | 14.1 |
| Y-4O-O4 | 1.0 | | |
| Σ | 100.0 | | |

**Mixture N-32**

| | | | |
|---|---|---|---|
| CC-3-V | 50.0 | Clearing point [°C]: | 78.5 |
| CCP-V-1 | 7.5 | Δn [589 nm, 20°C]: | 0.0996 |
| PGP-2-2V | 3.0 | nₑ [589 nm, 20°C]: | 1.5842 |
| PUQU-3-F | 9.0 | nₒ [589 nm, 20°C]: | 1.4846 |
| CDUQU-3-F | 7.0 | Δ_{ε} [1 kHz, 20°C]: | 2.2 |
| PPGU-3-F | 0.5 | ε_{∥} [1 kHz, 20°C]: | 7.6 |
| CPY-3-O2 | 1.5 | ε_{⊥} [1 kHz, 20°C]: | 5.4 |
| COB(S)-2-O4 | 10.0 | γ₁ [mPa s] (20°C): | 69 |
| COB(S)-2-O5 | 10.0 | K₁ [pN] (20°C): | 13.4 |
| Y-4O-O4 | 1.5 | K₃ [pN] (20°C): | 13.3 |
| Σ | 100.0 | | |

**Mixture N-33**

| | | | |
|---|---|---|---|
| CC-3-V | 50.0 | Clearing point [°C]: | 78 |
| CCP-V-1 | 8.5 | Δn [589 nm, 20°C]: | 0.0999 |
| PGP-2-2V | 3.5 | nₑ [589 nm, 20°C]: | 1.5848 |
| PUQU-3-F | 9.0 | nₒ [589 nm, 20°C]: | 1.4849 |
| CDUQU-3-F | 7.0 | Δ_{ε} [1 kHz, 20°C]: | 2.2 |
| PPGU-3-F | 0.5 | ε_{∥} [1 kHz, 20°C]: | 7.6 |
| COB(S)-2-O4 | 10.0 | ε_{⊥} [1 kHz, 20°C]: | 5.4 |
| COB(S)-V-O4 | 9.5 | γ₁ [mPa s] (20°C): | 65 |
| Y-4O-O4 | 2.0 | K₁ [pN] (20°C): | 13.3 |
| Σ | 100.0 | K₃ [pN] (20°C): | 13.4 |

**Mixture N-34**

| | | | |
|---|---|---|---|
| DGUQU-4-F | 3.0 | Clearing point [°C]: | 79 |
| PPGU-3-F | 0.5 | Δn [589 nm, 20°C]: | 0.0994 |
| CCP-V-1 | 9.5 | ne [589 nm, 20°C]: | 1.5854 |
| CLY-2-O4 | 3.0 | nₒ [589 nm, 20°C]: | 1.4860 |
| CLY-3-O2 | 4.0 | Δε [1 kHz, 20°C]: | 2.5 |
| CLY-3-O3 | 4.0 | ε_{∥} [1 kHz, 20°C]: | 6.7 |
| PGP-2-2V | 4.0 | ε_{⊥} [1 kHz, 20°C]: | 4.2 |
| PGU-2-F | 7.0 | γ₁ [mPa s] (20°C): | 61 |
| PUQU-2-F | 5.0 | K₁ [pN] (20°C): | 13.4 |
| CC-3-V | 49.5 | K₃ [pN] (20°C): | 14.2 |
| CC-3-V1 | 3.5 | | |
| COB(S)-2-O4 | 7.0 | | |
| Σ | 100.0 | | |

**Mixture N-35**

| | | | |
|---|---|---|---|
| CC-3-V | 49.5 | Clearing point [°C]: | 81 |
| CCP-V-1 | 8.0 | Δn [589 nm, 20°C]: | 0.1004 |
| PGP-2-2V | 4.0 | ne [589 nm, 20°C]: | 1.5850 |
| PUQU-3-F | 7.0 | nₒ [589 nm, 20°C]: | 1.4846 |
| CDUQU-3-F | 9.0 | Δε [1 kHz, 20°C]: | 2.4 |
| PPGU-3-F | 0.5 | ε_{∥} [1 kHz, 20°C]: | 7.6 |
| CPY-3-O2 | 4.0 | ε_{⊥} [1 kHz, 20°C]: | 5.3 |
| COB(S)-2-O4 | 8.0 | γ₁ [mPa s] (20°C): | 67 |
| COB(S)-V-O4 | 8.0 | K₁ [pN] (20°C): | 13.5 |
| Y-4O-O4 | 2.0 | K₃ [pN] (20°C): | 13.9 |
| Σ | 100.0 | | |

**Mixture N-36**

| | | | |
|---|---|---|---|
| CC-3-V | 49.5 | Clearing point [°C]: | 79.5 |
| CCP-V-1 | 6.0 | Δn [589 nm, 20°C]: | 0.0990 |
| PUQU-3-F | 9.0 | ne [589 nm, 20°C]: | 1.5830 |
| CDUQU-3-F | 7.0 | nₒ [589 nm, 20°C]: | 1.4840 |
| PPGU-3-F | 0.5 | Δε [1 kHz, 20°C]: | 2.3 |
| CPY-2-O2 | 3.0 | ε_{∥} [1 kHz, 20°C]: | 7.5 |
| CPY-3-O2 | 10.0 | ε_{⊥} [1 kHz, 20°C]: | 5.3 |
| COB(S)-2-O4 | 7.0 | γ₁ [mPa s] (20°C): | 72 |
| COB(S)-2-1 | 7.0 | K₁ [pN] (20°C): | 13.4 |
| Y-4O-O4 | 1.0 | K₃ [pN] (20°C): | 13.9 |
| Σ | 100.0 | | |

**Mixture N-37**

| | | | |
|---|---|---|---|
| CC-3-V | 49.5 | Clearing point [°C]: | 80.5 |
| CCP-V-1 | 5.5 | Δn [589 nm, 20°C]: | 0.0999 |
| PGP-2-2V | 1.5 | ne [589 nm, 20°C]: | 1.5831 |
| PUQU-3-F | 8.5 | nₒ [589 nm, 20°C]: | 1.4832 |
| CDUQU-3-F | 7.5 | Δε [1 kHz, 20°C]: | 2.2 |
| PPGU-3-F | 0.5 | ε_{∥} [1 kHz, 20°C]: | 7.5 |
| CPY-2-O2 | 5.5 | ε_{⊥} [1 kHz, 20°C]: | 5.3 |
| CPY-3-O2 | 10.0 | γ₁ [mPa s] (20°C): | 70 |
| COB(S)-2-O4 | 10.5 | K₁ [pN] (20°C): | 13.2 |
| Y-4O-O4 | 1.0 | K₃ [pN] (20°C): | 14.3 |
| Σ | 100.0 | | |

**Mixture N- 38**

| | | | |
|---|---|---|---|
| CC-3-V | 51.0 | Clearing point [°C]: | 81 |
| CCP-V-1 | 2.5 | Δn [589 nm, 20°C]: | 0.1006 |
| PGP-2-2V | 1.0 | ne [589 nm, 20°C]: | 1.5835 |
| PUQU-3-F | 8.5 | nₒ [589 nm, 20°C]: | 1.4829 |
| CDUQU-3-F | 8.0 | Δε [1 kHz, 20°C]: | 2.3 |
| PPGU-3-F | 0.5 | ε_{∥} [1 kHz, 20°C]: | 7.6 |
| CPY-2-O2 | 8.0 | ε_{⊥} [1 kHz, 20°C]: | 5.3 |
| CPY-3-O2 | 10.0 | γ₁ [mPa s] (20°C): | 78 |
| COB(S)-2-O4 | 10.5 | K₁ [pN] (20°C): | 13.3 |
| Σ | 100.0 | K₃ [pN] (20°C): | 14.5 |

**Mixture N-39**

| | | | |
|---|---|---|---|
| B(S)-2O-O4 | 4.0 | Clearing point [°C]: | 79.5 |
| B(S)-2O-O5 | 4.0 | Δn [589 nm, 20°C]: | 0.0991 |
| CC-3-V | 36.0 | ne [589 nm, 20°C]: | 1.5831 |
| CC-V-V1 | 20.0 | nₒ [589 nm, 20°C]: | 1.4840 |
| CCP-V-1 | 3.5 | Δε [1 kHz, 20°C]: | 2.1 |
| CDUQU-3-F | 5.5 | ε_{∥} [1 kHz, 20°C]: | 7.3 |
| C LY-3-02 | 5.0 | ε_{⊥} [1 kHz, 20°C]: | 5.2 |
| COB(S)-2-O4 | 4.0 | γ₁ [mPa s] (20°C): | 62 |
| CPY-2-O2 | 8.5 | K₁ [pN] (20°C): | 12.7 |
| DGUQU-4-F | 3.5 | K₃ [pN] (20°C): | 15.1 |
| PGUQU-4-F | 5.5 | | |
| Y-4O-O4 | 0.5 | | |
| Σ | 100.0 | | |

**Mixture N-40**

| | | | |
|---|---|---|---|
| B(S)-2O-O4 | 4.0 | Clearing point [°C]: | 82 |
| B(S)-2O-O5 | 4.0 | Δn [589 nm, 20°C]: | 0.1011 |
| CC-3-V | 36.0 | ne [589 nm, 20°C]: | 1.5862 |
| CC-V-V1 | 20.0 | nₒ [589 nm, 20°C]: | 1.4851 |
| CCP-V-1 | 5.0 | Δε [1 kHz, 20°C]: | 1.7 |
| CDUQU-3-F | 5.0 | ε_{∥} [1 kHz, 20°C]: | 7.2 |
| CLY-3-O2 | 5.0 | ε_{⊥} [1 kHz, 20°C]: | 5.6 |
| COB(S)-2-O4 | 5.0 | γ₁ [mPa s] (20°C): | 73 |
| CPY-2-O2 | 6.5 | K₁ [pN] (20°C): | 13.4 |
| DGUQU-4-F | 4.0 | K₃ [pN] (20°C): | 15.5 |
| PGUQU-4-F | 4.5 | | |
| PY-3-O2 | 1.0 | | |
| Σ | 100.0 | | |

**Mixture N-41**

| | | | |
|---|---|---|---|
| B(S)-2O-O4 | 4.0 | Clearing point [°C]: | 70.5 |
| B(S)-2O-O5 | 4.0 | Δn [589 nm, 20°C]: | 0.0987 |
| CC-2V-V2 | 20.0 | ne [589 nm, 20°C]: | 1.5818 |
| CC-3-V | 38.0 | nₒ [589 nm, 20°C]: | 1.4831 |
| CCP-V-1 | 3.0 | Δε [1 kHz, 20°C]: | 1.8 |
| CDUQU-3-F | 7.5 | ε_{∥} [1 kHz, 20°C]: | 7.2 |
| COB(S)-2-O4 | 5.5 | ε_{⊥} [1 kHz, 20°C]: | 5.4 |
| CPY-2-O2 | 4.0 | γ₁ [mPa s] (20°C): | 61 |
| PGUQU-4-F | 6.5 | K₁ [pN] (20°C): | 13.1 |
| PY-3-O2 | 7.5 | K₃ [pN] (20°C): | 12.4 |
| Σ | 100.0 | | |

**Mixture N-42**

| | | | |
|---|---|---|---|
| B(S)-2O-O4 | 3.0 | Clearing point [°C]: | 80 |
| B(S)-2O-O5 | 4.0 | Δn [589 nm, 20°C]: | 0.0996 |
| CC-3-V | 36.5 | ne [589 nm, 20°C]: | 1.5831 |
| CC-V-V1 | 20.0 | nₒ [589 nm, 20°C]: | 1.4835 |
| CCP-V-1 | 2.5 | Δε [1 kHz, 20°C]: | 2.2 |
| CDUQU-3-F | 4.0 | ε_{∥} [1 kHz, 20°C]: | 7.6 |
| CLY-3-O2 | 4.0 | ε_{⊥} [1 kHz, 20°C]: | 5.4 |
| COB(S)-2-O4 | 5.5 | γ₁ [mPa s] (20°C): | 71 |
| DGUQU-4-F | 4.0 | K₁ [pN] (20°C): | 13.2 |
| PGUQU-4-F | 6.5 | K₃ [pN] (20°C): | 15.6 |
| CPY-3-O2 | 8.0 | | |
| CY-3-O2 | 2.0 | | |
| Σ | 100.0 | | |

**Mixture N-43**

| | | | |
|---|---|---|---|
| APUQU-2-F | 7.0 | Clearing point [°C]: | 77 |
| APUQU-3-F | 8.0 | Δn [589 nm, 20°C]: | 0.1007 |
| PPGU-3-F | 0.5 | ne [589 nm, 20°C]: | 1.5871 |
| CC-3-V | 48.0 | nₒ [589 nm, 20°C]: | 1.4864 |
| CCP-V-1 | 12.0 | Δε [1 kHz, 20°C]: | 2.3 |
| PP-1-2V1 | 0.5 | ε_{∥} [1 kHz, 20°C]: | 7.6 |
| COB(S)-2-O4 | 14.0 | ε_{⊥} [1 kHz, 20°C]: | 5.3 |
| PY-3-O2 | 10.0 | γ₁ [mPa s, 20°C]: | 79 |
| Σ | 100.0 | K₁ [pN, 20°C]: | 13.1 |
| | | K₃ [pN, 20°C]: | 13.4 |

**Mixture N-44**

| | | | |
|---|---|---|---|
| APUQU-2-F | 6.5 | Clearing point [°C]: | 78.3 |
| APUQU-3-F | 8.0 | Δn [589 nm, 20°C]: | 0.1006 |
| PPGU-3-F | 0.5 | nₑ [589 nm, 20°C]: | 1.5872 |
| CC-3-V | 40.0 | nₒ [589 nm, 20°C]: | 1.4866 |
| CCP-V-1 | 15.5 | Δε [1 kHz, 20°C]: | 2.1 |
| CCVC-3-V | 3.0 | ε_{∥} [1 kHz, 20°C]: | 7.4 |
| PP-1-2V1 | 1.0 | ε_{⊥} [1 kHz, 20°C]: | 5.3 |
| COB(S)-2-O4 | 10.0 | γ₁ [mPa s, 20°C]: | 86 |
| PY-3-O2 | 10.0 | K₁ [pN, 20°C]: | 12.8 |
| CY-3-O2 | 5.5 | K₃ [pN, 20°C]: | 13.9 |
| Σ | 100.0 | | |

**Mixture N-45**

| | | | |
|---|---|---|---|
| CC-3-V | 47.0 | Clearing point [°C]: | 89.4 |
| CCP-V-1 | 18.0 | Δn [589 nm, 20°C]: | 0.0998 |
| PP-1-2V1 | 5.0 | ne [589 nm, 20°C]: | 1.5866 |
| PGP-2-2V | 5.0 | nₒ [589 nm, 20°C]: | 1.4868 |
| CDUQU-3-F | 6.0 | Δε [1 kHz, 20°C]: | 3.1 |
| APUQU-3-F | 8.0 | ε_{∥} [1 kHz, 20°C]: | 6.6 |
| PPGU-3-F | 0.5 | ε_{⊥} [1 kHz, 20°C]: | 3.5 |
| CPY-3-O2 | 2.5 | γ₁ [mPa s, 20°C]: | 72 |
| CCY-5-O2 | 4.0 | K₁ [pN, 20°C]: | 14.7 |
| COB(S)-2-O4 | 4.0 | K₃ [pN, 20°C]: | 17.3 |
| Σ | 100.0 | | |

**Mixture N-46**

| | | | |
|---|---|---|---|
| CC-3-V | 42.5 | Clearing point [°C]: | 89.6 |
| CC-3-V1 | 3.0 | Δn [589 nm, 20°C]: | 0.0993 |
| CCP-V-1 | 16.0 | nₑ [589 nm, 20°C]: | 1.5865 |
| CCP-V2-1 | 8.0 | nₒ [589 nm, 20°C]: | 1.4872 |
| PGP-2-4 | 4.5 | Δε [1 kHz, 20°C]: | 2.8 |
| APUQU-3-F | 7.5 | ε_{∥} [1 kHz, 20°C]: | 6.5 |
| PGUQU-4-F | 6.0 | ε_{⊥} [1 kHz, 20°C]: | 3.7 |
| PPGU-3-F | 0.5 | γ₁ [mPa s, 20°C]: | 78 |
| CY-5-O2 | 6.0 | K₁ [pN, 20°C]: | 14.3 |
| COB(S)-2-O4 | 6.0 | K₃ [pN, 20°C]: | 16.1 |
| Σ | 100.0 | | |

**Mixture N-47**

| | | | |
|---|---|---|---|
| CC-3-V | 49.5 | Clearing point [°C]: | 79.5 |
| CCP-V-1 | 4.0 | Δn [589 nm, 20°C]: | 0.0988 |
| PGP-2-2V | 3.0 | ne [589 nm, 20°C]: | 1.5825 |
| PUQU-3-F | 11.0 | nₒ [589 nm, 20°C]: | 1.4837 |
| CCGU-3-F | 5.0 | Δε [1 kHz, 20°C]: | 2.2 |
| PPGU-3-F | 0.5 | ε_{∥} [1 kHz, 20°C]: | 6.5 |
| CPY-2-O2 | 3.0 | ε_{⊥} [1 kHz, 20°C]: | 4.3 |
| CPY-3-O2 | 10.0 | γ₁ [mPa s, 20°C]: | 64 |
| COB(S)-2-O4 | 7.0 | K₁ [pN, 20°C]: | 13.4 |
| CC-3-V1 | 6.0 | K₃ [pN, 20°C]: | 15.0 |
| CLP-3-T | 1.0 | | |
| Σ | 100.0 | | |

**Mixture N-48**

| | | | |
|---|---|---|---|
| CC-4-V1 | 23.0 | Clearing point [°C]: | 80.5 |
| CC-3-V1 | 8.0 | Δn [589 nm, 20°C]: | 0.1002 |
| CC-3-2V1 | 9.0 | ne [589 nm, 20°C]: | 1.5833 |
| CCH-301 | 6.0 | nₒ [589 nm, 20°C]: | 1.4831 |
| CCP-3-1 | 8.0 | Δε [1 kHz, 20°C]: | 2.8 |
| PGP-2-3 | 2.0 | ε_{∥} [1 kHz, 20°C]: | 7.2 |
| PGU-2-F | 6.5 | ε_{⊥} [1 kHz, 20°C]: | 4.4 |
| PGU-3-F | 8.0 | γ₁ [mPa s, 20°C]: | 90 |
| CCU-3-F | 11.0 | K₁ [pN, 20°C]: | 16.7 |
| CCY-3-O2 | 3.0 | K₃ [pN, 20°C]: | 14.6 |
| CY-3-O4 | 10.5 | | |
| COB(S)-2-O4 | 5.0 | | |
| Σ | 100.0 | | |

## Claims

1. A liquid-crystal medium, comprising one or more compounds of formula I 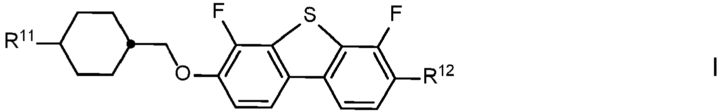 in which
R¹¹ and R¹² identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, 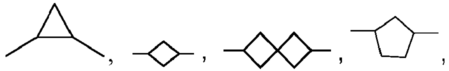 -O-, -CO-O- or -O-CO- in such a way that O atoms are not linked directly to one another, and in which one or more H atoms may be replaced by halogen,
and
one or more compounds selected from the group of compounds of the formulae II and III 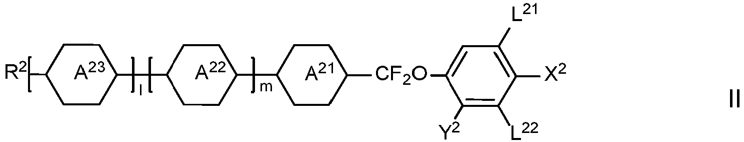 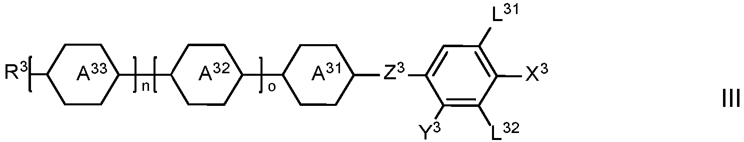 in which
R² and R³ independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, 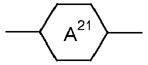 to 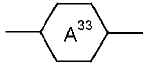 are independently of each other 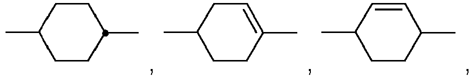 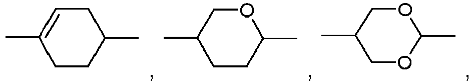 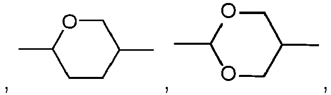 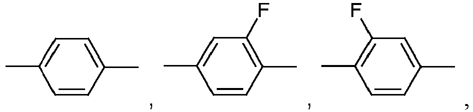 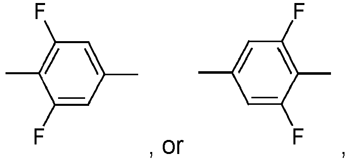
L²¹, L²², L³¹ and L³² independently of each other, denote H or F,
Y², Y³ identically or differently, denote H or CH₃,
X² and X³ independently of each other, denote halogen, halogenated alkyl or alkoxy with 1 to 3 C-atoms or halogenated alkenyl or alkenyloxy with 2 or 3 C-atoms,
Z³ denotes -CH₂CH₂-, -CF₂CF₂-, -COO-, *trans-* -CH=CH-, *trans*-CF=CF-, -CH₂O- or a single bond, and
l, m, n and o are, independently of each other, 0 or 1.

2. The liquid-crystal medium according to claim 1, wherein the medium comprises one or more compounds of formula II selected from the group of compounds of formulae II-1, II-2 and II-3 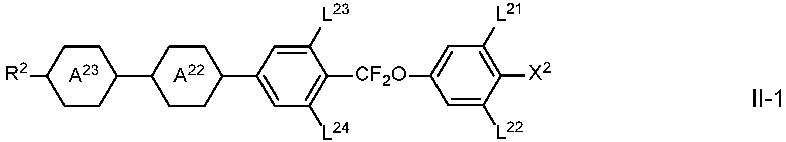 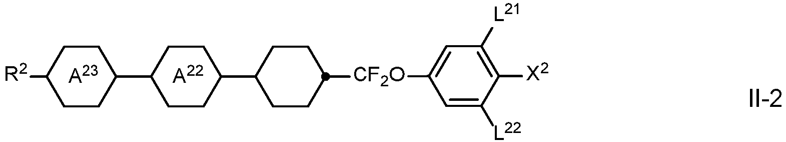 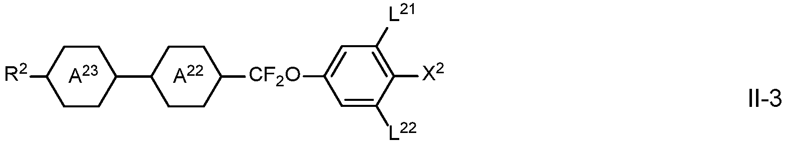 in which L²³ and L²⁴, identically or differently, denote H or F and the other occurring groups have the meanings defined in claim 1.

3. The liquid-crystal medium according to claim 1 or 2, wherein the medium comprises one or more compounds of formula III selected from the group of compounds of the formulae III-1 and III-2 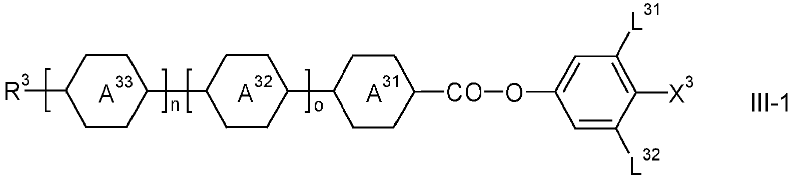 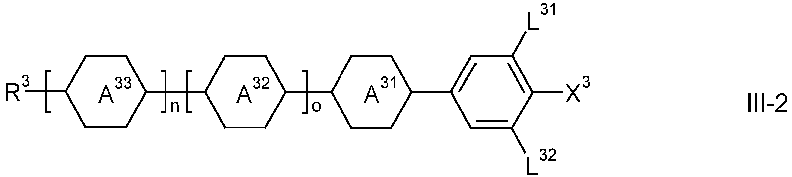 in which the occurring groups and parameters have the meanings given in claim 1.

4. The liquid-crystal medium according to one or more of claims 1 to 3, wherein the medium comprises one or more compounds selected from the group of compounds of the formulae II-1a to II-1h 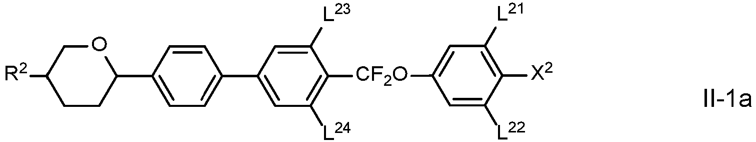 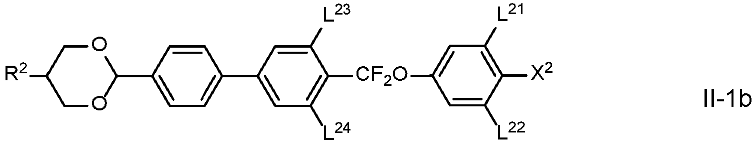 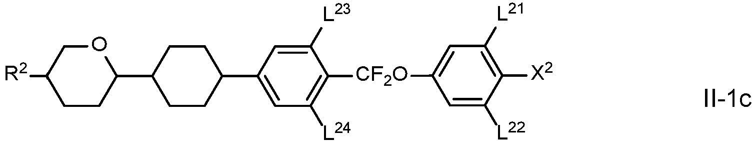 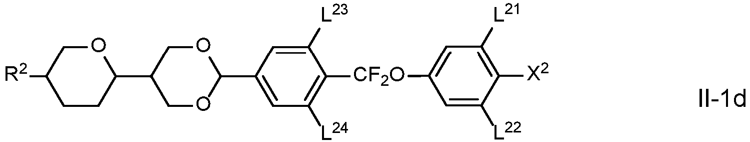 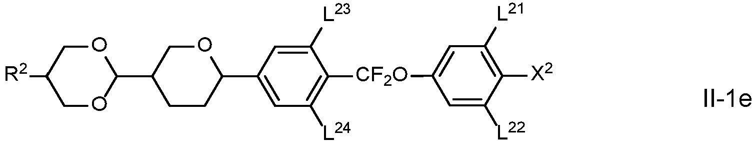 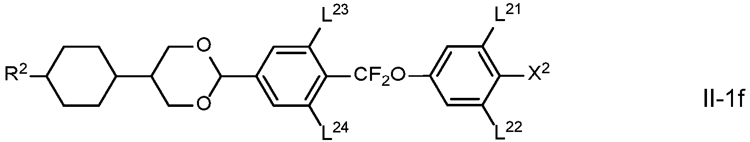 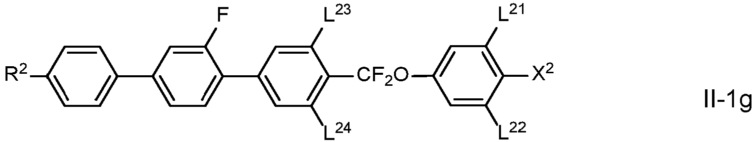 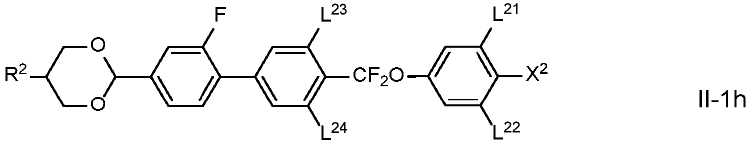 in which L²³ and L²⁴, identically or differently, denote H or F and the other occurring groups have the meanings given in claim 1.

5. The liquid-crystal medium according to one or more of claims 1 to 4, wherein the medium comprises one or more compounds selected from the group of compounds of the formulae Y and B 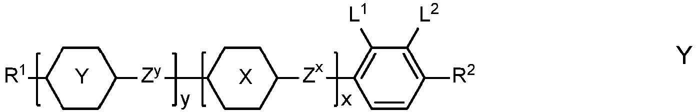 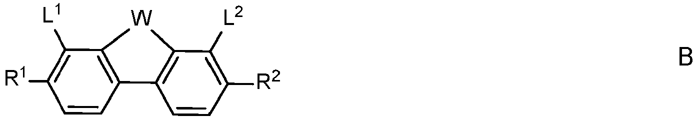 in which 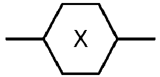 and 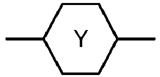 identically or differently, denote 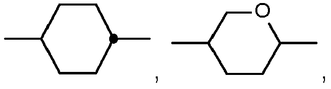 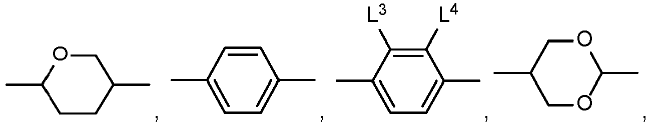 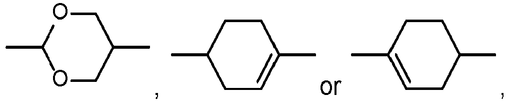
R¹, R² identically or differently, denote a straight-chain, branched or cyclic alkyl or alkoxy radical that is unsubstituted or halogenated and has 1 to 15 C atoms, where, in addition, one or more CH₂ groups in these radicals may each be replaced, independently of one another, by -C≡C-, -CF₂O-,
-CH=CH-, 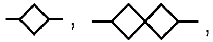 -O-, -CO-O- or -O-CO- in such a way that O atoms are not linked directly to one another,
Z^{x}, Z^{y} identically or differently,
denote -CH₂CH₂-, -CH=CH-, -CF₂O-, -OCF₂-, -CH₂O-, -OCH₂-,-CO-O-, -O-CO-, -C₂F₄-, -CF=CF-, -CH=CH-CH₂O-, or a single bond,
W denotes O or S,
L¹, L² identically or differently, denote H, F or Cl,
L³, L⁴ identically or differently, denote H, F or Cl,
x, y identically or differently, are 0, 1 or 2, with x+y ≤3,
wherein the compounds of formula Y contain at least one substituent L¹⁻⁴ that is F or Cl.

6. The liquid-crystal medium according to one or more of claims 1 to 5, wherein the medium comprises one or more compounds selected from the group of compounds of the formulae Y1, Y2 and LY 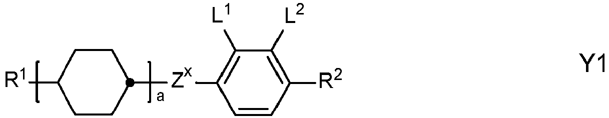 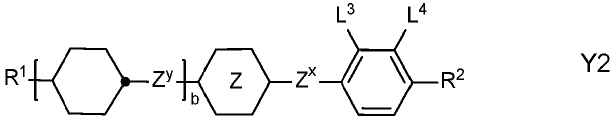 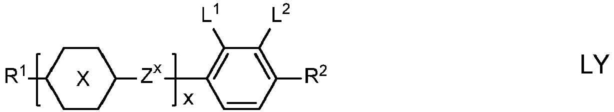 in which
R¹, R², Z^{x}, Z^{y}, L¹, L² have the meanings given in claim 5 for formula Y,
a, b and x identically or differently, are 1 or 2, 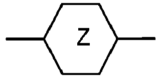 denotes 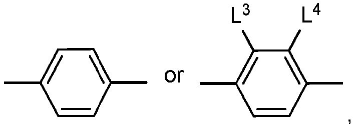 in which
L³ and L⁴, identically or differently, denote F or Cl 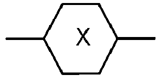 denotes 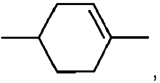 and in case x is 2 one group 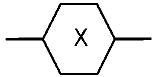 alternatively denotes

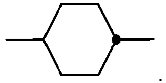

7. The liquid-crystal medium according to one or more of claims 1 to 6, wherein the medium comprises one or more compounds of formula IV 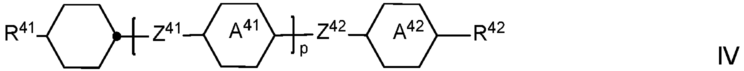 in which
R⁴¹ and R⁴² independently of each other, denote alkyl, alkoxy, fluorinated alkyl or fluorinated alkoxy with 1 to 7 C-atoms, or alkenyl, alkenyloxy, alkoxyalkyl or fluorinated alkenyl with 2 to 7 C-atoms, 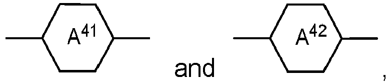 on each occurrence, identically or differently, denote 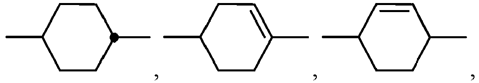 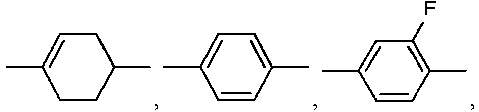 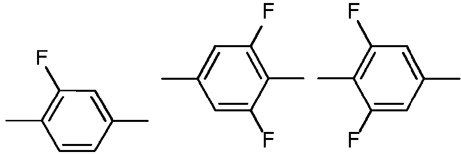 or 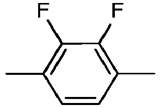
Z⁴¹, Z⁴² on each occurrence, identically or differently, denote -CH₂CH₂-, -COO-, *trans-* -CH=CH-, *trans-*-CF=CF-,-CH₂O-, -CF₂O-, -C=C- or a single bond, and
p is 0, 1 or 2.

8. The liquid-crystal medium according to one or more of claims 1 to 7, wherein the medium comprises one or more compounds of formula IV-1 and one or more compounds of formula IV-4 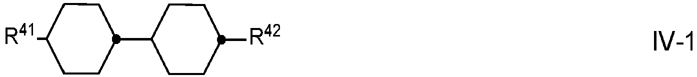 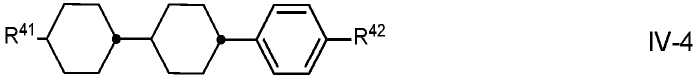 in which
R⁴¹ and R⁴² independently of each other, denote alkyl, alkoxy, fluorinated alkyl or fluorinated alkoxy with 1 to 7 C-atoms, or alkenyl, alkenyloxy, alkoxyalkyl or fluorinated alkenyl with 2 to 7 C-atoms.

9. The liquid-crystal medium according to one or more of claims 1 to 8, wherein the medium comprises one or more compounds selected from the group of compounds of formulae III-2a to III-2l 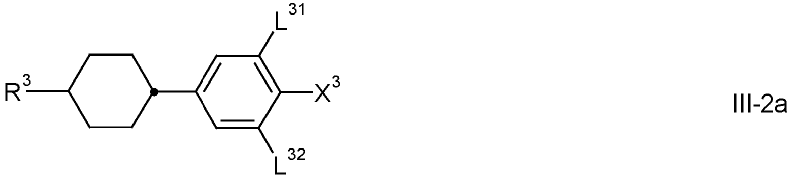 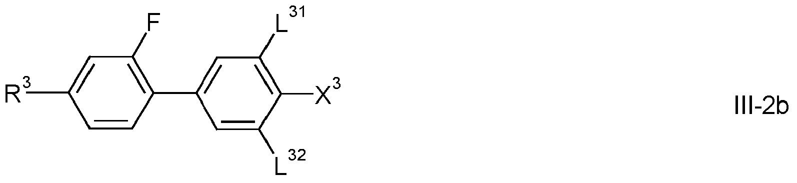 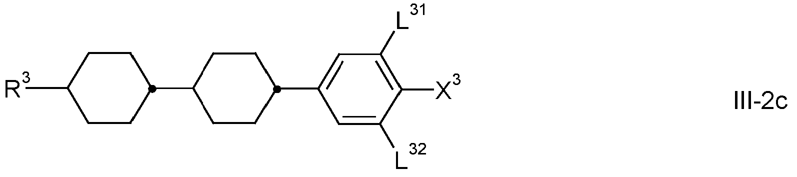 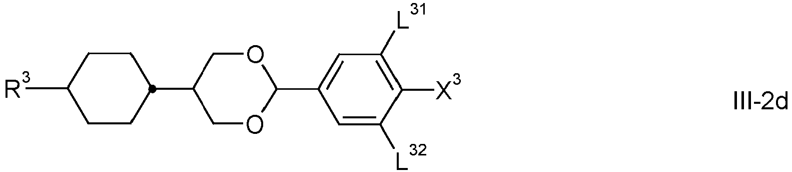 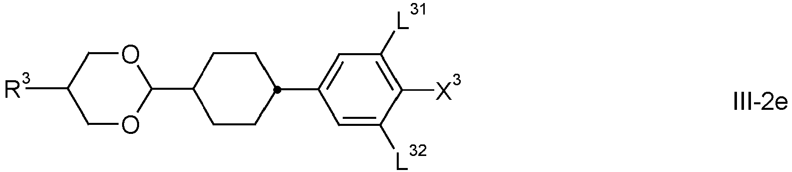 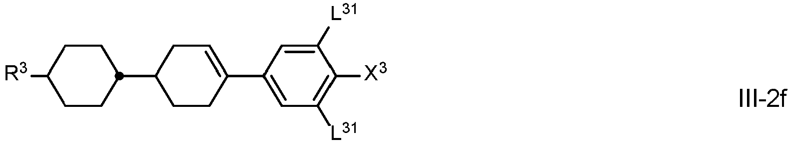 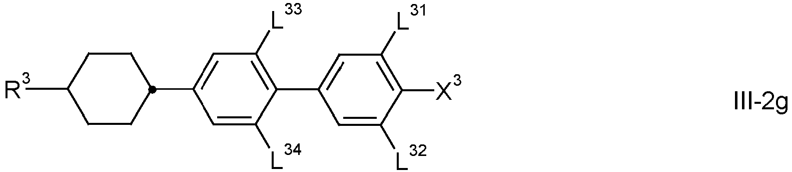 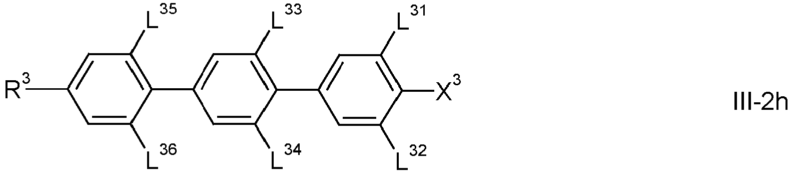 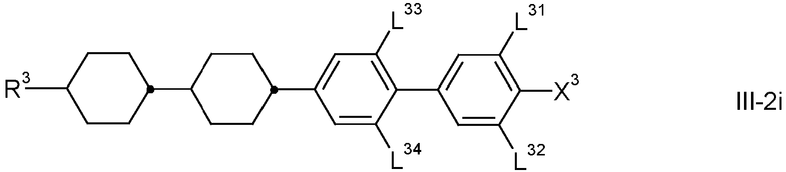 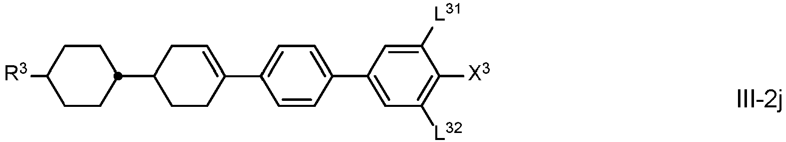 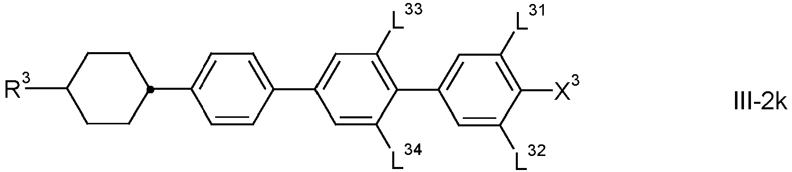 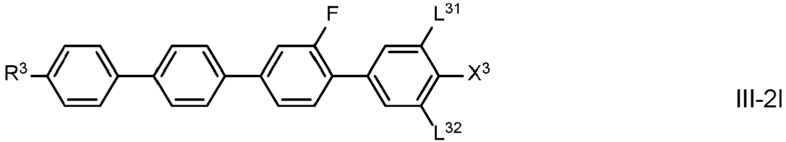 in which L³³, L³⁴, L³⁵ and L³⁶, independently of one another, denote H or F and the other occurring groups have the meanings given in claim 1 .

10. The liquid-crystal medium according to one or more of claims 1 to 9, wherein the medium has a dielectric anisotropy in the range of from +2.0 to +5.0.

11. A process for the preparation of the liquid-crystalline medium according to one or more of claims 1 to 10, **characterised in that** one or more compounds of the formula I are mixed with one or more compounds of the formula II, one or more compounds of formula Y and/or B, and one or more compounds selected from the group consisting of formulae III, IV, V and VI.

12. Use of the liquid-crystalline medium according to one or more of claims 1 to 10 for electro-optical purposes.

13. Use according to claim 12, wherein the use is for shutter glasses, LC windows, for 3D applications, in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays.

14. A Liquid-crystal display containing a liquid-crystal medium according to one or more of claims 1 to 10.

15. The Liquid-crystal display according to claim 14, wherein the display is a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display.

## Patentansprüche

1. Flüssigkristallmedium enthaltend eine oder mehrere Verbindungen der Formel I 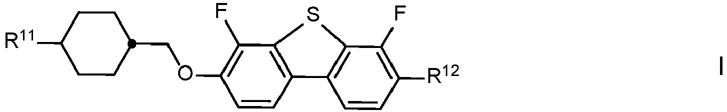 worin
R¹¹ und R¹² gleich oder verschieden H, einen Alkyl- oder Alkoxyrest mit 1 bis 15 C-Atomen bedeuten, worin in diesen Resten eine oder mehrere CH₂-Gruppen gegebenenfalls jeweils unabhängig voneinander so durch -C≡C-, -CF₂O-, -OCF₂-, -CH=CH-, 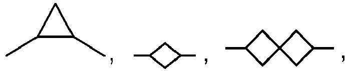 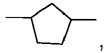 -O-, -CO-O- oder -O-CO- ersetzt sind, dass O-Atome nicht direkt miteinander verknüpft sind, und worin ein oder mehrere H-Atome durch Halogen ersetzt sein können,
und
eine oder mehrere Verbindungen, die ausgewählt sind aus der Gruppe der Verbindungen der Formeln II und III 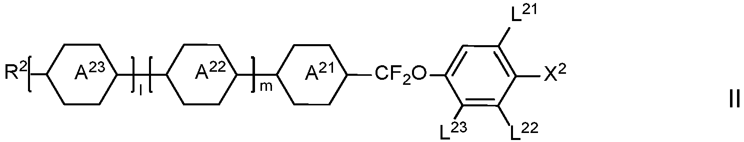 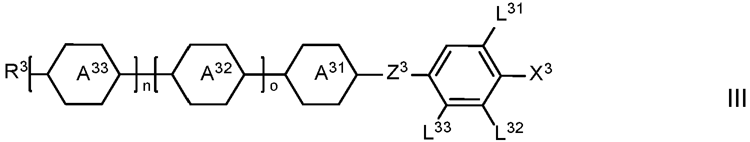 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 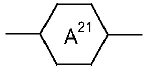 bis 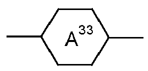 unabhängig voneinander 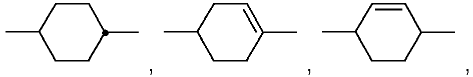 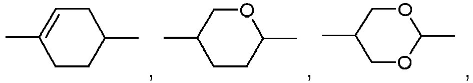 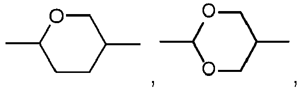 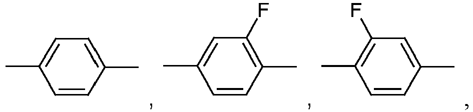 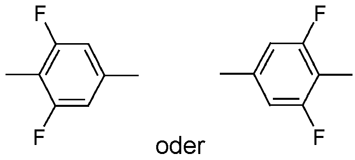 sind,
L²¹, L²², L³¹ und L³² unabhängig voneinander H oder F bedeuten,
Y², Y³ gleich oder verschieden H oder CH₃ bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 bis 3 C-Atomen bedeuten,
Z³ -CH₂CH₂-, -CF₂CF₂-, -COO-, *trans*--CH=CH-, *trans-*-CF=CF-, -CH₂O- oder eine Einfachbindung bedeutet und
l, m, n und o unabhängig voneinander 0 oder 1 sind.

2. Flüssigkristallmedium nach Anspruch 1, bei dem das Medium eine oder mehrere Verbindungen der Formel II enthält, die ausgewählt sind aus der Gruppe der Verbindungen der Formeln II-1, II-2 und II-3 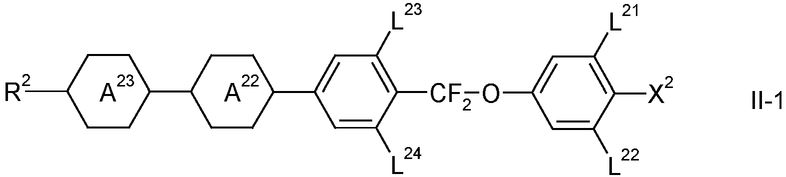 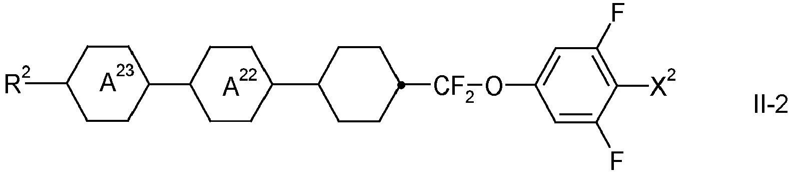 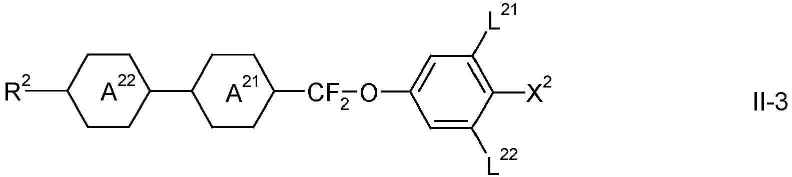 worin L²³ und L²⁴ gleich oder verschieden H oder F bedeuten und die anderen auftretenden Gruppen die in Anspruch 1 definierten Bedeutungen besitzen.

3. Flüssigkristallmedium nach Anspruch 1 oder 2, bei dem das Medium eine oder mehreren Verbindungen der Formel III enthält, die ausgewählt sind aus der Gruppe der Verbindungen der Formeln III-1 und III-2 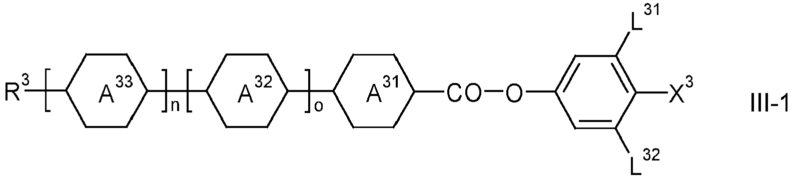 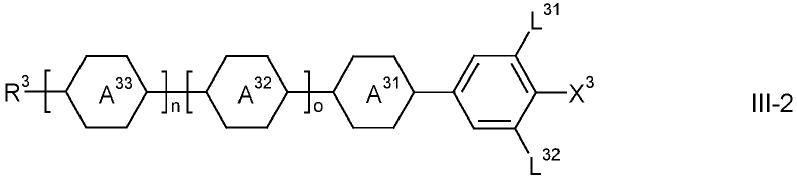 worin die auftretenden Gruppen und Parameter die in Anspruch 1 gegebenen Bedeutungen besitzen.

4. Flüssigkristallmedium nach einem oder mehreren der Ansprüche 1 bis 3, bei dem das Medium eine oder mehrere Verbindungen enthält, die ausgewählt sind aus der Gruppe der Verbindungen der Formeln II-1a bis II-1h 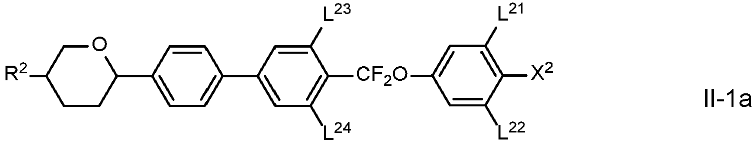 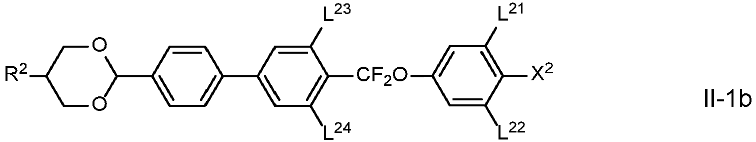 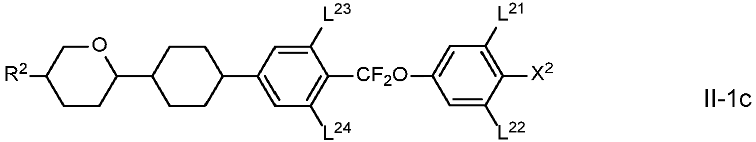 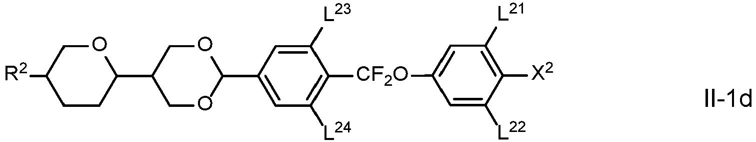 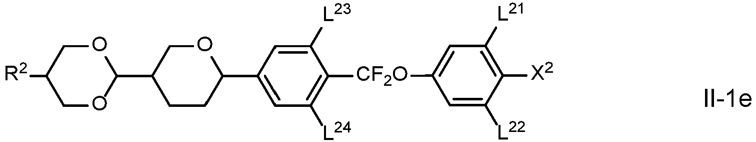 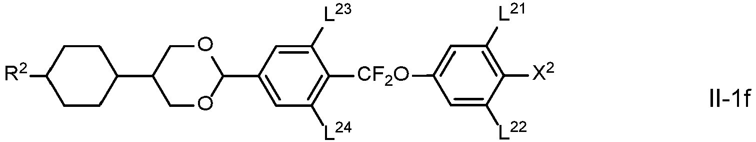 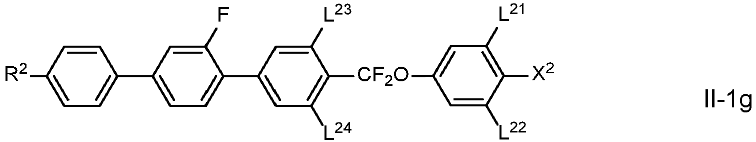 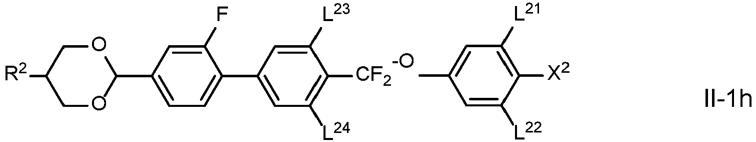 worin L²³ und L²⁴ gleich oder verschieden H oder F bedeuten und die anderen auftretenden Gruppen die in Anspruch 1 gegebenen Bedeutungen besitzen.

5. Flüssigkristallmedium nach einem oder mehreren der Ansprüche 1 bis 4, bei dem das Medium eine oder mehrere Verbindungen enthält, die ausgewählt sind aus der Gruppe der Verbindungen der Formeln Y und B 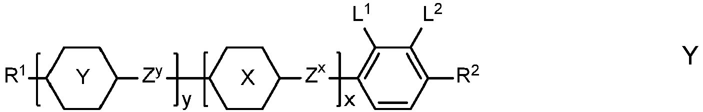 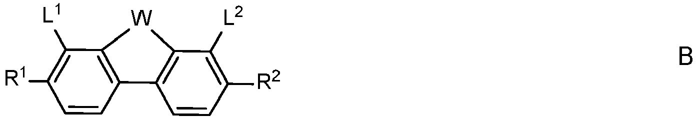 worin 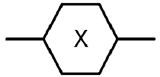 und 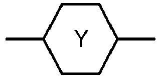 gleich oder verschieden 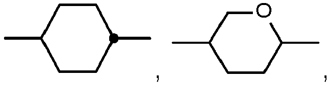 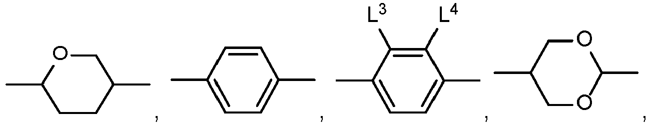 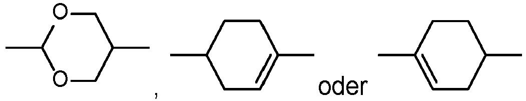 bedeuten,
R¹, R² gleich oder verschieden einen geradkettigen, verzweigten oder cyclischen Alkyl- oder Alkoxyrest bedeuten, der unsubstituiert oder halogeniert ist und 1 bis 15 C-Atomen aufweist, wobei in diesen Resten zusätzlich eine oder mehrere CH₂-Gruppen jeweils unabhängig voneinander so durch -C≡C-, -CF₂O-, -CH=CH-, 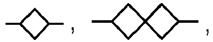 -O-, -CO-O- oder -O-CO- ersetzt sein können, dass O-Atome nicht direkt miteinander verknüpft sind,
Z^{x} gleich oder verschieden -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung bedeuten,
W O oder S bedeutet,
L¹, L² gleich oder verschieden H, F oder Cl bedeuten,
L³, L⁴ gleich oder verschieden H, F oder Cl bedeuten,
x, y gleich oder verschieden 0, 1 oder 2 sind, wobei x+y ≤3,
bei dem die Verbindungen der Formel Y mindestens einen Substituenten L¹⁻⁴ enthalten, der F oder Cl ist.

6. Flüssigkristallmedium nach einem oder mehreren der Ansprüche 1 bis 5, bei dem das Medium eine oder mehrere Verbindungen enthält, die ausgewählt sind aus der Gruppe der Verbindungen der Formeln Y1, Y2 und LY 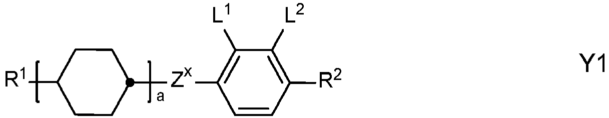 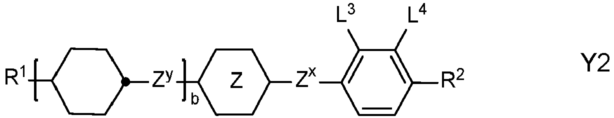 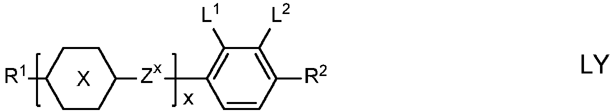 worin
R¹, R², Z^{x}, Z^{y}, L¹, L² die in Anspruch 5 für Formel Y gegebenen Bedeutungen besitzen,
a, b und x gleich oder verschieden 1 oder 2 sind, 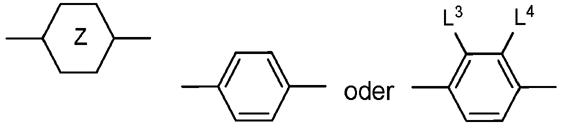 bedeutet, worin
L³ und L⁴ gleich oder verschieden F oder Methyl bedeuten, 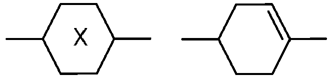 bedeutet und, wenn x 2 ist, eine Gruppe 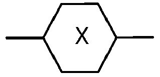 alternativ 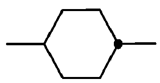 bedeutet.

7. Flüssigkristallmedium nach einem oder mehreren der Ansprüche 1 bis 6, bei dem das Medium eine oder mehrere Verbindungen der Formel IV 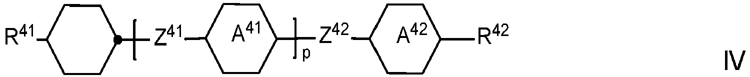 enthält, worin
R⁴¹ und R⁴² unabhängig voneinander Alkyl, Alkoxy, fluoriertes Alkyl oder fluoriertes Alkoxy mit 1 bis 7 C-Atomen oder Alkenyl, Alkenyloxy, Alkoxyalkyl oder fluoriertes Alkenyl mit 2 bis 7 C-Atomen bedeuten, 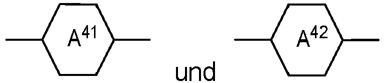 bei jedem Auftreten gleich oder verschieden 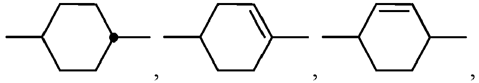 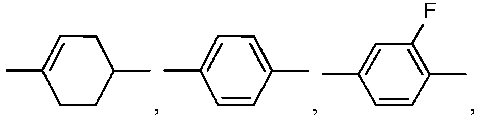 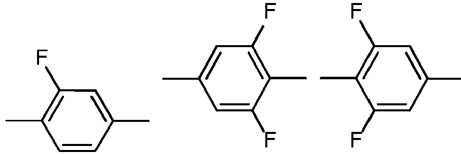 oder 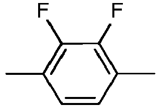 bedeuten,
Z⁴¹, Z⁴² bei jedem Auftreten gleich oder verschieden -CH₂CH₂-, -COO-, *trans*--CH=CH-, *trans*--CF=CF-, -CH₂O-, -CF₂O-, -C=C- oder eine Einfachbindung bedeuten und
p 0, 1 oder 2 ist.

8. Flüssigkristallmedium nach einem oder mehreren der Ansprüche 1 bis 7, bei dem das Medium eine oder mehrere Verbindungen der Formel IV-1 und eine oder mehrere Verbindungen der Formel IV-4 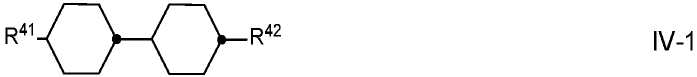 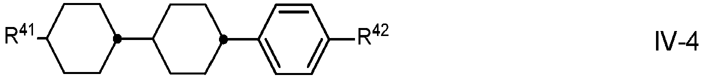 enthält, worin
R⁴¹ und R⁴² unabhängig voneinander Alkyl, Alkoxy, fluoriertes Alkyl oder fluoriertes Alkoxy mit 1 bis 7 C-Atomen oder Alkenyl, Alkenyloxy, Alkoxyalkyl oder fluoriertes Alkenyl mit 2 bis 7 C-Atomen bedeuten.

9. Flüssigkristallmedium nach einem oder mehreren der Ansprüche 1 bis 8, bei dem das Medium eine oder mehrere Verbindungen enthält, die ausgewählt sind aus der Gruppe der Verbindungen der Formeln III-2a bis III-2l 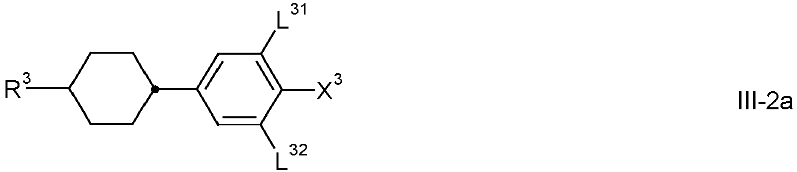 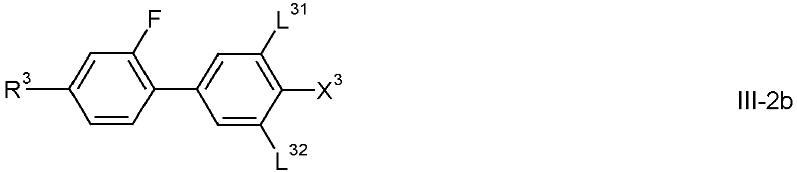 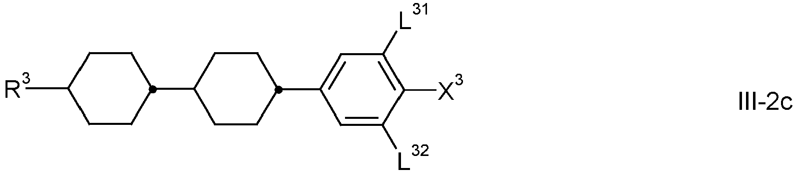 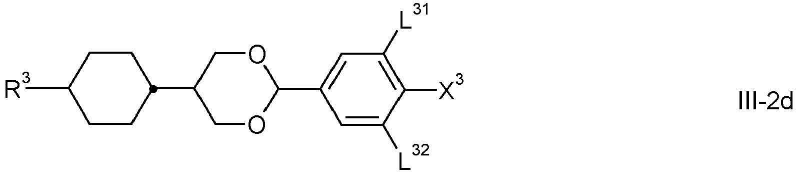 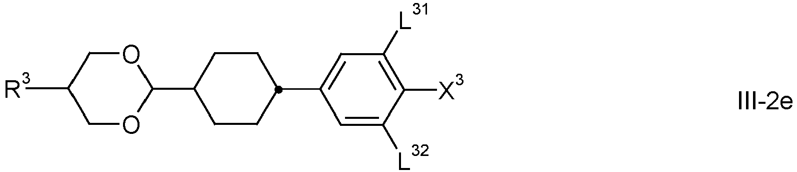 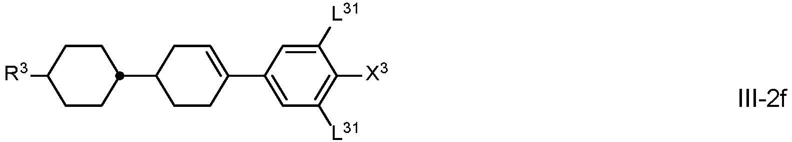 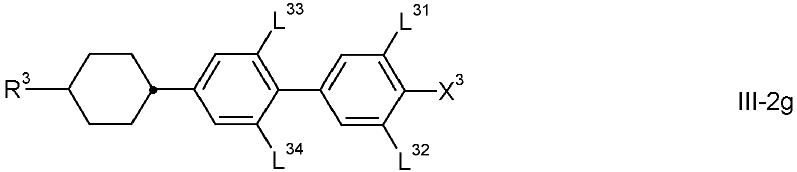 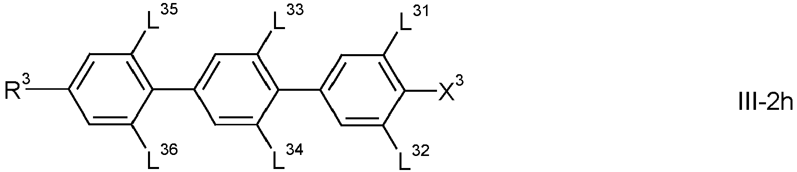 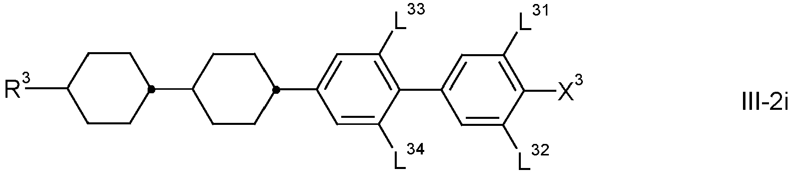 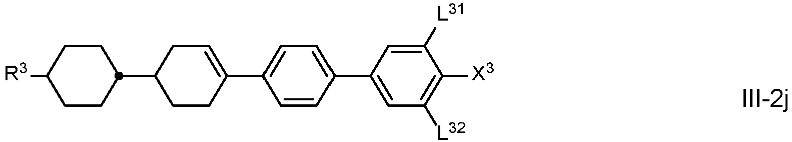 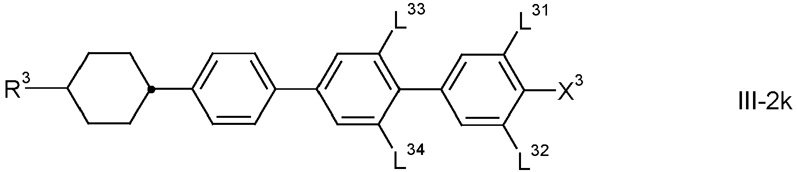 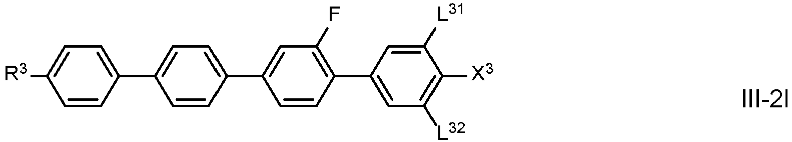 worin L³³, L³⁴, L³⁵ und L³⁶ unabhägig voneinander H oder F bedeuten und die anderen auftretenden Gruppen die in Anspruch 1 gegebenen Bedeutungen besitzen.

10. Flüssigkristallmedium nach einem oder mehreren der Ansprüche 1 bis 9, bei dem das Medium eine dielektrische Anisotropie im Bereich von +2,0 bis +5,0 aufweist.

11. Verfahren zur Herstellung des flüssigkristallinen Mediums nach einem oder mehreren der Ansprüche 1 bis 10, **dadurch gekennzeichnet, dass** man eine oder mehrere Verbindungen der Formel I mit einer oder mehreren Verbindungen der Formel II, einer oder mehreren Verbindungen der Formel Y und/oder B und einer oder mehreren aus der Gruppe bestehend aus den Formeln III, IV, V und VI ausgewählten Verbindungen mischt.

12. Verwendung des flüssigkristallinen Mediums nach einem oder mehreren der Ansprüche 1 bis 10 für elektrooptische Zwecke.

13. Verwendung nach Anspruch 12, bei der die Verwendung für Shutter-Brillen, FK-Fenster, für 3D-Anwendungen, in TN-, PS-TN-, STN-, TN-TFT-, OCB-, IPS-, PS-IPS-, FFS-, HB-FFS-, PS-HB-FFS-, SA-HB-FFS-, polymerstabilisierten SA-HB-FFS-, positiven VA- und positiven PS-VA-Anzeigen erfolgt.

14. Flüssigkristallanzeige enthaltend ein Flüssigkristallmedium nach einem oder mehreren der Ansprüche 1 bis 10.

15. Flüssigkristallanzeige nach Anspruch 14, bei der die Anzeige eine TN-, PS-TN-, STN-, TN-TFT-, OCB-, IPS-, PS-IPS-, FFS-, HB-FFS-, PS-HB-FFS-, SA-HB-FFS-, polymerstabilisierte SA-HB-FFS-, positive VA- und positive PS-VA-Anzeige ist.

## Revendications

1. Milieu cristallin liquide, comprenant un ou plusieurs composé(s) de la formule I 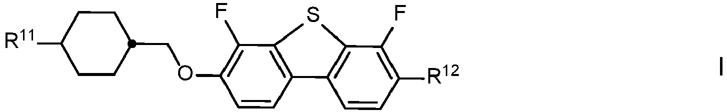 dans laquelle
R¹¹ et R¹² représentent, de manière identique ou différente, H, un radical alkyle ou alcoxy qui comporte de 1 à 15 atome(s) de C, où un ou plusieurs groupe(s) CH₂ dans ces radicaux est/sont en option remplacé(s), de manière indépendante les uns des autres, par -C≡C-, -CF₂O-, -OCF₂-, -CH=CH-, 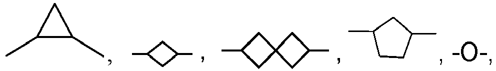 -CO-O- ou -O-CO- de telle sorte que des atomes de O ne soient pas liés directement les uns aux autres, et où un ou plusieurs atome(s) de H peut/peuvent être remplacé(s) par halogène,
et
un ou plusieurs composé(s) qui est/sont sélectionné(s) parmi le groupe de composés des formules II et III 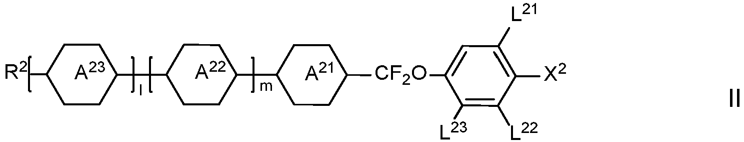 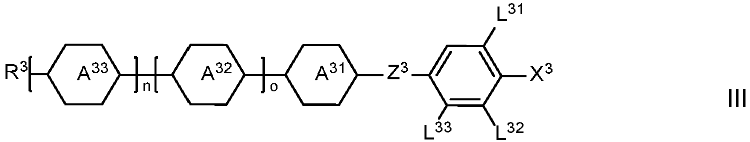 dans lesquelles
R² et R³ représentent, de manière indépendante l'un de l'autre, alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C, 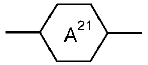 à 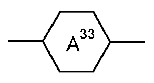 sont, de manière indépendante les uns des autres 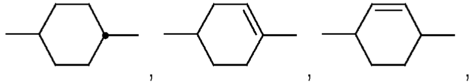 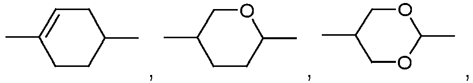 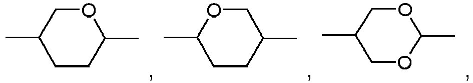 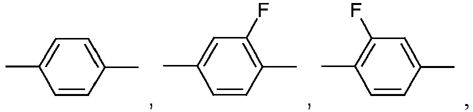 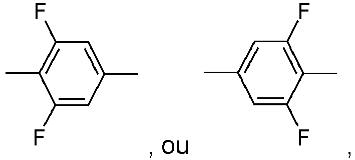
L²¹, L²², L³¹ et L³² représentent, de manière indépendante les uns des autres, H ou F,
Y², Y³ représentent, de manière identique ou différente, H ou CH₃,
X² et X³ représentent, de manière indépendante l'un de l'autre, halogène, alkyle ou alcoxy halogéné qui comporte de 1 à 3 atome(s) de C ou alkényle ou alkényloxy halogéné qui comporte 2 ou 3 atomes de C,
Z³ représente -CH₂CH₂-, -CF₂CF₂-, -COO-, *trans*-CH=CH-, trans-CF=CF-, -CH₂O- ou une liaison simple, et
l, m, n et o sont, de manière indépendante les uns des autres, 0 ou 1.

2. Milieu cristallin liquide selon la revendication 1, dans lequel le milieu comprend un ou plusieurs composé(s) de la formule II qui est/sont sélectionné(s) parmi le groupe de composés des formules II-1, II-2 et II-3 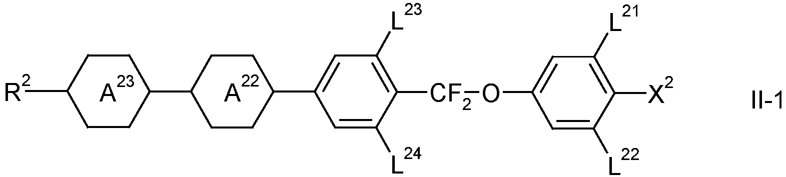 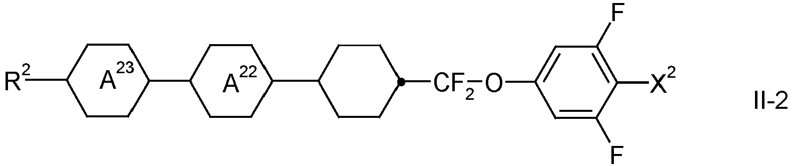 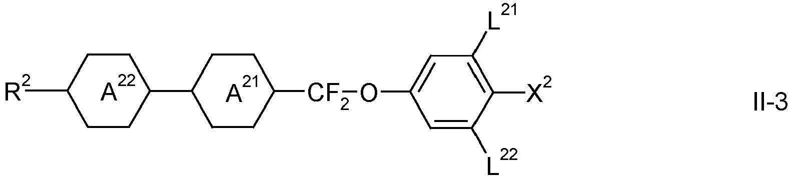 dans lesquelles L²³ et L²⁴ représentent, de manière identique ou différente, H ou F et les autres groupes rencontrés présentent les significations qui ont été définies selon la revendication 1.

3. Milieu cristallin liquide selon la revendication 1 ou 2, dans lequel le milieu comprend un ou plusieurs composé(s) de la formule III qui est/sont sélectionné(s) parmi le groupe de composés des formules III-1 et III-2 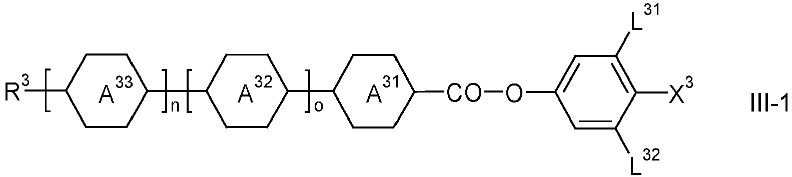 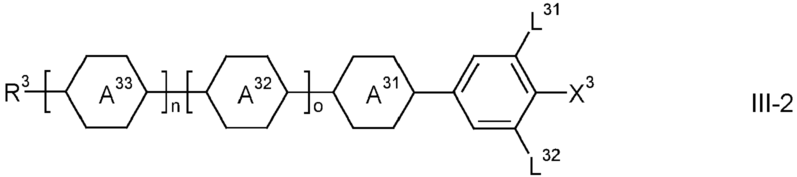 dans lequelles les groupes rencontrés présentent les significations qui ont été données selon la revendication 1.

4. Milieu cristallin liquide selon une ou plusieurs des revendications 1 à 3, dans lequel le milieu comprend un ou plusieurs composé(s) qui est/sont sélectionné(s) parmi le groupe de composés des formules II-1a à II-1h 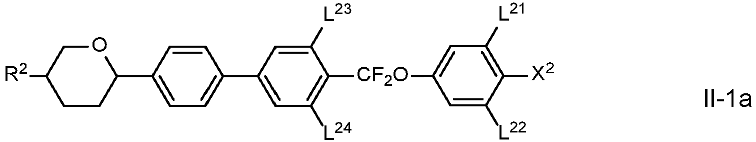 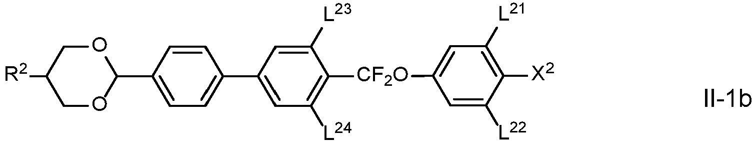 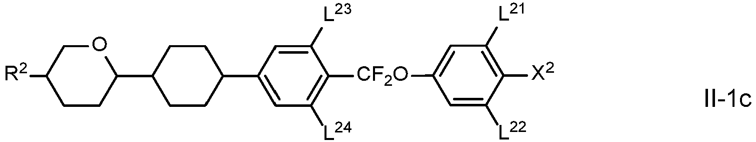 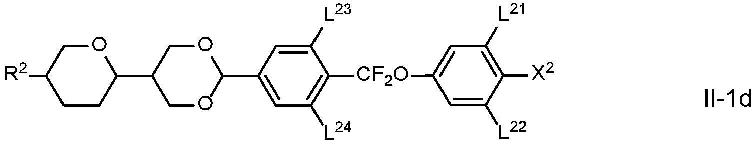 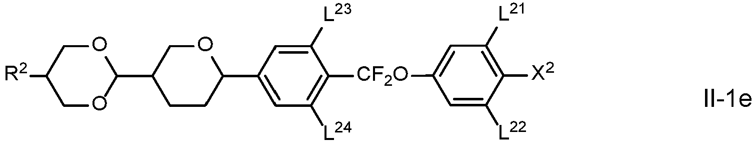 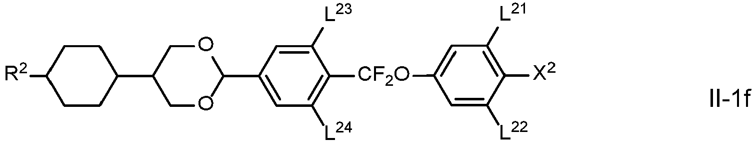 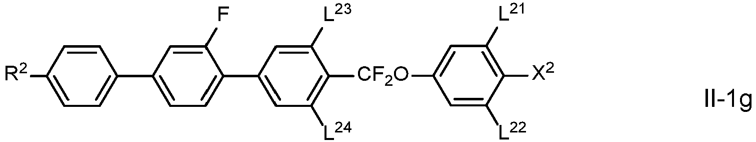 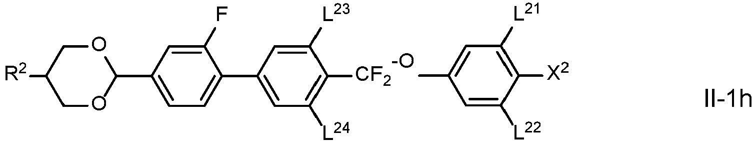 dans lequelles L²³ et L²⁴ représentent, de manière identique ou différente, H ou F et les autres groupes rencontrés présentent les significations qui ont été données selon la revendication 1.

5. Milieu cristallin liquide selon une ou plusieurs des revendications 1 à 4, dans lequel le milieu comprend un ou plusieurs composé(s) qui est/sont sélectionné(s) parmi le groupe de composés des formules Y et B 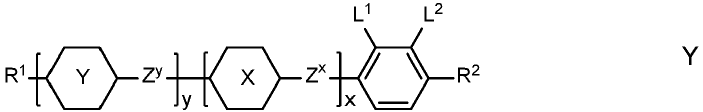 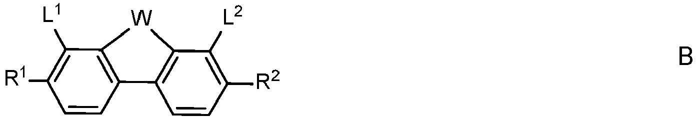 dans lesquelles 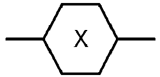 et 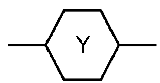 représentent, de manière identique ou différente, 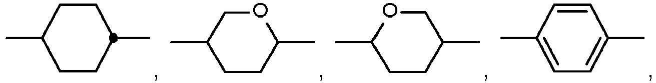 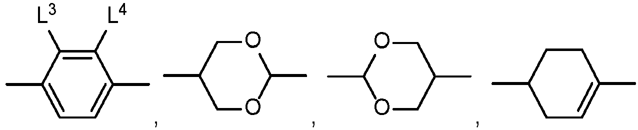 ou 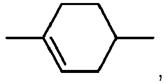
R¹, R² représentent, de manière identique ou différente, un radical alkyle ou alcoxy en chaîne droite, ramifié ou cyclique qui est non substitué ou halogéné et qui comporte de 1 à 15 atome(s) de C, où, en outre, un ou plusieurs groupe(s) CH₂ dans ces radicaux peut/peuvent chacun être remplacé(s), de manière indépendante les uns des autres, par -C≡C-, -CF₂O-, -CH=CH-, 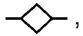 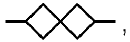 -O-, -CO-O- ou -O-CO-de telle sorte que des atomes de O ne soient pas liés directement les uns aux autres,
Z^{x}, Z^{y} représentent, de manière identique ou différente, -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple,
W représente O ou S,
L¹, L² représentent, de manière identique ou différente, H, F ou Cl,
L³, L⁴ représentent, de manière identique ou différente, H, F ou Cl,
x, y sont, de manière identique ou différente, 0, 1 ou 2, avec x + y ≤ 3,
dans lequel les composés de la formule Y contiennent au moins un substituant L¹⁻⁴ qui est F ou Cl.

6. Milieu cristallin liquide selon une ou plusieurs des revendications 1 à 5, dans lequel le milieu comprend un ou plusieurs composé(s) qui est/sont sélectionné(s) parmi le groupe de composés des formules Y1, Y2 et LY 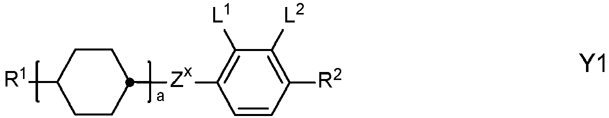 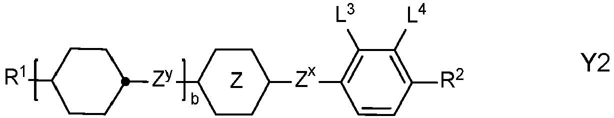 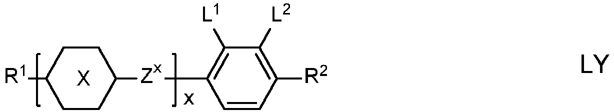 dans lesquelles
R¹, R², Z^{x}, Z^{y}, L¹, L² présentent les significations qui ont été données selon la revendication 5 pour la formule Y,
a, b et x sont, de manière identique ou différente, 1 ou 2, 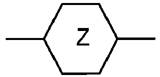 représente 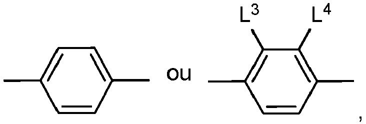 où
L³ et L⁴ représentent, de manière identique ou différente, F ou Cl 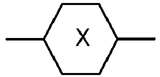 représente 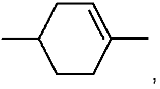 et dans le cas où x est 2, un groupe 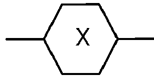 représente à titre d'alternative

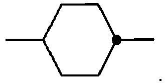

7. Milieu cristallin liquide selon une ou plusieurs des revendications 1 à 6, dans lequel le milieu comprend un ou plusieurs composé(s) de la formule IV 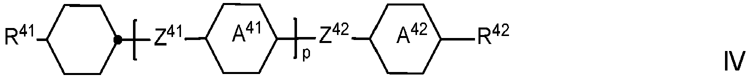 dans laquelle
R⁴¹ et R⁴² représentent, de manière indépendante l'un de l'autre, alkyle, alcoxy, alkyle fluoré ou alcoxy fluoré qui comporte de 1 à 7 atome(s) de C, ou alkényle, alkényloxy, alcoxyalkyle ou alkényle fluoré qui comporte de 2 à 7 atomes de C, 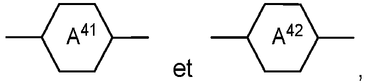 représentent pour chaque occurrence, de manière identique ou différente, 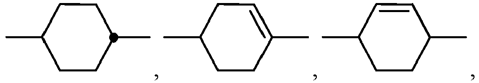 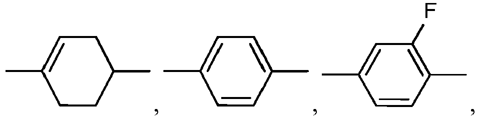 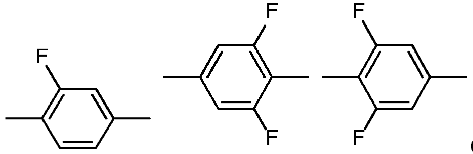 ou 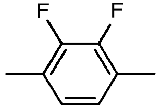
Z⁴¹, Z⁴² représentent pour chaque occurrence, de manière identique ou différente, -CH₂CH₂-, -COO-, *trans*-CH=CH-, trans-CF=CF-, -CH₂O-, -CF₂O-, -C=C- ou une liaison simple, et
p est 0, 1 ou 2.

8. Milieu cristallin liquide selon une ou plusieurs des revendications 1 à 7, dans lequel le milieu comprend un ou plusieurs composé(s) de la formule IV-1 et un ou plusieurs composé(s) de la formule IV-4 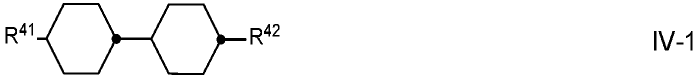 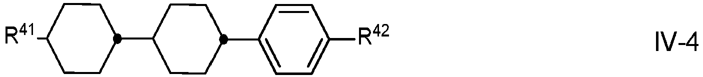 dans lesquelles
R⁴¹ et R⁴² représentent, de manière indépendante l'un de l'autre, alkyle, alcoxy, alkyle fluoré ou alcoxy fluoré qui comporte de 1 à 7 atome(s) de C, ou alkényle, alkényloxy, alcoxyalkyle ou alkényle fluoré qui comporte de 2 à 7 atomes de C.

9. Milieu cristallin liquide selon une ou plusieurs des revendications 1 à 8, dans lequel le milieu comprend un ou plusieurs composé(s) qui est/sont sélectionné(s) parmi le groupe de composés des formules III-2a à III-2l 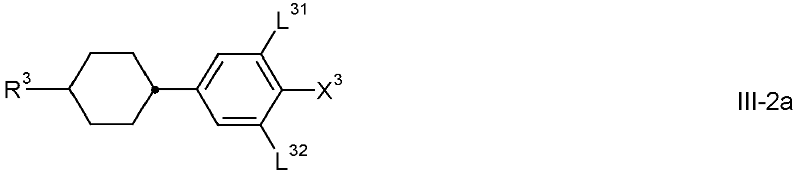 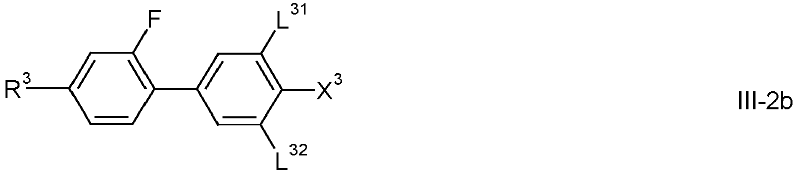 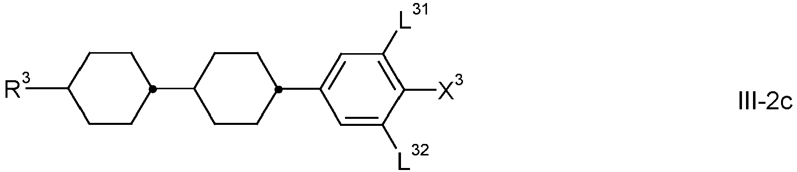 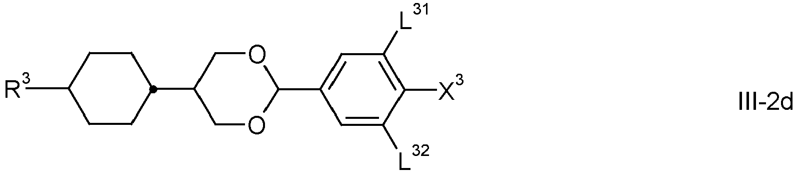 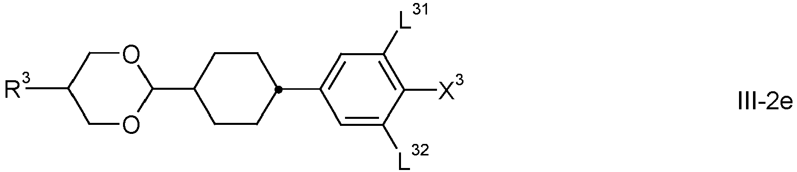 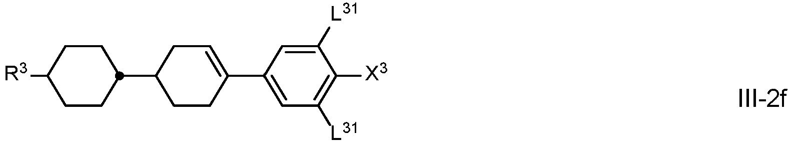 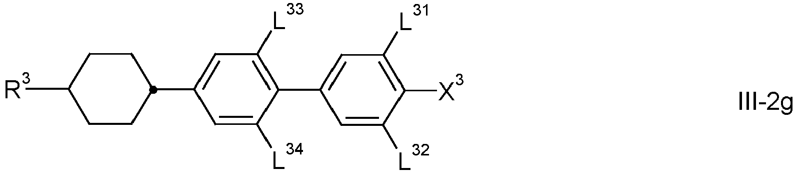 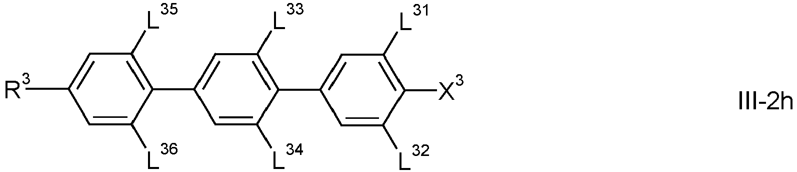 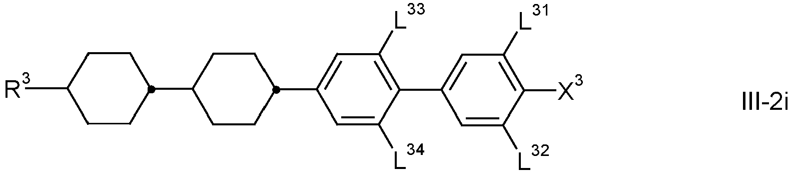 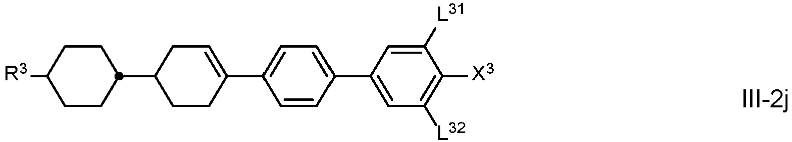 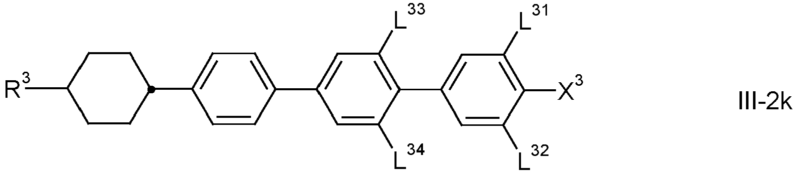 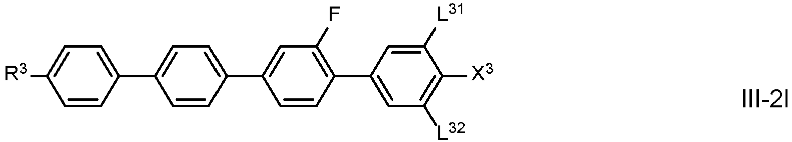 dans lesquelles L³³, L³⁴, L³⁵ et L³⁶ représentent, de manière indépendante les uns des autres, H ou F et les autres groupes rencontrés présentent les significations qui ont été données selon la revendication 1.

10. Milieu cristallin liquide selon une ou plusieurs des revendications 1 à 9, dans lequel le milieu présente une anisotrope diélectrique dans la plage qui va de +2,0 à +5,0.

11. Procédé pour la préparation du milieu cristallin liquide selon une ou plusieurs des revendications 1 à 10, **caractérisé en ce qu'**un ou plusieurs composé(s) de la formule I est/sont mélangé(s) avec un ou plusieurs composé(s) de la formule II, un ou plusieurs composé(s) de la formule Y et/ou de la formule B, et un ou plusieurs composé(s) qui est/sont sélectionné(s) parmi le groupe qui est constitué par les formules III, IV, V et VI.

12. Utilisation du milieu cristallin liquide selon une ou plusieurs des revendications 1 à 10 à des fins électrooptiques.

13. Utilisation selon la revendication 12, dans laquelle l'utilisation est pour les lunettes à obturation, les vitres ou fenêtres à LC, pour les applications 3D, dans les affichages TN, PS-TN, STN, TN-TFT, OCB, IPS, PS-IPS, FFS, HB-FFS, PS-HB-FFS, SA-HB-FFS, SA-HB-FFS stabilisés par polymère, VA positifs et PS-VA positifs.

14. Affichage à cristaux liquides contenant un milieu cristallin liquide selon une ou plusieurs des revendications 1 à 10.

15. Affichage à cristaux liquides selon la revendication 14, dans lequel l'affichage est un affichage TN, PS-TN, STN, TN-TFT, OCB, IPS, PS-IPS, FFS, HB-FFS, PS-HB-FFS, SA-HB-FFS, SA-HB-FFS stabilisé par polymère, VA positif ou PS-VA positif.
